(19) Europäisches Patentamt / European Patent Office / Office européen des brevets

(11) **EP 4 509 871 A1**

(12) **EUROPEAN PATENT APPLICATION**
published in accordance with Art. 153(4) EPC

(43) Date of publication:
**19.02.2025 Bulletin 2025/08**

(21) Application number: **23788397.0**

(22) Date of filing: **13.04.2023**

(51) International Patent Classification (IPC):
*G01S 7/4863* (2020.01)   *G01C 3/06* (2006.01)
*G01S 7/483* (2006.01)   *G01S 17/894* (2020.01)

(52) Cooperative Patent Classification (CPC):
**G01C 3/06; G01S 7/483; G01S 7/4863;**
**G01S 17/894**

(86) International application number:
**PCT/JP2023/015033**

(87) International publication number:
**WO 2023/199979 (19.10.2023 Gazette 2023/42)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **13.04.2022   JP 2022066268**
**10.06.2022   JP 2022094578**
**21.07.2022   JP 2022116644**

(71) Applicant: **Toppan Holdings Inc.**
**Tokyo 110-0016 (JP)**

(72) Inventors:
• **HATAKEYAMA Kunihiro**
**Tokyo 110-0016 (JP)**
• **HARIU Hiromitsu**
**Tokyo 110-0016 (JP)**
• **AKUTSU Takahiro**
**Tokyo 110-0016 (JP)**
• **NAGASE Masanori**
**Tokyo 110-0016 (JP)**
• **NAKAGOME Tomohiro**
**Tokyo 110-0016 (JP)**

(74) Representative: **Plasseraud IP**
**104 Rue de Richelieu**
**CS92104**
**75080 Paris Cedex 02 (FR)**

(54) **DISTANCE IMAGE CAPTURING DEVICE, AND DISTANCE IMAGE CAPTURING METHOD**

(57)   A light source unit; a light receiving unit including a pixel having a photoelectric conversion device and a plurality of charge storages, and a pixel driver circuit that distributes and stores the charge into the charge storages; and a range image processing unit that calculates a distance to a subject in the measurement space are included. A plurality of subframes are provided per frame, and the range image processing unit stores the charge by controlling the storage timing so that the storage timing relative to the emission timing is relatively different in each of the plurality of subframes, and selects a subframe for calculating the distance from the plurality of subframes based on the amounts of charge stored per unit integration count in each of the plurality of subframes.

**EP 4 509 871 A1**

(1)

**Description**

[Technical Field]

The present invention relates to a range imaging apparatus and a range imaging method.

This application claims the benefit of priorities from earlier Japanese Patent Applications No. 2022-066268 filed on April 13, 2022, No. 2022-094578 filed on June 10, 2022, and No. 2022-116644 filed on July 21, 2022, the contents of which are incorporated herein by reference.

[Background Art]

Time-of-flight (hereinafter referred to as "TOF") range imaging apparatuses use the known speed of light to measure the distance between the measurement device and an object based on the time of flight of light in a space (measurement space) (see, for example, PTL 1). Such range imaging apparatuses determine the delay time from when a light pulse was emitted to when the light pulse returned after being reflected from the subject by storing the charge generated by a photoelectric conversion device in a plurality of charge storages, and calculate the distance to the subject using the delay time and the speed of light.

Such range imaging apparatuses are known to perform sub-frame operation in which measurement is carried out by dividing a single frame into a plurality of subframes in order to extend the range of distance measurement (see, for example, PTL 2). Each subframe has a different storage timing at which charge is stored in the charge storages relative to the emission timing at which a light pulse is emitted. For example, in a certain subframe, the storage timing is set so that charge corresponding to reflected light arriving from a relatively short distance can be stored. In another certain subframe, the storage timing is set so that charge corresponding to reflected light arriving from a relatively long distance can be stored. This allows a wide range of measurement to be performed from short distances to long distances.

In the sub-frame operation, the range images of the subframes need to be ultimately combined into a range image corresponding to a single frame. Therefore, it is necessary to identify, among the subframes, a subframe in which the correct distance was able to be calculated, that is, the subframe in which a charge corresponding to the reflected light was stored. For this reason, for example, a process may be performed in which it is determined whether an external light-subtracted signal obtained by subtracting the external light component from the storage signal of each subframe is equal to or greater than a threshold, in order to identify the subframe in which a charge corresponding to the reflected light was stored.

[Citation List]

[Patent Literature]

[PTL 1] JP 4235729 B
[PTL 2] WO 2019/078366 A

[Summary of the Invention]

[Problem to be Solved by the Invention]

However, in practical use, there may be an error in the subtraction of the external light component. In addition, the integration count may differ for each subframe. This means that it may be difficult to identify the subframe in which a charge corresponding to the reflected light was stored by simply comparing external light-subtracted signals with a threshold because the subtraction error that occurs when subtracting the external light component may exceed the reflected light signal.

The present invention has been made in light of the above problem, and aims to provide a range imaging apparatus and a range imaging method capable of identifying a subframe in which charge corresponding to the reflected light was stored during sub-frame operation.

[Solution to Problem]

A range imaging apparatus of the present disclosure includes: a light source unit that emits a light pulse to a measurement space; a light receiving unit including a pixel having a photoelectric conversion device that generates charge corresponding to incident light and a plurality of charge storages that store the charge, and a pixel driver circuit that distributes and stores the charge into the charge storages at a certain storage timing synchronized with an emission timing at which the light pulse is emitted; and a range image processing unit that calculates a distance to a subject in the measurement space based on amounts of charge stored in the charge storages, characterized in that a plurality of subframes are provided per frame, and the range image processing unit stores the charge by controlling the storage timing so that the storage timing relative to the emission timing is relatively different in each of the plurality of subframes, and selects a subframe for calculating the distance from the plurality of subframes based on the amounts of charge stored per unit integration count in each of the plurality of subframes.

In the range imaging apparatus of the present disclosure, the range image processing unit may calculate a first indicator corresponding to a magnitude of a reflected light component by using storage signals corresponding to the amounts of charge stored in each of the plurality of subframes, and calculate a second indicator by dividing the first indicator by the integration count for each of the plurality of subframes, and select a subframe from the plurality of subframes whose second indicator is the largest as a subframe for calculating the distance.

In the range imaging apparatus of the present disclosure, the range image processing unit may calculate the first indicator by using a signal obtained by subtracting an external light signal corresponding to an external light component from the storage signals.

In the range imaging apparatus of the present disclosure, the range image processing unit may exclude a subframe whose first indicator is smaller than a threshold from candidates for the subframe for calculating the distance.

A range imaging method of the present disclosure is carried out by a range imaging apparatus including: a light source unit that emits a light pulse to a measurement space; a light receiving unit including a pixel having a photoelectric conversion device that generates charge corresponding to incident light and a plurality of charge storages that store the charge, and a pixel driver circuit that distributes and stores the charge into the charge storages at a certain storage timing synchronized with an emission timing at which the light pulse is emitted; and a range image processing unit that calculates a distance to a subject in the measurement space based on amounts of charge stored in the charge storages, characterized in that a plurality of subframes are provided per frame, and the range image processing unit stores the charge by controlling the storage timing so that the storage timing relative to the emission timing is relatively different in each of the plurality of subframes, and selects a subframe for calculating the distance from the plurality of subframes based on the amounts of charge stored per unit integration count in each of the plurality of subframes.

In the range imaging apparatus of the present disclosure, the plurality of subframes may include first and second subframes, and the range image processing unit may store the charge in the charge storages of the pixel in each of the subframes in sequence, the first subframe and then the second subframe, and control the storage timing so that a last storage timing, which is a latest timing at which the charge is stored in the charge storage of the pixel in the first subframe, and a first storage timing, which is an earliest timing at which the charge is stored in the charge storage of the pixel in the second subframe, are the same timing relative to the timing at which the light pulse is emitted.

In the range imaging apparatus of the present disclosure, the range image processing unit may perform level adjustment by multiplying signal values corresponding to the amounts of charge stored in the charge storages in the first or second subframe by a constant so that a first signal value corresponding to an amount of charge stored in a last charge storage, which is the charge storage in which the charge is stored at the last storage timing, and a second signal value corresponding to an amount of charge stored in an first charge storage, which is the charge storage in which the charge is stored at the first storage timing, are the same, and calculate the distance using the level-adjusted signal values.

In the range imaging apparatus of the present disclosure, the range image processing unit may determine whether the charge corresponding to reflected light of the light pulse is stored in the last charge storage, and perform the level adjustment if the charge corresponding to the reflected light is stored in the last charge storage.

In the range imaging method of the present disclosure, the plurality of subframes may include first and second subframes, and the range image processing unit may store the charge in the charge storages of the pixel in each of the subframes in sequence, the first subframe and then the second subframe, and control the storage timing so that a last storage timing, which is a latest timing at which the charge is stored in the charge storage of the pixel in the first subframe, and a first storage timing, which is an earliest timing at which the charge is stored in the charge storage of the pixel in the second subframe, are the same timing relative to the timing at which the light pulse is emitted.

A range imaging apparatus of the present disclosure includes: a light source unit that emits a light pulse to a measurement space; a light receiving unit including a pixel having a photoelectric conversion device that generates charge corresponding to incident light and a plurality of charge storages that store the charge, and a pixel driver circuit that distributes and stores the charge into the charge storages at a certain storage timing synchronized with an emission timing at which the light pulse is emitted; and a range image processing unit that calculates a distance to a subject in the measurement space based on amounts of charge stored in the charge storages, characterized in that a plurality of subframes are provided per frame, and the range image processing unit calculates an indicator of a degree of variation of an external light signal corresponding to an external light component stored in the charge storages in each of the plurality of subframes based on storage signals corresponding to the amounts of charge stored in the charge storages in each of the plurality of subframes, and selects a subframe for calculating the distance from the plurality of subframes by using the storage signals and the indicator for each of the plurality of subframes.

In the range imaging apparatus of the present disclosure, the range image processing unit may calculate, as the indicator, a threshold based on variance of the external light component, and select a subframe from the plurality of subframes that has an external light-subtracted signal greater than the threshold as the subframe for calculating the distance, the external light-subtracted signal being a signal obtained by subtracting the external light signal from the storage signal.

In the range imaging apparatus of the present disclosure, the range image processing unit may calculate, as the indicator, a threshold based on noise that is a square root of variance of the external light component, and select a subframe from the plurality of subframes that has an external light-subtracted signal greater than the threshold as the subframe for calculating the distance, the external light-subtracted signal being a signal obtained by subtracting the external light signal from the storage signal.

In the range imaging apparatus of the present disclosure, the range image processing unit may reduce the threshold if there is no subframe whose external light-subtracted signal is greater than the threshold among the plurality of subframes.

In the range imaging apparatus of the present disclosure, the range image processing unit may increase the threshold if there are two or more subframes whose external light-subtracted signal is greater than the threshold among the plurality of subframes.

In the range imaging apparatus of the present disclosure, the range image processing unit may not select a subframe for calculating the distance if there is no subframe whose external light-subtracted signal is greater than the threshold, or if there are two or more subframes whose external light-subtracted signal is greater than the threshold among the plurality of subframes.

A range imaging method of the present disclosure is carried out by a range imaging apparatus including: a light source unit that emits a light pulse to a measurement space; a light receiving unit including a pixel having a photoelectric conversion device that generates charge corresponding to incident light and a plurality of charge storages that store the charge, and a pixel driver circuit that distributes and stores the charge into the charge storages at a certain storage timing synchronized with an emission timing at which the light pulse is emitted; and a range image processing unit that calculates a distance to a subject in the measurement space based on amounts of charge stored in the charge storages, characterized in that a plurality of subframes are provided per frame, and the range image processing unit calculates an indicator of a degree of variation of an external light signal corresponding to an external light component stored in the charge storages in each of the plurality of subframes based on storage signals corresponding to the amounts of charge stored in the charge storages in each of the plurality of subframes, and selects a subframe for calculating the distance from the plurality of subframes by using the storage signals and the indicator for each of the plurality of subframes.

[Advantageous Effects of the Invention]

According to the present disclosure, it is possible to identify a subframe in which a charge corresponding to the reflected light RL was stored during sub-frame operation.

[Brief Description of the Drawings]

Fig. 1 is a block diagram illustrating a schematic configuration of the range imaging apparatus according to a first embodiment.
Fig. 2 is a block diagram illustrating a schematic configuration of a range image sensor according to the first embodiment.
Fig. 3 is a circuit diagram illustrating an exemplary configuration of a pixel according to the first embodiment.
Fig. 4 is a timing diagram illustrating timings at which a pixel of the first embodiment is driven.
Fig. 5 is a flowchart illustrating a process flow performed by the range imaging apparatus according to the first embodiment.
Fig. 6 is a flowchart illustrating a process flow performed by the range imaging apparatus according to the first embodiment.
Fig. 7 is a flowchart illustrating a process flow performed by the range imaging apparatus according to the first embodiment.
Fig. 8 is a block diagram illustrating a schematic configuration of the range imaging apparatus according to a second embodiment.
Fig. 9 is a block diagram illustrating a schematic configuration of a range image sensor according to the second embodiment.

Fig. 10 is a circuit diagram illustrating an exemplary configuration of a pixel according to the second embodiment.

Fig. 11 is a diagram for explaining a plurality of subframes included in a frame of the second embodiment.

Fig. 12A is a timing chart illustrating an example of the way each pixel of the second embodiment is driven.

Fig. 12B is a timing chart illustrating an example of the way each pixel of the second embodiment is driven.

Fig. 12C is a modification of a timing chart illustrating an example of the way each pixel of the second embodiment is driven.

Fig. 13A is a diagram illustrating the process performed by the range imaging apparatus of the second embodiment.

Fig. 13B is a diagram illustrating the process performed by the range imaging apparatus of the second embodiment.

Fig. 13C is a diagram illustrating the process performed by the range imaging apparatus of the second embodiment.

Fig. 14A is a diagram illustrating the process performed by the range imaging apparatus of the second embodiment.

Fig. 14B is a diagram illustrating the process performed by the range imaging apparatus of the second embodiment.

Fig. 14C is a diagram illustrating the process performed by the range imaging apparatus of the second embodiment.

Fig. 15 is a flowchart illustrating a process flow performed by the range imaging apparatus according to the second embodiment.

Fig. 16 is a flowchart illustrating a process flow performed by the range imaging apparatus according to the second embodiment.

Fig. 17 is a block diagram illustrating a schematic configuration of the range imaging apparatus according to a third embodiment.

Fig. 18 is a block diagram illustrating a schematic configuration of a range image sensor according to the third embodiment.

Fig. 19 is a circuit diagram illustrating an exemplary configuration of a pixel according to the third embodiment.

Fig. 20 is a timing diagram illustrating timings at which a pixel of the third embodiment is driven.

Fig. 21 is a timing diagram illustrating timings at which a pixel of the third embodiment is driven.

Fig. 22 is a flowchart illustrating a process flow performed by the range imaging apparatus according to the third embodiment.

Fig. 23 is a graph illustrating an advantageous effect of the third embodiment.

Fig. 24 is a graph illustrating an advantageous effect of the third embodiment.

[Description of the Embodiments]

(First Embodiment)

A range imaging apparatus according to a first embodiment will be described below with reference to the drawings.

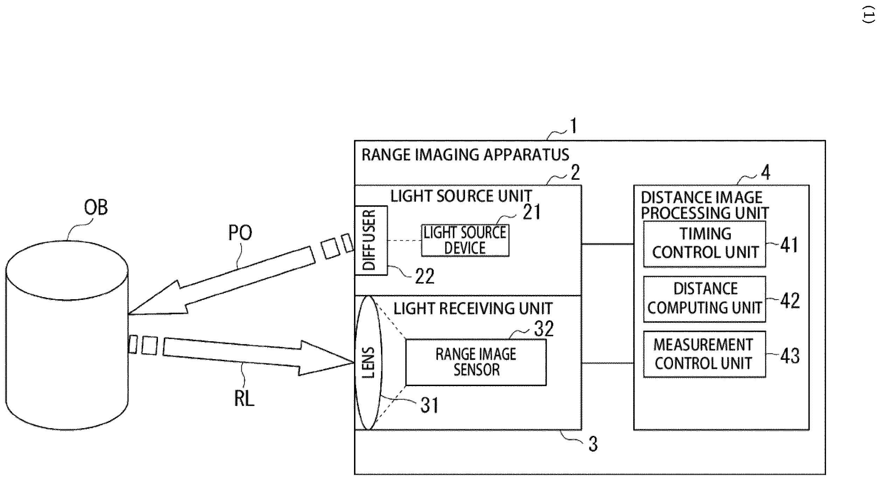

Fig. 1 is a block diagram illustrating a schematic configuration of the range imaging apparatus according to the embodiment. The range imaging apparatus 1 includes, for example, a light source unit 2, a light receiving unit 3, and a range image processing unit 4. Fig. 1 also illustrates a subject OB the distance to which will be measured by the range imaging apparatus 1.

In response to a control procedure performed by the range image processing unit 4, the light source unit 2 emits a light pulse PO into a measurement space in which the subject OB is present, the distance to which is to be measured by the range imaging apparatus 1. The light source unit 2 may be, for example, a surface emitting semiconductor laser module such as a vertical cavity surface emitting laser (VCSEL). The light source unit 2 includes a light source device 21 and a diffuser 22.

The light source device 21 is a light source that emits a laser beam in a near-infrared wavelength band (for example, a wavelength band in which the wavelength is 850 nm to 940 nm), which serves as the light pulse PO emitted to the subject OB. The light source device 21 may be, for example, a semiconductor laser light emitting device. The light source device 21 emits a pulsed laser beam according to control by a timing control unit 41.

The diffuser 22 is an optical component that diffuses a laser beam in the near-infrared wavelength region emitted from the light source device 21 over a desired irradiated area. The pulsed laser beam diffused by the diffuser 22 is output as the light pulse PO and emitted to the subject OB.

The light receiving unit 3 receives reflected light RL of the light pulse PO reflected from the subject OB, the distance to which will be measured by the range imaging apparatus 1, and outputs a pixel signal corresponding to the received reflected light RL. The light receiving unit 3 includes a lens 31 and a range image sensor 32. Note that the light receiving unit 3 may have a band pass filter (not shown) between the lens 31 and the range image sensor 32. The bandpass filter performs band limiting. For example, the bandpass filter transmits components of the light incident on the lens 31 that are within a predetermined frequency band to the range image sensor 32 and prevents components that are outside the predetermined frequency band from being transmitted to the range image sensor 32.

The lens 31 is an optical lens that guides the reflected light RL incident on the lens 31 to the range image sensor 32. The lens 31 outputs the reflected light RL that is incident on the lens 31 toward the range image sensor 32 and causes pixels provided in a light-receiving region of the range image sensor 32 to receive the reflected light RL (or makes the reflected light RL incident on the pixels).

The range image sensor 32 is an imaging element used in the range imaging apparatus 1. The range image sensor 32 includes a plurality of pixels in a two-dimensional light-receiving region. Each pixel of the range image sensor 32 includes a single photoelectric conversion device, a plurality of charge storages corresponding to the single photoelectric conversion device, and a component that distributes electric charge to the charge storages. That is, the pixels are imaging elements of a distributing structure that distributes and stores the electric charge to the charge storages.

The range image sensor 32 distributes charge generated by the photoelectric conversion device to each of the charge storages, according to control by the timing control unit 41. Additionally, the range image sensor 32 outputs a pixel signal corresponding to the distributed amount of charge in each charge storage. The range image sensor 32 includes a plurality of pixels arranged in a two-dimensional matrix and outputs a pixel signal for one frame corresponding to each pixel.

The range image processing unit 4 controls the range imaging apparatus 1 to compute the distance to the subject OB. The range image processing unit 4 includes the timing control unit 41, a range computing unit 42, and a measurement control unit 43.

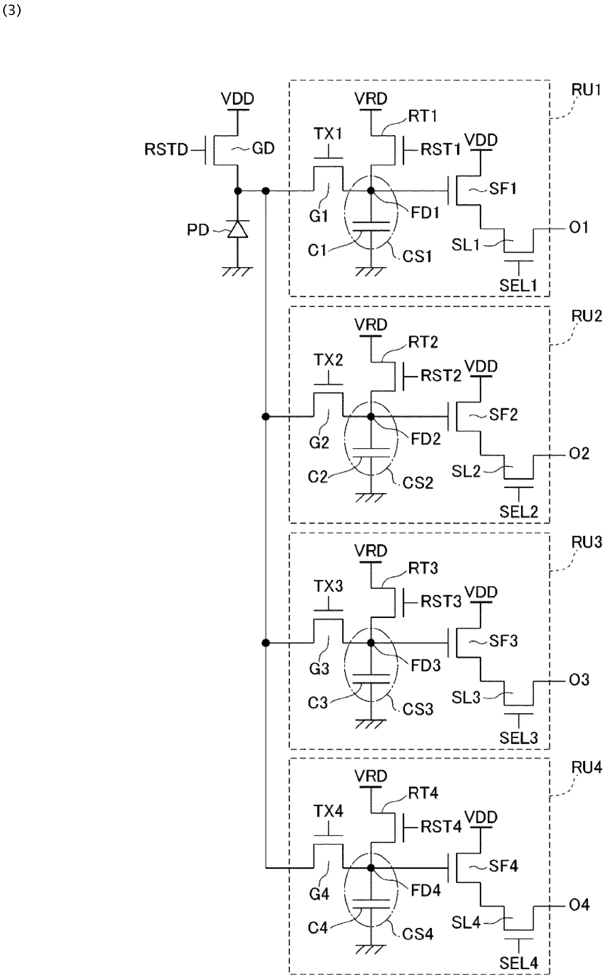

The timing control unit 41 controls the timings at which a variety of control signals required for the measurement are output in response to the control procedure performed by the measurement control unit 43. The variety of signals as used herein refer to, for example, a signal for controlling the emission of the light pulse PO, a signal for distributing and storing the reflected light RL to the charge storages, and a signal for controlling the storage count per frame. The storage count is the number of times the process of distributing and storing charge to the charge storages CS (see Fig. 3) is repeated. The product of the storage count and the time (storage time) for which charge is stored in the charge storages during each process of distributing and storing charge is the storage time.

The range computing unit 42 outputs distance information obtained by calculating the distance to the subject OB, based on the pixel signal output from the range image sensor 32. The range computing unit 42 calculates a delay time from the time at which the light pulse PO is emitted to the time at which the reflected light RL is received, based on the amount of charge stored in the plurality of charge storages. The range computing unit 42 calculates the distance to the subject OB in accordance with the calculated delay time.

The measurement control unit 43 controls the timing control unit 41. For example, the measurement control unit 43 sets the storage count per frame and the storage time to control the timing control unit 41 so that the image capturing is performed according to the settings.

With this configuration, the range imaging apparatus 1 causes the light source unit 2 to emit the light pulse PO in the near-infrared wavelength band to the subject OB, causes the light receiving unit 3 to receive the reflected light RL reflected from the subject OB, and causes the range image processing unit 4 to calculate the distance to the subject OB and output the distance information.

Fig. 1 shows the range imaging apparatus 1 in which the range image processing unit 4 is included; however, the range image processing unit 4 may be a component provided outside the range imaging apparatus 1.

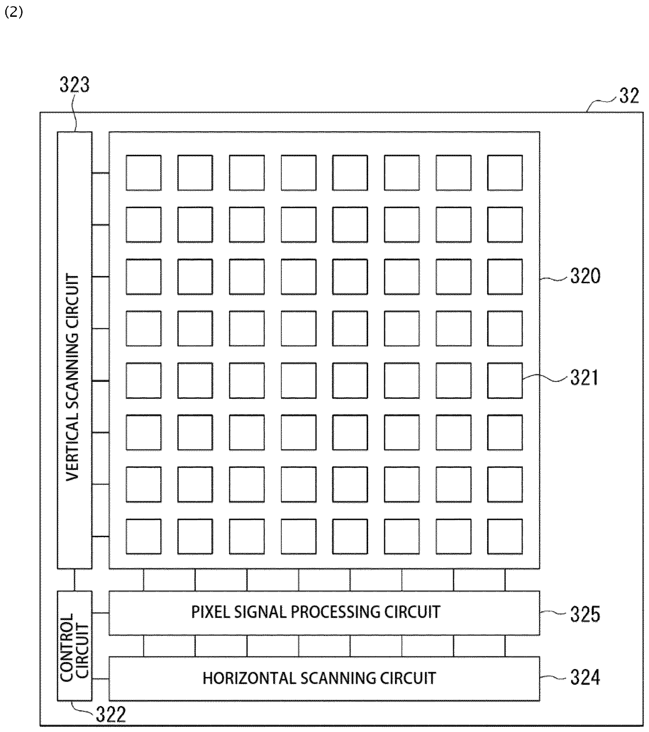

Next, a configuration of the range image sensor 32 used as an imaging element in the range imaging apparatus 1 will be described with reference to Fig. 2. Fig. 2 is a block diagram illustrating the schematic configuration of the imaging element (range image sensor 32) used in the range imaging apparatus 1 of the embodiment.

As illustrated in Fig. 2, the range image sensor 32 includes, for example, a light-receiving region 320, which includes multiple pixels 321, a control circuit 322, a vertical scanning circuit 323, which has distribution operation, a horizontal scanning circuit 324, and a pixel signal processing circuit 325.

The light-receiving region 320 is a region in which the pixels 321 are arranged. Fig. 2 illustrates an example in which the pixels 321 are arranged in a two-dimensional matrix of 8 rows and 8 columns. The pixels 321 store a charge corresponding to the amount of light received. The control circuit 322 comprehensively controls the range image sensor 32. For example, the control circuit 322 controls the operation of the components of the range image sensor 32 according to instructions from the timing control unit 41 of the range image processing unit 4. Note that the components of the range image sensor 32 may be directly controlled by the timing control unit 41, in which case the control circuit 322 may be omitted.

The vertical scanning circuit 323 is a circuit that controls the pixels 321 arranged in the light-receiving region 320 row by row in response to the control procedure performed by the control circuit 322. The vertical scanning circuit 323 causes the pixel signal processing circuit 325 to output a voltage signal corresponding to the amount of charge accumulated in each of the charge storages CS of each pixel 321. In this case, the vertical scanning circuit 323 distributes and stores the charge converted by the photoelectric conversion device to each of the charge storages of each pixel 321. That is, the vertical scanning circuit 323 is an example of a "pixel driver circuit".

The pixel signal processing circuit 325 is a circuit that performs predetermined signal processing (for example, noise suppression and A/D conversion) on voltage signals output from the pixels 321 of each column to a corresponding vertical signal line in response to the control procedure performed by the control circuit 322.

The horizontal scanning circuit 324 is a circuit that sequentially outputs, to a horizontal signal line, the signal output from the pixel signal processing circuit 325 in response to the control procedure performed by the control circuit 322. Accordingly, the pixel signal corresponding to the amount of charge accumulated per frame is sequentially output to the range image processing unit 4 via the horizontal signal line.

The following description is based on a precondition that the pixel signal processing circuit 325 has performed A/D conversion, so that the pixel signal is a digital signal.

The configuration of the pixels 321 arranged in the light-receiving region 320 of the range image sensor 32 will now be described with reference to Fig. 3. Fig. 3 is a circuit diagram illustrating an exemplary configuration of the pixels 321 arranged in the light-receiving region 320 of the range image sensor 32 according to the embodiment. Fig. 3 illustrates an exemplary configuration of one of the pixels 321 arranged in the light-receiving region 320. The pixel 321 is an exemplary configuration including four pixel signal readout units.

The pixel 321 includes a single photoelectric conversion device PD, drain gate transistors GD, and four pixel signal readout units RU each of which outputs a voltage signal from the corresponding output terminal O. The pixel signal readout units RU each include a readout gate transistor G, a floating diffusion FD, a charge storage capacitor C, a reset gate transistor RT, a source follower gate transistor SF, and a selection gate transistor SL. In each pixel signal readout unit RU, the floating diffusion FD and the charge storage capacitor C constitute a charge storage CS.

In Fig. 3, a numerical value "1", "2", "3", or "4" is appended after the reference sign "RU" of the four pixel signal readout units RU to distinguish the pixel signal readout units RU from one another. Similarly, the numerical values are also appended after the reference signs of the components of the four pixel signal readout units RU to express the components by distinguishing the pixel signal readout units RU with which they are associated.

In the pixel 321 shown in Fig. 3, the pixel signal readout unit RU1 that outputs a voltage signal from an output terminal O1 includes a readout gate transistor G1, a floating diffusion FD1, a charge storage capacitor C1, a reset gate transistor RT1, a source follower gate transistor SF1, and a selection gate transistor SL1. In the pixel signal readout unit RU1, the floating diffusion FD1 and the charge storage capacitor C1 constitute a charge storage CS1. The pixel signal readout units RU2 to RU4 also have the same configuration.

The photoelectric conversion device PD is an embedded photodiode that performs photoelectric conversion of the incident light to generate electric charge and accumulates the generated electric charge. The photoelectric conversion device PD may have any configuration. The photoelectric conversion device PD may be, for example, a PN photodiode including a P-type semiconductor and an N-type semiconductor joined together or a PIN photodiode including an I-type semiconductor sandwiched between a P-type semiconductor and an N-type semiconductor.

In each pixel 321, the charge generated by the photoelectric conversion of the incident light performed by the photoelectric conversion device PD is distributed to the four charge storages CS. Voltage signals each corresponding to the amount of distributed charge are output to the pixel signal processing circuit 325.

The configuration of the pixels arranged in the range image sensor 32 is not limited to the configuration including four pixel signal readout units RU as illustrated in Fig. 3 and may be any configuration including multiple pixel signal readout units RU. That is, the number of the pixel signal readout units RU (charge storages CS) included in each pixel located in the range image sensor 32 may be two, three, or five or more.

Further, the pixel 321 configured as illustrated in Fig. 3 is an exemplary configuration in which each charge storage CS includes the floating diffusion FD and the charge storage capacitor C. However, each charge storage CS may have any configuration as long as at least the floating diffusion FD is included, and each pixel 321 does not need to include the charge storage capacitor C.

Although the pixel 321 having the configuration shown in Fig. 3 shows an exemplary configuration including drain gate transistors GD, the drain gate transistors GD may not be provided if there is no need to discard the charge stored (remaining) in the photoelectric conversion device PD.

In this embodiment, a plurality of subframes are provided for each frame. The plurality of subframes each have a different storage timing relative to the emission timing. The emission timing here is the timing at which the light pulse PO is emitted. The storage timing is the timing at which charge is stored in the charge storages CS.

In the following description, of the plurality of subframes making up a single frame, the subframe that is driven first is referred to as a first subframe. The subframe driven after the first subframe is referred to as a second subframe. In this embodiment, it suffices if a single frame includes more than one subframe, and there may be three or more subframes in a single frame.

For example, the range image processing unit 4 performs control so that the storage timing is earliest in the first subframe and the storage timing is later in the second subframe than in the first subframe. This makes it possible to measure the distance to a relatively close subject OB in the first subframe and the distance to a relatively distant subject OB in the second subframe. Such a subframe configuration enables increasing the measurable range.

In the embodiment, the storage count in each subframe may be different. It is known that the intensity of light is inversely proportional to the square of distance. For example, when the reflected light RL reflected from a relatively close subject OB is received in the first subframe, the intensity of the reflected light is high. On the other hand, when the reflected light RL reflected from a relatively distant subject OB is received in the second subframe, the intensity of the reflected light is low. In the case the first and second subframes have the same integration count, if the integration count is set so that an appropriate amount of charge is stored in the charge storages CS of the pixel 321 in the first subframe, the amount of charge stored in the charge storages CS of the pixel 321 in the second subframe will be small, which leads to an error. On the other hand, if the integration count is set so that an appropriate amount of charge is stored in the charge storages CS of the pixel 321 in the second subframe, the amount of charge stored in the charge storages CS of the pixel 321 in the first subframe will be too large, which leads to saturation and makes it difficult to calculate the distance.

To address this, the present embodiment controls the storage count to be different in each subframe. For example, the range image processing unit 4 controls the integration count so that it is smaller in the first subframe than in the second subframe.

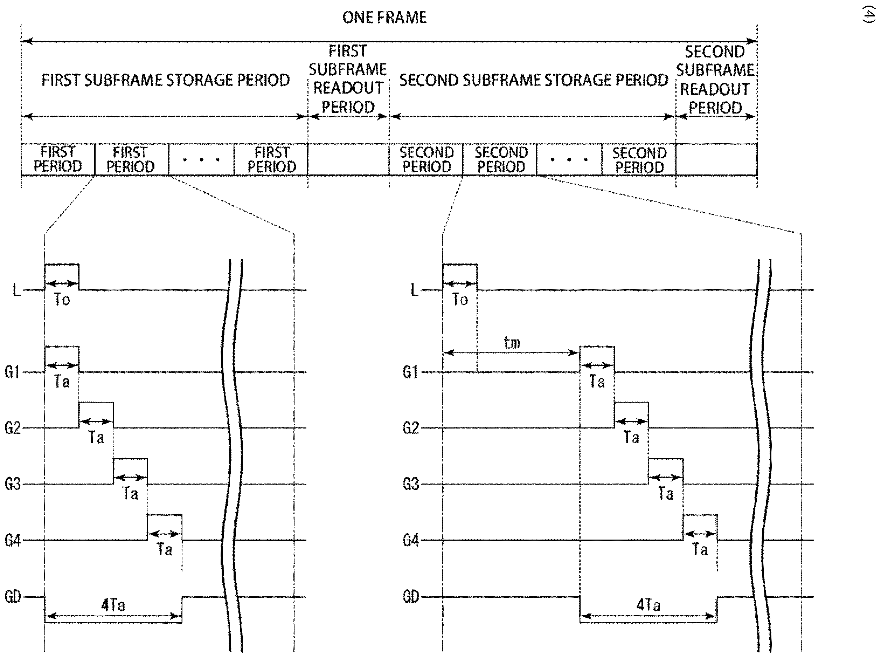

Next, the timings at which each pixel 321 is driven will be described using Fig. 4. Fig. 4 is a timing diagram illustrating timings at which each pixel 321 of the embodiment is driven. Fig. 4 shows an example in which first and second subframes are provided in one frame. That is, one frame includes a first subframe storage period and a first subframe readout period, and a second subframe storage period and a second subframe readout period.

In Fig. 4, the timing at which the light pulse PO is emitted is indicated by "L", the timing of a drive signal TX1 is indicated by "G1", the timing of a drive signal TX2 is indicated by "G2", the timing of a drive signal TX3 is indicated by "G3", the timing of a drive signal TX4 is indicated by "G4", and the timing of a drive signal RSTD is indicated by "GD". The drive signal TX1 is a signal that drives the readout gate transistor G1. The same applies to the drive signals TX2 to TX4. In the following description, an example is shown in which the readout gate transistors G1, G2, G3, and G4 are driven in this order to store the charge in the charge storages CS1, CS2, CS3, and CS4 in this order. However, the present invention is not limited to this. The readout gate transistors G1 to G4 may be driven in any desired order in this embodiment. Even when the readout gate transistors G1 to G4 are driven in a desired order, the present embodiment can be applied to identify the subframe in which a charge corresponding to the reflected light was stored.

As shown in Fig. 4, a light pulse PO is emitted with an irradiation time To. First, in the "first subframe", in synchronization with the emission of the light pulse PO, the vertical scanning circuit 323 repeats a "first period" in which charges are stored in the charge storages CS1, CS2, CS3, and CS4 in each pixel 321 in this order, for a predetermined storage count (first storage count). Next, in the "first subframe readout period", the vertical scanning circuit 323 reads out a voltage signal corresponding to the amount of charge accumulated in each pixel 321 as the signal value. Then, in the "second subframe", in synchronization with the emission of the light pulse PO, the vertical scanning circuit 323 repeats a "second period" in which charges are stored in the charge storages CS1, CS2, CS3, and CS4 in each pixel 321 in this order, for a predetermined storage count (second storage count). In the "second subframe readout period", the vertical scanning circuit 323 reads out a voltage signal corresponding to the amount of charge accumulated in each pixel 321 as the signal value.

The timing at which the vertical scanning circuit 323 stores charge in the pixel 321 will be described.

First, at the same timing as when the light pulse PO is emitted, the vertical scanning circuit 323 brings the drain gate transistor GD of the pixel 321 adapted for the first subframe into an off state and brings the readout gate transistor G1 into an on state. After keeping the readout gate transistor G1 in the on state for a storage time Ta, the vertical scanning circuit 323 brings the readout gate transistor G1 into the off state. Thus, while the readout gate transistor G1 is controlled to be in the on state, the electric charge obtained by the photoelectric conversion by the photoelectric conversion device PD is accumulated in the charge storage CS1 through the readout gate transistor G1.

Note that the storage time Ta is a period for storing charge in the charge storage CS, and does not necessarily need to be the same period as the gate transistor ON period (period during which the gate transistor G is in the on state). For example, control may be performed so that the gate transistor ON period is provided after a short gap period (a gate OFF period, that is, a period during which the gate transistor G is in the off state), and the total period of the gap period and the gate transistor ON period may serve as the storage time Ta.

Next, at the timing at which the readout gate transistor G1 is brought into the off state, the vertical scanning circuit 323 brings the readout gate transistor G2 into the on state for the storage time Ta. Thus, while the readout gate transistor G2 is controlled to be in the on state, the electric charge obtained by the photoelectric conversion by the photoelectric conversion device PD is accumulated in the charge storage CS2 through the readout gate transistor G2.

Next, at the timing at which the storage of charge into the charge storage CS2 is finished, the vertical scanning circuit 323 brings the readout gate transistor G3 into the on state for the storage time Ta, and then brings the readout gate transistor G3 into the off state. Thus, while the readout gate transistor G3 is controlled to be in the on state, the electric charge obtained by the photoelectric conversion by the photoelectric conversion device PD is accumulated in the charge storage CS3 through the readout gate transistor G3.

Next, at the timing at which the storage of charge into the charge storage CS3 is finished, the vertical scanning circuit 323 brings the readout gate transistor G4 into the on state for the storage time Ta, and then brings the readout gate transistor G4 into the off state. Thus, while the readout gate transistor G4 is controlled to be in the on state, the electric charge obtained by the photoelectric conversion by the photoelectric conversion device PD is accumulated in the charge storage CS4 through the readout gate transistor G4.

Next, at the timing at which the storage of the electric charge to the charge storage CS4 is finished, the vertical scanning circuit 323 brings the drain gate transistor GD into the on state to drain the charge. This allows the charge generated through photoelectric conversion by the photoelectric conversion device PD to be discarded via the drain gate transistor GD.

The vertical scanning circuit 323 repeats the above-described operation for the predetermined storage count (first storage count) set for the first subframe.

After the accumulation of charge in the pixel 321 by the first sub-frame operation is completed, in the first subframe readout period, the vertical scanning circuit 323 outputs voltage signals each corresponding to the amount of charge that has been distributed to a charge storage CS. Specifically, the vertical scanning circuit 323 brings the selection gate transistor SL1 into the on state for a predetermined time to output from the output terminal O1 a voltage signal corresponding to the amount of charge accumulated in the charge storage CS1 through the pixel signal readout unit RU1. Similarly, the vertical scanning circuit 323 sequentially brings the selection gate transistors SL2 to SL4 into the on state to output voltage signals corresponding to the amounts of charge accumulated in the charge storages CS2 to CS4 through output terminals O2 to O4. The voltage signals corresponding to the amounts of charge accumulated in the charge storages CS are output as signal values to the range computing unit 42 via the pixel signal processing circuit 325 and the horizontal scanning circuit 324.

Next, with a delay of a predetermined delay time (Tm) after the timing at which the light pulse PO is emitted, the vertical scanning circuit 323 brings the drain gate transistor GD of the pixel 321 adapted for the second subframe into an off state and brings the readout gate transistor G1 into an on state. Since the actions taken after turning on the readout gate transistor G1, that is, the timings at which the vertical scanning circuit 323 turns on or off the readout gate transistors G1 to G4 and the drain gate transistor GD are the same as in the first subframe, description thereof is omitted. The vertical scanning circuit 323 repeats the above-described operation for the predetermined storage count (second storage count) set for the second subframe.

After the accumulation of charge in the pixel 321 by the second sub-frame operation is completed, in the second subframe readout period, the vertical scanning circuit 323 outputs voltage signals each corresponding to the amount of charge provided to a charge storage CS. Specifically, the vertical scanning circuit 323 brings the selection gate transistor SL1 into the on state for a predetermined time to output from the output terminal O1 a voltage signal corresponding to the amount of charge accumulated in the charge storage CS1 through the pixel signal readout unit RU1. Similarly, the vertical scanning circuit 323 sequentially brings the selection gate transistors SL2 to SL4 into the on state to output voltage signals corresponding to the amounts of charge accumulated in the charge storages CS2 to CS4 through output terminals O2 to O4. The voltage signals corresponding to the amounts of charge accumulated in the charge storages CS are output as signal values to the range computing unit 42 via the pixel signal processing circuit 325 and the horizontal scanning circuit 324.

As shown in Fig. 4, in this embodiment, a plurality of subframes are provided for each frame. In the example of Fig. 4, the first and second subframes are provided in a single frame. The first subframe occurs earlier than the second subframe, and charges are accumulated in the charge storages CS of the pixel 321 in the first subframe. The second subframe occurs later than the first subframe, and charges are accumulated in the charge storages CS of the pixel 321 in the second subframe. The range image processing unit 4 delays the storage timing of the pixel 321 in the second subframe by a predetermined delay time (Tm) relative to the storage timing of the pixel 321 in the first subframe, using the emission timing of the light pulse PO as a reference.

As described above, in this embodiment, a plurality of subframes are provided for each frame. The range image processing unit 4 stores charge at a storage timing having a different relative time difference relative to the emission timing in each of the plurality of subframes, which allows the measurable distance to be increased. In addition, the storage count in each subframe is changed so that an appropriate amount of charge is stored in the charge storage CS in each subframe. This suppresses occurrence of error due to the amount of stored charge being too small, and saturation caused due to the amount of stored charge being too large.

The range image processing unit 4 uses the amounts of charge accumulated in the charge storages CS in the subframes to calculate a distance (combined result) corresponding to the measurement result for one frame. The range image processing unit 4 identifies, among the subframes, a subframe in which charge corresponding to the reflected light has been stored. The range image processing unit 4 uses the amounts of charge accumulated in the charge storages CS in the identified subframe to calculate the distance. The calculated distance is used as the distance corresponding to the measurement result of one frame.

A method used by the range image processing unit 4 to identify the subframe in which charge corresponding to the reflected light has been accumulated will be described. The range image processing unit 4 identifies the subframe in which charge corresponding to the reflected light has been accumulated in the following three steps.

In the first step, the range image processing unit 4 subtracts the external light component from the storage signal of each subframe. The storage signal is a signal corresponding to the amount of charge stored in each charge storage CS. The range image processing unit 4 calculates an external light-subtracted signal by subtracting the external light component from the storage signal using the following equation (1).

$$IR\_subN = |Q1\_subN - Q3\_subN| + IQ2\_subN - Q4\_subN| \qquad (1),$$

where IR_subN is the external light-subtracted signal in the Nth subframe.
Q1_subN is the storage signal of the charge storage CS1 in the Nth subframe.
Q2_subN is the storage signal of the charge storage CS2 in the Nth subframe.
Q3_subN is the storage signal of the charge storage CS3 in the Nth subframe.
Q4_subN is the storage signal of the charge storage CS4 in the Nth subframe.

In the second step, the range image processing unit 4 divides the external light-subtracted signal of each subframe by the integration count of each subframe to calculate the signal value per integration. The range image processing unit 4 calculates the signal value per integration using the following equation (2).

$$R\_jdg\_subN = IR\_subN/integ\_subN \ ...(2)$$

where IR_jdg_subN is the external light-subtracted signal per integration in the Nth subframe.
integ_subN is the integration count in the Nth subframe.

In the third step, the range image processing unit 4 compares the external light-subtracted signals per integration of the subframes and selects the subframe having the largest external light-subtracted signal per integration. The range image processing unit 4 uses the amounts of charge stored in the charge storages CS of the pixel 321 in the selected subframe to calculate a distance (combined result) corresponding to the measurement result for one frame. For example, the range image processing unit 4 selects a subframe using the following equation (3).

$$IR\_jdg\_subF = max \ (IR\_jdg\_sub1, IR\_jdg\_sub2, ... IR\_jdg\_subN, ... IR\_jdg\_subM) \qquad (3)$$

where IR_jdg_subF is the subframe used to calculate the distance (combined result) corresponding to the measurement result of one frame.

The range image processing unit 4 uses the amounts of charge accumulated in the charge storages CS in the subframe selected by equation (3) to calculate the distance. The calculated distance is used as the distance (combined result) corresponding to the measurement result of one frame.

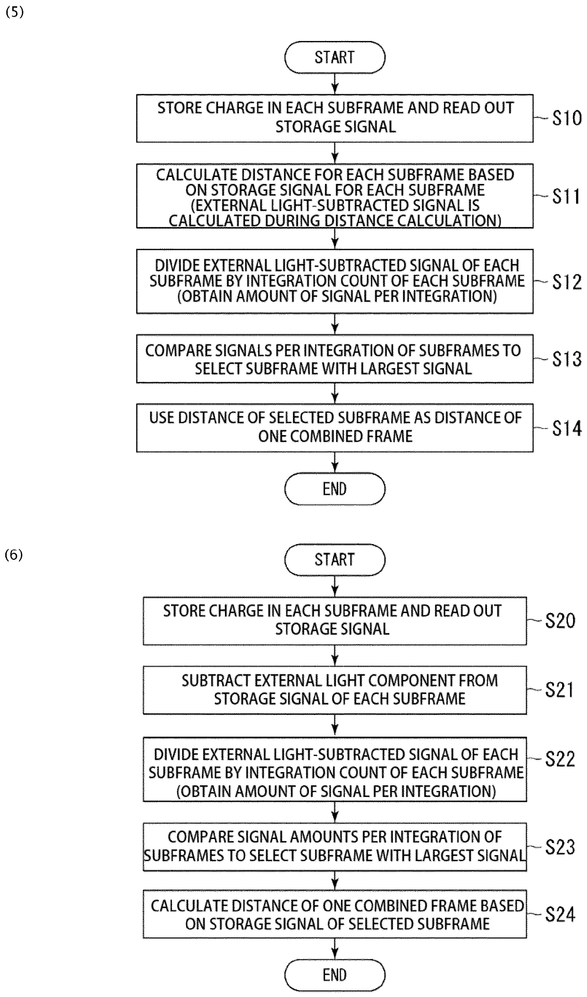

Process flows performed by the range imaging apparatus 1 will be described with reference to Figs. 5 to 7. Figs. 5 to 7 are flowcharts illustrating the process flows performed by the range imaging apparatus 1 according to the embodiment. Each of Figs. 5 to 7 shows a process flow in which the range imaging apparatus 1 calculates the distance (combined result) corresponding to the measurement result of one frame. The range imaging apparatus 1 calculates the distance (combined result) corresponding to the measurement result according to the flow shown in one of Figs. 5 to 7. Note that, in the following flows, general processing performed to calculate a distance, such as processing to correct the sensitivity of each charge storage CS and processing to correct the base (reference) deviation in the read-out signal value, is omitted.

First, the process flow shown in Fig. 5 will be described.

Step S10: The range imaging apparatus 1 drives each pixel 321 to store charges in the charge storages CS of the pixel 321 in each subframe at the storage timing corresponding to the subframe, and reads out the storage signal corresponding to the amount of stored charge.

Step S11: The range imaging apparatus 1 calculates the distance for each subframe based on the storage signal of each subframe. In the calculation of the distance in step S11, the range imaging apparatus 1 calculates the external light-subtracted signal by subtracting the external light component from the storage signal of each subframe.

Step S12: The range imaging apparatus 1 divides the external light-subtracted signal of each subframe by the integration count of each subframe. For example, the range imaging apparatus 1 calculates the external light-subtracted signal per integration using equation (2).

Step S13: The range imaging apparatus 1 compares the signals per integration of the subframes to select the subframe with the largest signal. For example, the range imaging apparatus 1 selects, from the subframes, the subframe having the largest external light-subtracted signal per integration using equation (3).

Step S14: The range imaging apparatus 1 sets the distance of the selected subframe as the distance of a single combined frame. The range imaging apparatus 1 uses, among the distances corresponding to the subframes calculated in step S11, the distance corresponding to the subframe selected in step S14 as the distance (combined result) corresponding to the measurement result of one frame.

In Fig. 5, in step S11, the distance is calculated for each subframe. This makes it possible to calculate a provisional combined result based on the distances of the subframes.

There may be pixels 321 whose provisional combined results hardly differ from the combined result calculated in step S14. By displaying the provisional combined results in these pixels 321 in the range image, the apparent distance can be calculated faster.

Next, the process flow shown in Fig. 6 will be described. Since steps S20 and S22 to S23 in Fig. 6 are equivalent to the process shown in steps S10 and S12 to S13 in Fig. 5, description thereof will be omitted.

Step S21: The range imaging apparatus 1 calculates the external light-subtracted signal by subtracting the external light component from the storage signal of each subframe.

Step S24: The range imaging apparatus 1 calculates the distance for a single combined frame based on the storage signal of the selected subframe. For example, the range imaging apparatus 1 calculates the distance by using the storage signal of the selected subframe, and uses the calculated distance as the distance (combined result) corresponding to the measurement result for one frame.

In Fig. 6, the process shown in step S11 in FIG. 5 is omitted. This reduces computational load. Therefore, it is possible to identify the subframe in which the charge corresponding to the reflected light is accumulated and calculate a correct combination result while suppressing the computational load.

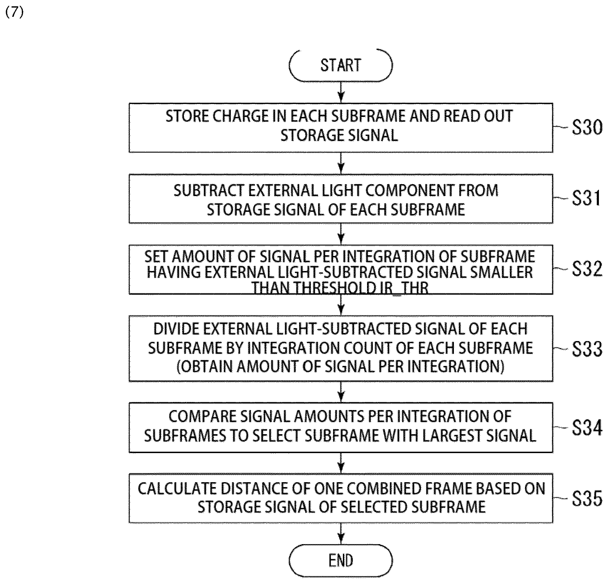

Next, the process flow shown in Fig. 7 will be described. Since steps S30 to S31 and S33 to S35 in Fig. 7 are equivalent to the process shown in steps S10 to S14 in Fig. 6, description thereof will be omitted.

Step S32: The range imaging apparatus 1 sets the signal values per integration to zero for the subframes having an external light-subtracted signal smaller than a threshold IR_thr. For example, the range imaging apparatus 1 compares the external light-subtracted signal for each subframe calculated in step S31 with the threshold IR_thr. The range imaging apparatus 1 extracts subframes having an external light-subtracted signal smaller than the threshold IR_thr. The range imaging apparatus 1 sets the external light-subtracted signals per integration for the extracted subframes to zero.

As a result, the range imaging apparatus 1 excludes the subframes whose external light-subtracted signals per integration are zero from the candidates for the subframe for calculating the distance (combined result) corresponding to the measurement result of one frame.

The storage signal has noise that is independent of the integration count. An example of noise independent of the integration count is circuit noise that occurs when signal processing is performed in the circuit forming the pixel 321. If an external light-subtracted signal for a subframe with a small integration count has such noise that is independent of the integration count, the value of the external light-subtracted signal per integration increases. If the external light-subtracted signal per integration has an increased value, that subframe may be selected as the subframe for calculating the combined result in step S34 even though a pixel corresponding to the reflected light RL is not stored in that subframe.

To address this, in step S32 of Fig. 7, the external light-subtracted signal per integration for a subframe having an external light-subtracted signal smaller than the threshold IR_thr is set to 0. This prevents an incorrect subframe from being selected as the subframe for calculating the combined result.

As described above, in the range imaging apparatus 1 of this embodiment, a plurality of subframes are provided for each frame. The range image processing unit 4 stores charge in each of the plurality of subframes at different relative storage timings relative to the emission timing. The range image processing unit 4 selects a subframe for calculating the distance from the plurality of subframes based on the amount of charge stored per unit integration count in each subframe. This allows the range imaging apparatus 1 of the embodiment to identify the subframe in which the charge corresponding to the reflected light RL was stored during sub-frame operation. In addition, since it can be identified based on the amount of charge stored per unit integration count, it is possible to correctly identify the subframe in which charge corresponding to the reflected light RL was stored even if the integration count differs for each subframe.

In the range imaging apparatus 1 of the embodiment, the range image processing unit 4 calculates an external light-subtracted signal (signal obtained by subtracting an external light signal corresponding to the external light component from the storage signal) for each of the plurality of subframes. The external light-subtracted signal is an example of a "first indicator". The range imaging apparatus 1 calculates the external light-subtracted signal using, for example, equation (1). This allows the range imaging apparatus 1 of the embodiment to correctly identify the subframe in which the charge corresponding to the reflected light RL was stored based on the signal from which the external light signal has been subtracted.

Note that the arithmetic expression for calculating the external light-subtracted signal is not limited to equation (1). For example, the following equation (4) may be used.

$$IR2\_subN = Q1\_subN + Q2\_subN - 2 \times Q3\_subN \;...(4),$$

where IR2_subN is the external light-subtracted signal in the Nth subframe.

Q1_subN is the storage signal of the charge storage CS1 in the Nth subframe.
Q2_subN is the storage signal of the charge storage CS2 in the Nth subframe.
Q3 _subN is the storage signal of the charge storage CS3 in the Nth subframe.

Note that equation (4) assumes that, in the Nth subframe, an amount of charge corresponding to the reflected light RL and external light component is stored in the charge storages CS1 and CS2, and an amount of charge corresponding to the external light component is stored in the charge storage CS3. Note that the pixel may be driven so that a specific charge storage CS among the plurality of charge storages CS stores only a charge corresponding to the external light. In this case, the range image processing unit 4 uses, as the external light signal, the storage signal corresponding to the amount of charge stored in that charge storage CS that stores only a charge corresponding to the external light. The range image processing unit 4 calculates the external light-subtracted signal using the external light signal obtained by such operation.

If the measurement is performed in an environment where no external light is received, such as indoor measurement, a signal corresponding to the magnitude of the reflected light RL (hereinafter referred to as a reflected light signal) may be calculated instead of the external light-subtracted signal. For example, the range image processing unit 4 calculates the reflected light signal using the following equation (5).

$$IR3\_subN = \max(Q1\_subN + Q2\_subN,\ Q2\_subN + Q3\_subN,\ Q3\_subN + Q4\_subN) \tag{5},$$

where IR3_subN is the reflected light signal in the Nth subframe.

Q1_subN is the storage signal of the charge storage CS1 in the Nth subframe.
Q2_subN is the storage signal of the charge storage CS2 in the Nth subframe.
Q3_subN is the storage signal of the charge storage CS3 in the Nth subframe.
Q4_subN is the storage signal of the charge storage CS4 in the Nth subframe.

As can be seen from the above, in the range imaging apparatus 1 of this embodiment, the range image processing unit 4 calculates the reflected light signal (a signal corresponding to the magnitude of the reflected light component) using the storage signals corresponding to the amounts of charge stored in the plurality of subframes. The reflected light signal is an example of the "first indicator". The range imaging apparatus 1 calculates the reflected light signal using, for example, equation (5).

This allows the range imaging apparatus 1 of the embodiment to correctly identify the subframe in which the charge corresponding to the reflected light RL was stored based on the signal corresponding to the magnitude of the reflected light RL. Further, also in the case where the reflected light signal is used, it is possible to compare the subframes using the reflected light signal per integration (which is an example of a second indicator) obtained by dividing the reflected light signal by the integration count for each subframe, and identify the subframe in which the charge corresponding to the reflected light RL was stored based on the result of comparison. This makes it possible to correctly identify the subframe in which charge corresponding to the reflected light RL was stored even if the integration count differs for each subframe.

In the range imaging apparatus 1 of this embodiment, the range image processing unit 4 excludes subframes whose first indicator (external light-subtracted signal or reflected light signal) is smaller than the threshold IR_thr from the candidates for the subframe for calculating the distance. This allows the range imaging apparatus 1 of this embodiment to prevent a subframe in which a pixel corresponding to the reflected light RL is not stored from being erroneously selected as the subframe for calculating the combined result.

All or part of the range imaging apparatus 1 and the range image processing unit 4 according to the above-described embodiment may be achieved by a computer. In this case, a program that achieves this function may be recorded on a computer-readable recording medium so that a computer system can read and run the program recorded on the recording medium. The "computer system" referred to herein includes an operating system (OS) and hardware such as peripheral devices. The "computer-readable recording medium" refers to a storage device such as a portable medium, e.g., a flexible disk, a magneto-optical disk, a ROM, a CD-ROM or the like, or a hard disk incorporated in the computer system. The "computer-readable recording medium" may include a medium that dynamically retains a program for a short period of time, such as a communication line that transmits a program through a network such as the internet or a telecommunication line such as a telephone line, or a medium that retains the program for a given period of time in that case, such as a volatile memory of a computer system that serves as a server or a client. The above programs may achieve part of the functions described above, or may achieve the functions in combination with programs already recorded in a computer system, or may achieve the functions by using a programmable logic device, such as an FPGA.

The embodiment of the present invention has been specifically described so far referring to the drawings.

However, the specific configurations are limited to the embodiment but may include designs, device configurations, correction, filtering, and the like within the scope not departing from the spirit of the present invention.

(Second Embodiment)

A range imaging apparatus according to a second embodiment will be described below with reference to the drawings.

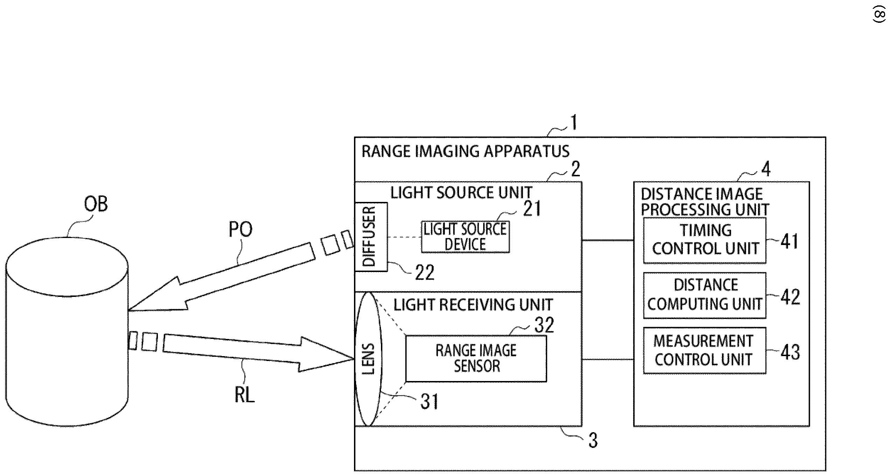

Fig. 8 is a block diagram illustrating a schematic configuration of the range imaging apparatus according to the embodiment. The range imaging apparatus 1A includes, for example, a light source unit 2A, a light receiving unit 3A, and a range image processing unit 4A. Fig. 8 also illustrates a subject OB the distance to which will be measured by the range imaging apparatus 1A.

In response to a control procedure performed by the range image processing unit 4A, the light source unit 2A emits a light pulse PO into a measurement space in which the subject OB exists the distance to which is to be measured by the range imaging apparatus 1A. The light source unit 2A may be, for example, a surface emitting semiconductor laser module such as a vertical cavity surface emitting laser (VCSEL). The light source unit 2A includes a light source device 21A and a diffuser 22A.

The light source device 21A is a light source that emits a laser beam in a near-infrared wavelength band (for example, a wavelength band in which the wavelength is 850 nm to 940 nm), which serves as the light pulse PO emitted to the subject OB. The light source device 21A may be, for example, a semiconductor laser light emitting device. The light source device 21A emits a pulsed laser beam according to control by a timing control unit 41A.

The diffuser 22A is an optical component that diffuses a laser beam in the near-infrared wavelength region emitted from the light source device 21A over a desired irradiated area. The pulsed laser beam diffused by the diffuser 22A is output as the light pulse PO and emitted to the subject OB.

The light receiving unit 3A receives reflected light RL of the light pulse PO reflected from the subject OB the distance to which will be measured by the range imaging apparatus 1A and outputs a pixel signal corresponding to the received reflected light RL. The light receiving unit 3A includes a lens 31 and a range image sensor 32A. Note that the light receiving unit 3A may have a band pass filter (not shown) between the lens 31A and the range image sensor 32A. The bandpass filter performs band limiting. For example, the bandpass filter transmits components of the light incident on the lens 31A that are within a predetermined frequency band to the range image sensor 32A and prevents components that are falls outside the predetermined frequency band from being transmitted to the range image sensor 32A.

The lens 31A is an optical lens that guides the reflected light RL incident on the lens 31A to the range image sensor 32A. The lens 31A outputs the reflected light RL that is incident on the lens 31A toward the range image sensor 32A and causes pixels provided in a light-receiving region of the range image sensor 32A to receive the reflected light RL (or makes the reflected light RL incident on the pixels).

The range image sensor 32A is an imaging element used in the range imaging apparatus 1A. The range image sensor 32A includes a plurality of pixels in a two-dimensional light-receiving region. Each pixel of the range image sensor 32A includes a single photoelectric conversion device, a plurality of charge storages corresponding to the single photoelectric conversion device, and a component that distributes electric charges to the charge storages. That is, the pixels are imaging elements of a distributing structure that distributes and stores the electric charge to the charge storages.

The range image sensor 32A distributes charge generated by the photoelectric conversion device to each of the charge storages, according to control by the timing control unit 41A. Additionally, the range image sensor 32A outputs a pixel signal corresponding to the amount of charge that has been distributed to each charge storage. The range image sensor 32A includes a plurality of pixels arranged in a two-dimensional matrix and outputs a pixel signal for one frame corresponding to each pixel.

The range image processing unit 4A controls the range imaging apparatus 1A to compute the distance to the subject OB. The range image processing unit 4A includes the timing control unit 41A, a range computing unit 42A, and a measurement control unit 43A.

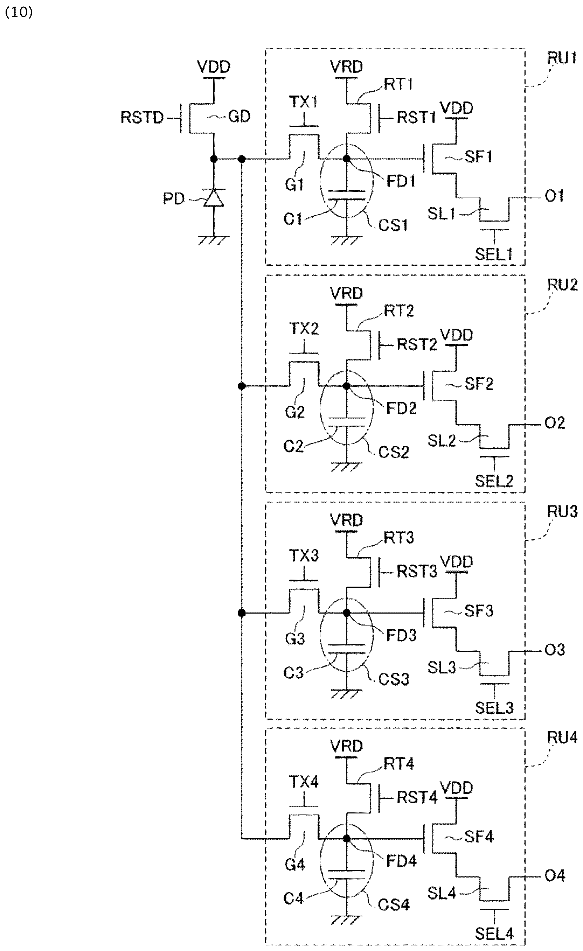

The timing control unit 41A controls the timings at which a variety of control signals required for the measurement are output in response to the control procedure performed by the measurement control unit 43A. The variety of signals as used herein refer to, for example, a signal for controlling the emission of the light pulse PO, a signal for distributing and storing the reflected light RL to the charge storages, and a signal for controlling the storage count per frame. The storage count is the number of times the process of distributing and storing charge to the charge storages CS (see Fig. 10) is repeated. The product of the storage count and the time for which charge is stored in the charge storages during each process of distributing and storing charge is the storage time.

The range computing unit 42A outputs distance information obtained by calculating the distance to the subject OB, based on the pixel signal output from the range image sensor 32A. The range computing unit 42A calculates a delay time from the time at which the light pulse PO is emitted to the time at which the reflected light RL is received, based on the amount of charge stored in the plurality of charge storages. The range computing unit 42A calculates the distance to the subject OB in accordance with the calculated delay time.

The measurement control unit 43A controls the timing control unit 41A. For example, the measurement control unit 43A sets the storage count per frame and the storage time to control the timing control unit 41A so that the image capturing is performed according to the settings.

With this configuration, the range imaging apparatus 1A causes the light source unit 2A to emit the light pulse PO in the near-infrared wavelength band to the subject OB, causes the light receiving unit 3A to receive the reflected light RL reflected from the subject OB, and causes the range image processing unit 4A to calculate the distance to the subject OB and output the distance information.

Fig. 8 shows the range imaging apparatus 1A in which the range image processing unit 4A is included; however, the range image processing unit 4A may be a component provided outside the range imaging apparatus 1A. Further, the circuit for storing charge in the charge storages corresponding to the timing control unit 41A and the measurement control unit 43A, and a circuit for reading out pixel signals corresponding to the range computing unit 42A may be separate circuit blocks.

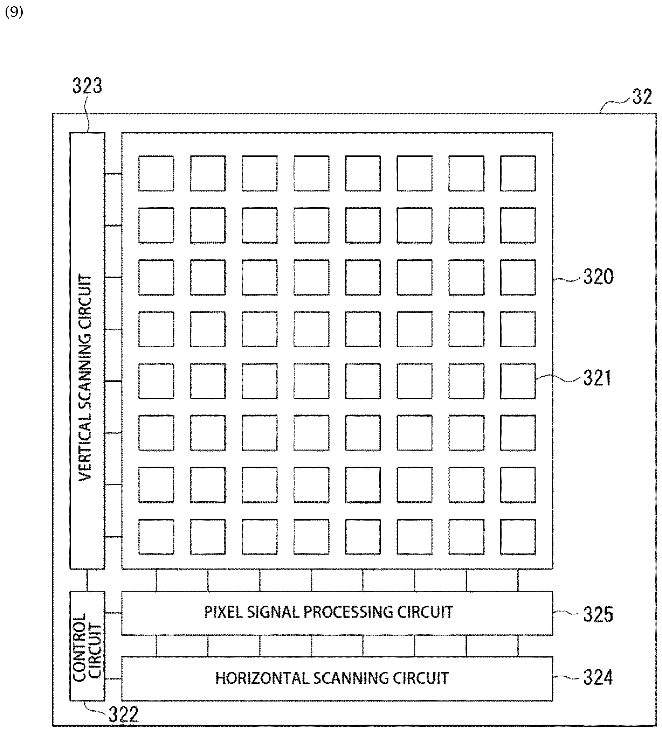

Next, a configuration of the range image sensor 32A used as an imaging element in the range imaging apparatus 1A will be described with reference to Fig. 9. Fig. 9 is a block diagram illustrating the schematic configuration of the imaging element (range image sensor 32A) used in the range imaging apparatus 1A of the embodiment.

As illustrated in Fig. 9, the range image sensor 32A includes, for example, a light-receiving region 320A, which includes multiple pixels 321A, a control circuit 322A, a vertical scanning circuit 323A, which has distribution operation, a horizontal scanning circuit 324A, and a pixel signal processing circuit 325A.

The light-receiving region 320A is a region in which the pixels 321A are arranged. Fig. 9 illustrates an example in which the pixels 321A are arranged in a two-dimensional matrix of 8 rows and 8 columns. The pixels 321A store a charge corresponding to the amount of light received. The control circuit 322A comprehensively controls the range image sensor 32A. For example, the control circuit 322A controls the operation of the components of the range image sensor 32A according to instructions from the timing control unit 41A of the range image processing unit 4A. Note that the components of the range image sensor 32A may be directly controlled by the timing control unit 41A, in which case the control circuit 322A may be omitted.

The vertical scanning circuit 323A is a circuit that controls the pixels 321A arranged in the light-receiving region 320A row by row in response to the control procedure performed by the control circuit 322A. The vertical scanning circuit 323A causes the pixel signal processing circuit 325A to output a voltage signal corresponding to the amount of charge accumulated in each of the charge storages CS of each pixel 321A. In this case, the vertical scanning circuit 323A distributes and stores the charge converted by the photoelectric conversion device to each of the charge storages of each pixel 321A. That is, the vertical scanning circuit 323A is an example of a "pixel driver circuit".

The pixel signal processing circuit 325A is a circuit that performs predetermined signal processing (for example, noise suppression and A/D conversion) on voltage signals output from the pixels 321A of each column to a corresponding vertical signal line in response to the control procedure performed by the control circuit 322A.

The horizontal scanning circuit 324A is a circuit that sequentially outputs, to a horizontal signal line, the signal output from the pixel signal processing circuit 325A in response to the control procedure performed by the control circuit 322A. Accordingly, the pixel signal corresponding to the amount of charge accumulated per frame is sequentially output to the range image processing unit 4A via the horizontal signal line.

The following description is based on a precondition that the pixel signal processing circuit 325A has performed A/D conversion, so that the pixel signal is a digital signal.

The configuration of the pixels 321A arranged in the light-receiving region 320A of the range image sensor 32A will now be described with reference to Fig. 10. Fig. 10 is a circuit diagram illustrating an exemplary configuration of the pixels 321A arranged in the light-receiving region 320A of the range image sensor 32A according to the embodiment. Fig. 10 illustrates an exemplary configuration of one of the pixels 321A arranged in the light-receiving region 320A. The pixel 321A is an exemplary configuration including four pixel signal readout units RU.

The pixel 321A includes a single photoelectric conversion device PD, drain gate transistors GD, and four pixel signal readout units RU each of which outputs a voltage signal from the corresponding output terminal O. The pixel signal readout units RU each include a readout gate transistor G, a floating diffusion FD, a charge storage capacitor C, a reset gate transistor RT, a source follower gate transistor SF, and a selection gate transistor SL. In each pixel signal readout unit RU, the floating diffusion FD and the charge storage capacitor C constitute a charge storage CS.

In Fig. 10, a numerical value "1", "2", "3", or "4" is appended after the reference sign "RU" of the four pixel signal readout units RU to distinguish the pixel signal readout units RU from one another. Similarly, the numerical values are also appended after the reference signs of the components of the four pixel signal readout units RU to express the components by distinguishing the pixel signal readout units RU with which they are associated.

In the pixel 321A shown in Fig. 10, the pixel signal readout unit RU1 that outputs a voltage signal from an output terminal O1 includes a readout gate transistor G1, a floating diffusion FD1, a charge storage capacitor C1, a reset gate transistor RT1, a source follower gate transistor SF1, and a selection gate transistor SL1. In the pixel signal readout unit RU1, the floating diffusion FD1 and the charge storage capacitor C1 constitute a charge storage CS1. The pixel signal readout units RU2 to RU4 also have the same configuration.

The photoelectric conversion device PD is an embedded photodiode that performs photoelectric conversion of the incident light to generate electric charge and accumulates the generated electric charge. The photoelectric conversion device PD may have any configuration. The photoelectric conversion device PD may be, for example, a PN photodiode including a P-type semiconductor and an N-type semiconductor joined together or a PIN photodiode including an I-type semiconductor sandwiched between a P-type semiconductor and an N-type semiconductor.

In each pixel 321A, the charge generated by the photoelectric conversion of the incident light performed by the photoelectric conversion device PD is distributed to the four charge storages CS. Voltage signals each corresponding to the amount of charge that has been distributed are output to the pixel signal processing circuit 325A.

The configuration of the pixels arranged in the range image sensor 32A is not limited to the configuration including four pixel signal readout units RU as illustrated in Fig. 10 and may be any configuration including multiple pixel signal readout units RU. That is, the number of the pixel signal readout units RU (charge storages CS) included in each pixel located in the range image sensor 32A may be two, three, or five or more.

Further, the pixel 321A configured as illustrated in Fig. 10 shows an exemplary configuration in which each charge storage CS includes the floating diffusion FD and the charge storage capacitor C. However, each charge storage CS may have any configuration as long as at least the floating diffusion FD is included, and each pixel 321A does not need to include the charge storage capacitor C.

Although the pixel 321A having the configuration shown in Fig. 10 shows an exemplary configuration including drain gate transistors GD, the drain gate transistors GD may not be provided if there is no need to discard the charge stored (remaining) in the photoelectric conversion device PD.

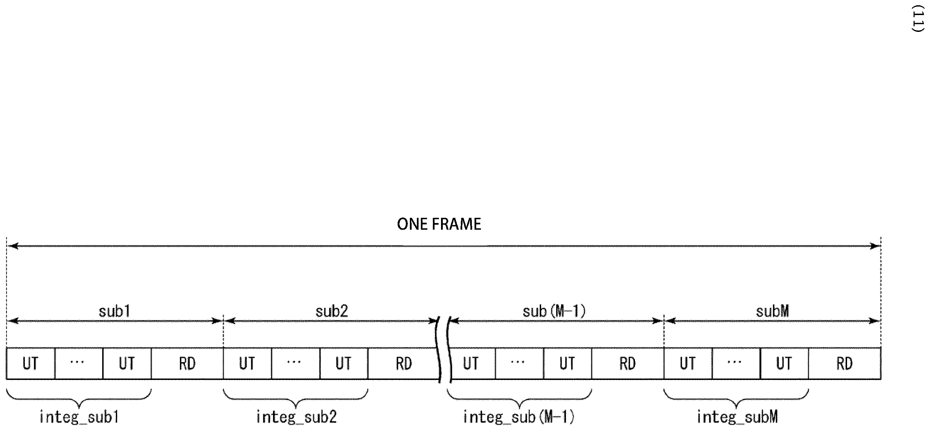

Fig. 11 is a diagram for explaining a plurality of subframes included in one frame of the present embodiment. As shown in Fig. 11, in this embodiment, one frame is provided with a plurality of subframes, for example, a first subframe Sub1, a second subframe Sub2, an (M-1)th subframe Sub(M-1), and an Mth subframe SubM. M is a natural number greater than or equal to 2.

In each subframe, after a unit storage process UT in which charge is distributed and stored into the charge storages CS is repeated a certain integration count integ, storage signals Q corresponding to the amounts of charge accumulated in the charge storages CS are read out during a readout period RD. For example, if the pixel 321A has four charge storages CS1 to CS4, the storage signal Q is made up of storage signals Q1 to Q4 corresponding to the amounts of charge stored in the charge storages CS1 to CS4, respectively.

Specifically, in the first subframe Sub1, after the unit storage process UT is repeated the integration count integ_Sub1, the storage signal Q_Sub1 is read out in the readout period RD. If the pixel 321A has four charge storages CS1 to CS4, the storage signal Q_Sub1 is made up of storage signals Q1_Sub1 to Q4_Sub1.

In the second subframe Sub2, after the unit storage process UT is repeated the integration count integ_Sub2, the storage signal Q_Sub2 is read out in the readout period RD. If the pixel 321A has four charge storages CS1 to CS4, the storage signal Q_Sub2 is made up of storage signals Q1_Sub2 to Q4_Sub2. The same applies to the subsequent subframes.

The integration count integ in each subframe may be different from each other. For example, the integration count integ_Sub1 in the first subframe Sub1 and the integration count integ_Sub2 in the second subframe Sub2 may have different values.

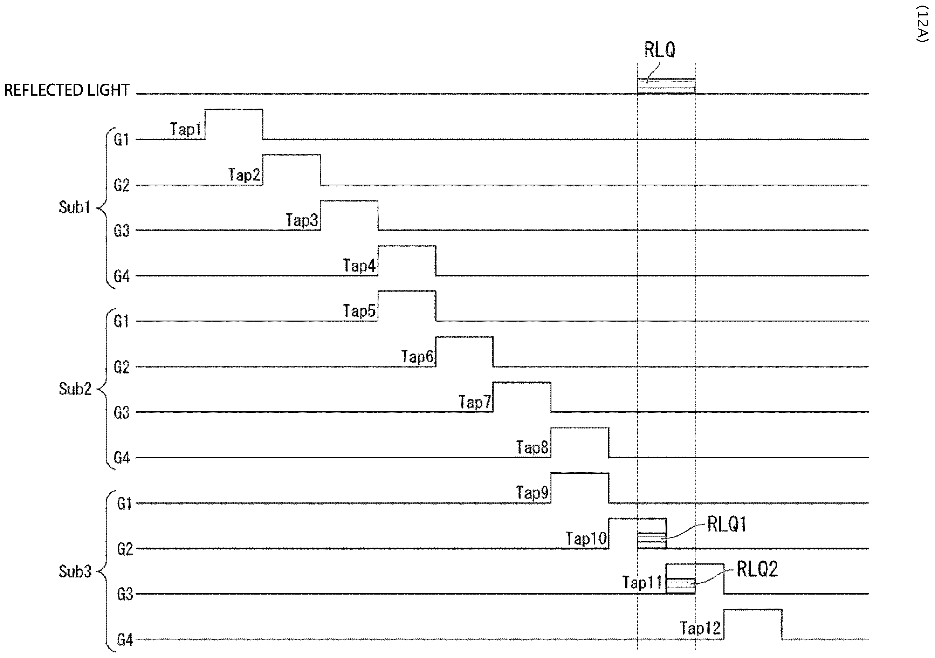

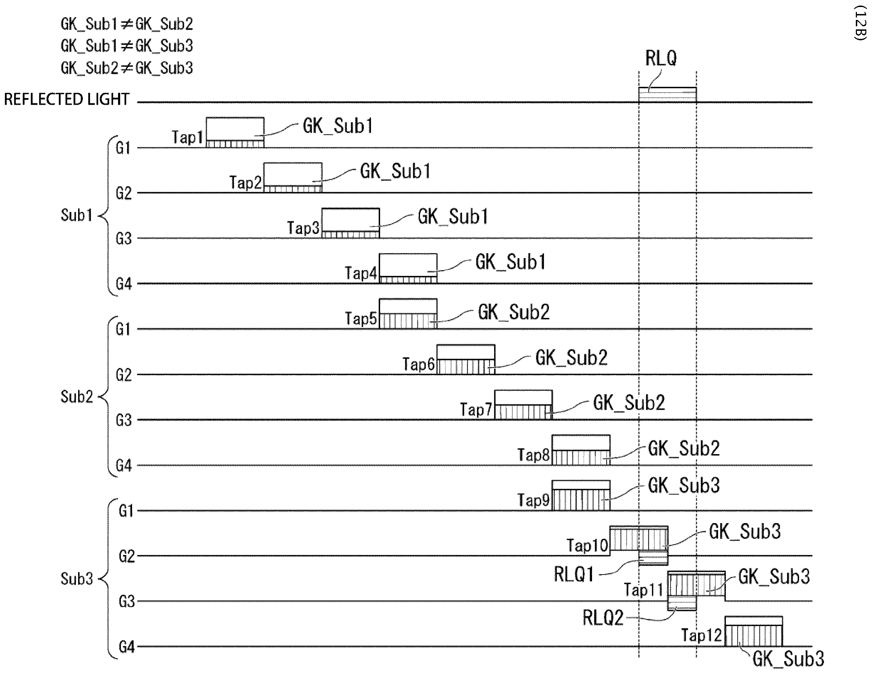

The charge accumulated in each subframe will be described with reference to Figs. 12A and 12B. Figs. 12A and 12B are timing charts illustrating examples of the way each pixel 321A of the embodiment is driven.

In Figs. 12A and 12B, the timing at which the reflected light RL is received is denoted by "reflected light", the timing at which the readout gate transistor G1 is driven to store charge in the charge storage CS1 is denoted by "G1", the timing at which the readout gate transistor G2 is driven to store charge in the charge storage CS2 is denoted by "G2", the timing at which the readout gate transistor G3 is driven to store charge in the charge storage CS3 is denoted by "G3", and the timing at which the readout gate transistor G4 is driven to store charge in the charge storage CS4 is denoted by "G4". Note that the timing at which the drain gate transistor GD is omitted.

Figs. 12A and 12B also show the timings at which the readout gate transistors G1 to G4 are turned on or off in each subframe with respect to the timing at which reflected light is received.

Fig. 12A shows how charges are accumulated in the third subframe Sub3 when measurement is performed in an environment in which the pixel 321A does not receive external light.

First, in the first subframe Sub1, charges are stored in the charge storages CS1, CS2, CS3, and CS4 in this order at a timing synchronized with the timing at which the light pulse PO is emitted. Next, at the subsequent timing at which charge is stored in the charge storage CS4 in the first subframe Sub1, charges are stored in the charge storages CS1, CS2, CS3, and CS4 in this order in the second subframe Sub2. Next, at the subsequent timing at which charge is stored in the charge storage CS4 in the second subframe Sub2, charges are stored in the charge storages CS1, CS2, CS3, and CS4 in this order in the third subframe Sub3.

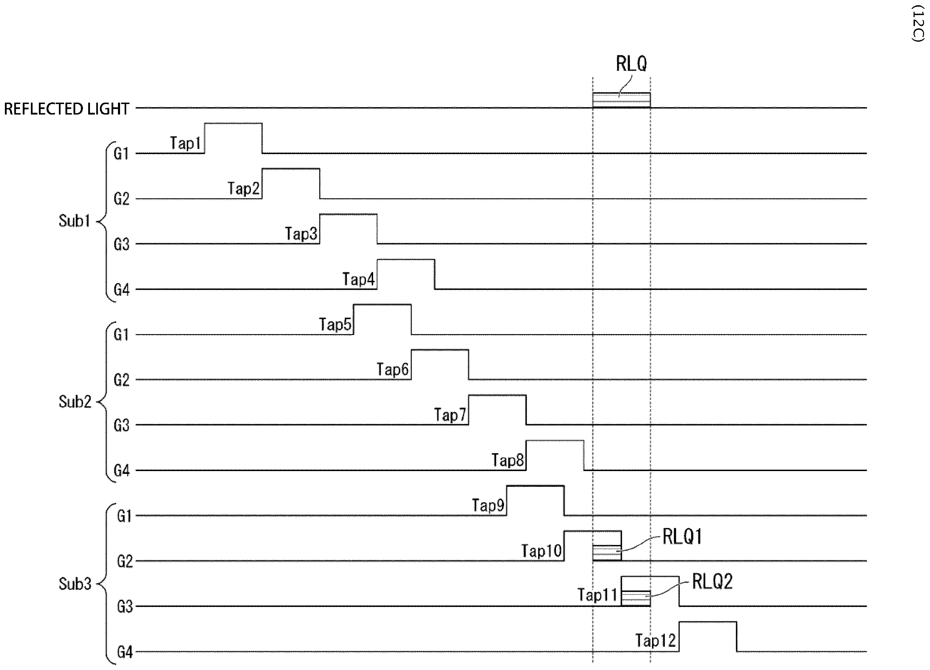

Although in Fig. 12A the on state of the readout gate transistor G4 in the first subframe Sub1 and the on state of the readout gate transistor G1 in the second subframe Sub2 overlap, this is not limiting. For example, as shown in Fig. 12C, the on state of the readout gate transistor G3 in the first subframe Sub1 and the on state of the readout gate transistor G1 in the second subframe Sub2 may partially overlap.

Similarly, although in Fig. 12A the on state of the readout gate transistor G4 in the second subframe Sub2 and the on state of the readout gate transistor G1 in the third subframe Sub3 overlap, this is not limiting. For example, as shown in Fig. 12C, the on state of the readout gate transistor G3 in the second subframe Sub2 and the on state of the readout gate transistor G1 in the third subframe Sub3 may partially overlap.

Note that the readout gate transistors G1 to G4 may be driven in any desired order in this embodiment. Even when the readout gate transistors G1 to G4 are driven in a desired order, the present embodiment can be applied to identify the subframe in which a charge corresponding to the reflected light was stored.

By starting the storage of charges in the charge storages CS at different timings in each subframe relative to the timing at which the light pulse PO is emitted, the range imaging apparatus 1A can have an increased measurable distance.

As shown in Fig. 12A, since the reflected light RL is received at the timing when charges are stored in the charge storages CS2 and CS3 in the third subframe Sub3, charges corresponding to the reflected light RL are stored in the charge storages CS2 and CS3 in the third subframe Sub3. Specifically, an amount of charge RLQ1 is stored in the charge storage CS2 in the third subframe Sub3. The amount of charge RLQ1 is part of an amount of charge RLQ corresponding to the reflected light RL. An amount of charge RLQ2 is stored in the charge storage CS3 in the third subframe Sub3. The amount of charge RLQ2 is an amount of charge obtained by subtracting the amount of charge RLQ1 from the amount of charge RLQ corresponding to the reflected light RL.

Fig. 12B shows how charges are accumulated in each subframe when measurement is performed in an environment in which the pixel 321A receives external light. In Fig. 12B, it is assumed that the reflected light RL is received at the same timing as in Fig. 12A.

In Fig. 12B, since the pixel 321A receives external light, a charge corresponding to the external light component is stored in the charge storages CS in each subframe. In this case, the amount of charge corresponding to the external light component stored in the charge storages CS differs for each subframe. This is because the integration count integ differs for each subframe.

For example, in the first subframe Sub1, an amount of charge GK_Sub1 corresponding to the external light component is stored in each charge storage CS. The amount of charge GK_Sub1 is an amount of charge determined according to an integration count integ_Sub1. Specifically, it is a value obtained by multiplying the amount of charge corresponding to the external light component stored in a unit storage process UT (unit amount of external light charge) by the integration count integ_Sub1.

In the second subframe Sub2, an amount of charge GK_Sub2 corresponding to the external light component is stored in each charge storage CS. The amount of charge GK_Sub2 is an amount of charge determined according to an integration count integ_Sub2. Specifically, it is a value obtained by multiplying the amount of charge corresponding to the external light component stored in a unit storage process UT (unit amount of external light charge) by the integration count integ_Sub2.

In the third subframe Sub3, an amount of charge GK_Sub3 corresponding to the external light component is stored in each charge storage CS. The amount of charge GK_Sub3 is an amount of charge determined according to an integration count integ_Sub3. Specifically, it is a value obtained by multiplying the amount of charge corresponding to the external light component stored in a unit storage process UT (unit amount of external light charge) by the integration count integ_Sub3.

In a measurement for one frame, the amount of charge (unit amount of external light charge) corresponding to the external light component stored in a unit storage process UT can be assumed to be almost constant on average, but normally there is some variation (noise). In addition, if the integration count integ differs for each subframe, the amount of charge corresponding to the external light component stored in each charge storage CS will be different for each subframe.

For example, the amount of reflected light arriving from a long distance is smaller than the amount of reflected light arriving from a short distance. Therefore, it may be possible that a subframe in which reflected light arriving from a long distance is expected to be received is provided with a larger integration count integ than other subframes. For example, if the first to third subframes Sub1 to Sub3 are to be driven in this order, the integration count integ may increase in the order of the first to third subframes Sub1 to Sub3. In this case, the amount of charge stored corresponds to the integration count integ in each subframe. This means that the amount of charge GK_Sub1 and the amount of charge GK_Sub2 have different values. The amount of charge GK_Sub1 and the amount of charge GK_Sub3 have different values. The amount of charge GK_Sub2 and the amount of charge GK_Sub3 have different values.

Since the reflected light RL is received at the timing when charges are stored in the charge storages CS2 and CS3 in the third subframe Sub3, charges corresponding to the reflected light RL are stored in the charge storages CS2 and CS3 in the third subframe Sub3. That is, in addition to the amount of charge GK_Sub3, an amount of charge RLQ1 is stored in the charge storage CS2 in the third subframe Sub3. In addition to the amount of charge GK_Sub3, an amount of charge RLQ2 is stored in the charge storage CS3 in the third subframe Sub3.

As can be seen from the above, if the reflected light RL arrives at a timing when there is a charge storage CS controlled to be in the on state in a subframe, a charge corresponding to the reflected light RL is stored in that subframe when the reflected light RL arrives. Depending on the timing at which the reflected light RL arrives, it is possible that no charge corresponding to the reflected light RL is stored in any of the subframes. For example, if reflected light RL arrives after each subframe has been driven, no charge corresponding to the reflected light RL would be stored in all of the subframes. This means that the range of distance measurement (measurable range) is determined by the pulse width and the number of subframes. If the subframes have different integration count values, the amount of charge corresponding to the external light component stored in the charge storages CS differs for each subframe. A charge corresponding to the reflected light from the subject OB located within the range of distance measurement is stored in one of the subframes. Therefore, the storage signal Q read out in each subframe will have a signal value corresponding to the amount of charge corresponding to the external light component or a mixture of amounts of charge corresponding to the external light component and the reflected light RL.

That is, the signal (external light signal) corresponding to the external light component in the storage signal Q differs for each subframe, and in addition, the external light signal included in the storage signal Q varies with respect to the average external light signal. For example, one subframe may have a small integration count, resulting in a smaller variation in the external light component stored in the charge storages CS, whereas another subframe may have a large integration count, resulting in a larger variation in the external light component stored in the charge storage CS.

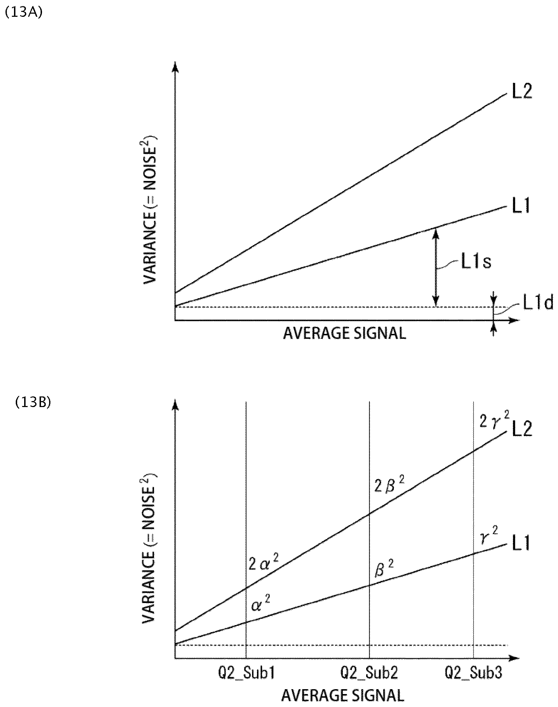

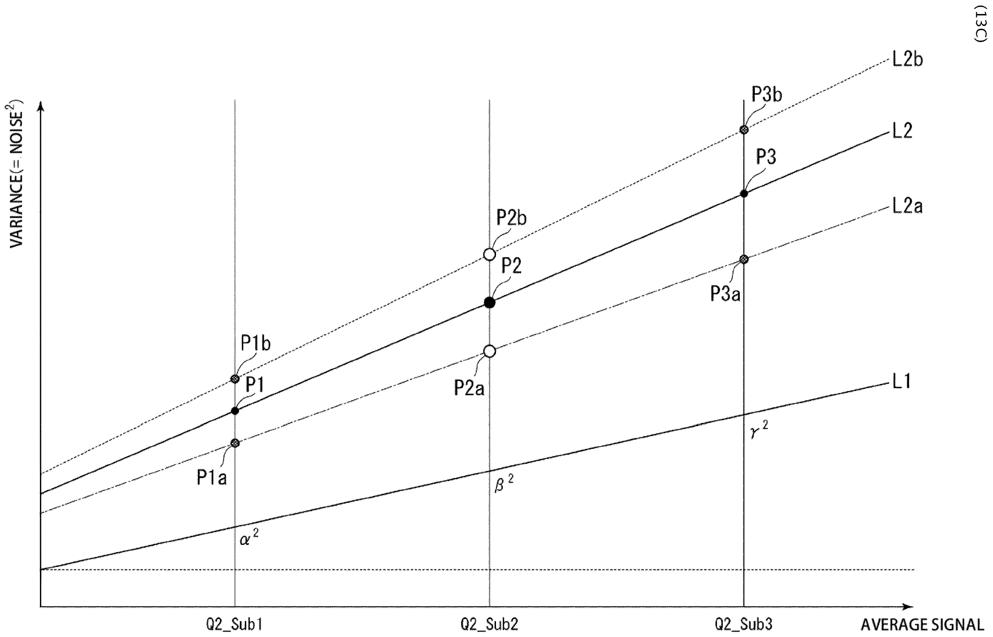

The reflected light will be explained with reference to Figs. 13A, 13B, and 13C. Figs. 13A to 13C are diagrams illustrating the process performed by the range imaging apparatus 1A of the embodiment. The horizontal axis of Figs. 13A to 13C indicates the average signal, and the vertical axis indicates the variance (the square of noise). The average signal is an average of storages signals Q. The variance is an average of the squared differences (noise) between the storage signals Q and the average signal.

As shown by line segments L1 and L2, the relationship between the "average signal" and the "variance" can be expressed by a simple linear function. The variance value is a combined value of a component L1d caused by dark noise and a component L1s caused by shot noise. The component L1d caused by dark noise has a substantially constant value regardless of the magnitude of the average signal. On the other hand, the component L1s caused by the shot noise has a value proportional to the magnitude of the average signal. This means that the relationship between the variance and the average signal can be expressed by a linear function having an intercept according to the component L1d and a slope according to the component L1s. The relationship between variance and average signal is not limited to the pixel 321A, and almost the same tendency can be seen in pixels having chips produced with the same design. On the other hand, when the type of chip is different, the relationship between the variance and the average signal remains a linear function, but the values of the intercept and slope change.

The line segment L1 in Fig. 13A shows the relationship between the "average signal" and the "variance" of the storage signals Q, that is, the signal values corresponding to the amounts of charge stored in the charge storages CS in each subframe.

On the other hand, the line segment L2 in Fig. 13A shows the relationship between the "average signal" of the external light signal and the "variance" of the external light-subtracted signal, which is obtained by subtracting the external light signal from the storage signal Q. When external light signals are subtracted from storage signals Q, the average of the external light-subtracted signals becomes approximately zero, but the variance of the external light-subtracted signal would be added up instead of being subtracted. This is because the external light signal has almost the same variance as the storage signal Q.

Fig. 13B schematically shows the relationship between the line segments L1 and L2 and a storage signal of each subframe. The storage signal Q2_Sub1 is a signal corresponding to the amount of charge stored in the charge storage CS2 in the first subframe Sub1. The storage signal Q2_Sub2 is a signal corresponding to the amount of charge stored in the charge storage CS2 in the second subframe Sub2. The storage signal Q2_Sub3 is a signal corresponding to the amount of charge stored in the charge storage CS2 in the third subframe Sub3.

As shown in Fig. 13B, when the storage signal Q2_Sub1 has a variance of $\alpha^2$, the external light-subtracted signal obtained by subtracting the external light signal from the storage signal Q2_Sub1 has a variance of $2\alpha^2$. When the storage signal Q2_Sub2 has a variance of $\beta^2$, the external light-subtracted signal obtained by subtracting the external light signal from the storage signal Q2_Sub2 has a variance of $2\beta^2$. When the storage signal Q2_Sub3 has a variance of $\gamma^2$, the external light-subtracted signal obtained by subtracting the external light signal from the storage signal Q2_Sub3 has a variance of $2\gamma^2$.

In this embodiment, such a property of the line segment L2 is utilized to set a threshold based on the relationship between the "average signal" and "variance" of the external light-subtracted signal. This threshold is a threshold for determining whether a signal corresponding to the reflected light RL is included in the external light-subtracted signal.

For example, in this embodiment, a measurement is performed in advance in which charge corresponding to the external light component is stored in the charge storages CS in order to obtain the intercept and slope of the line segment L1. Then, the intercept and slope of the line segment L2 are determined based on the obtained intercept and slope of the line segment L1. Information on the line segment L2 thus determined is stored in advance in the range imaging apparatus 1A. As the information on line segment L2, the intercept and slope of line segment L2 may be stored as parameters, or a table showing the relationship between the "average signal" and "variance" of the external light-subtracted signal may be stored.

The range image processing unit 4A drives the pixel 321A in each subframe to acquire the storage signal Q corresponding to the amount of charge stored in each charge storage CS, and determine the external light signal based on the acquired storage signal Q.

For example, the range image processing unit 4A uses, as the external light signal, the storage signal with the smallest signal value among the storage signals Q corresponding to the amounts of charge stored in the charge storages CS. More specifically, if the pixel 321A has four charge storages CS, the range image processing unit 4A uses, as the external light signal, the storage signal with the smallest signal value among the storage signals Q1 to Q4 corresponding to the amounts of charge stored in the charge storages CS1 to CS4. The method for determining the external light signal based on the storage signal Q is not limited to this, and any method may be used.

Based on the external light signal, the range image processing unit 4A obtains the noise (square root of the variance) in the external light-subtracted signal by referring to the information on the line segment L2 stored in advance. The range image processing unit 4A sets a threshold based on the obtained noise. For example, the range image processing unit 4A used the value of the obtained noise as the threshold. Alternatively, the threshold may be the value of the obtained noise value multiplied by N. N is a real number greater than zero.

Note that, in principle, the relationship between the noise and the threshold is the same for all subframes. For example, in principle, if the threshold is set to a noise that is 1.2 times the variance (the squared noise) in the first subframe Sub1, the threshold for each of the second and third subframes Sub2 and Sub3 is also set to a noise that is 1.2 times the variance (the squared noise). However, this is not limiting. The relationship between the noise and the threshold may vary depending on the subframe. For example, when the threshold is set to a noise that is 1.2 times the variance (the squared noise) in the first subframe Sub1, the threshold for the second subframe Sub2 may be set to a noise that is 0.9 times the variance (the squared noise).

Fig. 13C shows a line segment L2a whose intercept and slope are $(1 - I)$ times the intercept and slope of the line segment L2, and a line segment L2b whose intercept and slope are $(1 + J)$ times the intercept and slope of the line segment L2. I and J are real numbers 0 or greater and 1 or less. For example, when $I = J = 0.2$, the line segment L2a is 0.8 times the line segment L2, and the line segment L2b is 1.2 times the line segment L2. Note that I and J may either have different values or the same value.

In Fig. 13C, a point P1 is a point that corresponds to the variance $2\alpha^2$ of the external light-subtracted signal obtained by subtracting the external light signal from the storage signal Q2_Sub1. A point P1a is a point that corresponds to $(1 - I)$ times the point P1, that is, $(1 - I)$ times the variance $2\alpha^2$. A point P1b is a point that corresponds to $(1 + J)$ times the point P1, that is, $(1 + J)$ times the variance $2\alpha^2$.

A point P2 is a point that corresponds to the variance $2\beta^2$ of the external light-subtracted signal obtained by subtracting the external light signal from the storage signal Q2_Sub2. A point P2a is a point that corresponds to $(1 - I)$ times the point P2, that is, $(1 - I)$ times the variance $2\beta^2$. A point P2b is a point that corresponds to $(1 + J)$ times the point P2, that is, $(1 + J)$ times the variance $2\beta^2$.

A point P3 is a point that corresponds to the variance $2\gamma^2$ of the external light-subtracted signal obtained by subtracting the external light signal from the storage signal Q2_Sub3. A point P3a is a point that corresponds to $(1 - I)$ times the point P3, that is, $(1 - I)$ times the variance $2\gamma^2$. A point P3b is a point that corresponds to $(1 + J)$ times the point P3, that is, $(1 + J)$ times the variance $2\gamma^2$.

If the threshold is to be adjusted in this embodiment, it is done in two stages. For example, when $I = J = 0.2$, in the first stage, the threshold for each subframe is set to a noise that is 1.0 times the variance (squared noise).

In the following second stage, depending on the result of the thresholding in the first stage, for example, the threshold for the first subframe Sub1 is set to a noise that is 0.8 times the variance (squared noise), the threshold for the second subframe Sub2 is set to a noise that is 1.0 times the variance (squared noise), and the threshold for the third subframe Sub3 is set to a noise that is 1.2 times the variance (squared noise). In this case, the points P1a, P2, and P3b are applied as the thresholds for the storage signals Q2_Sub1, Q2_Sub2, and Q2_Sub3, respectively.

By adjusting the threshold in a plurality of stages in such a way, the threshold can be set individually according to errors and variation caused by variation in characteristics across the pixels 321A.

The range image processing unit 4A calculates the external light-subtracted signal by subtracting the external light signal from the storage signal Q, and compares the calculated external light-subtracted signal with the threshold. Based on the result of the comparison, the range image processing unit 4A determines whether a signal corresponding to the reflected light RL is included in the external light-subtracted signal.

Note that, although an example has been given in which the relationship between the "average signal" and "variance" of the external light-subtracted signal is stored in advance as the information on the line segment L2, it is also possible to store the relationship between the "average signal" and "noise" of the external light-subtracted signal in advance. If the relationship between the "average signal" and "variance" is expressed as a linear function (straight line), the relationship between the "average signal" and the "noise" is expressed as a curve. By storing the relationship between the "average signal" and "noise" in the external light-subtracted signal, the range image processing unit 4A can directly obtain the amount of noise in the external light-subtracted signal based on the external light signal. This reduces the processing load.

As described above, in this embodiment, to address the problem that it is difficult to correctly identify the subframe in which charge corresponding to the reflected light was stored by simply comparing the external light-subtracted signal with a threshold, the threshold is set based on the amount of noise in the external light-subtracted signal.

This makes it possible to determine in which subframe the reflected light RL was received, taking into account the degree of variation in the external light signal. Therefore, even if the external light signal included in the storage signal Q differs for each subframe and there is variation due to the external light signal, it is possible to correctly identify the subframe in which charge corresponding to the reflected light RL was stored.

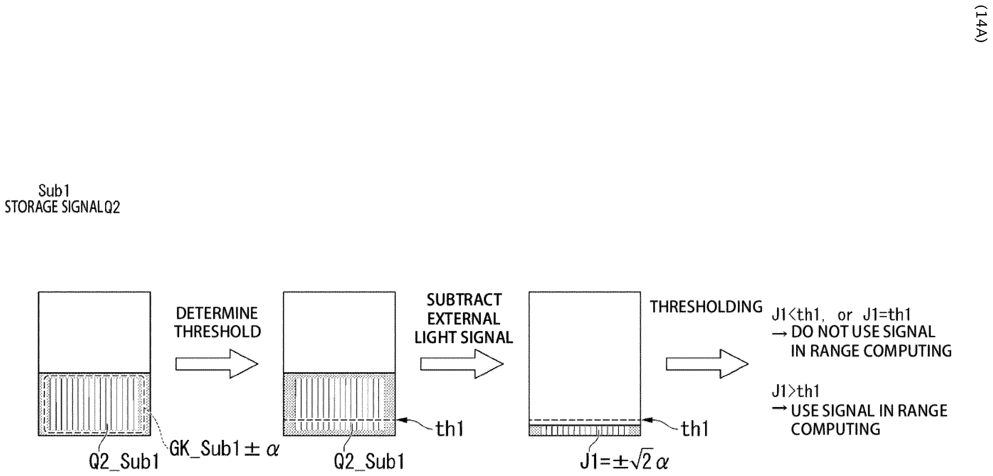

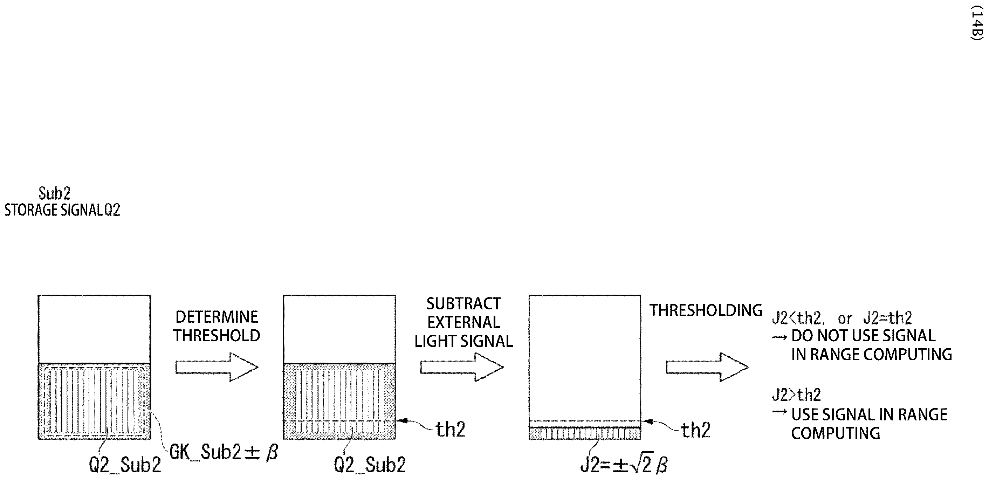

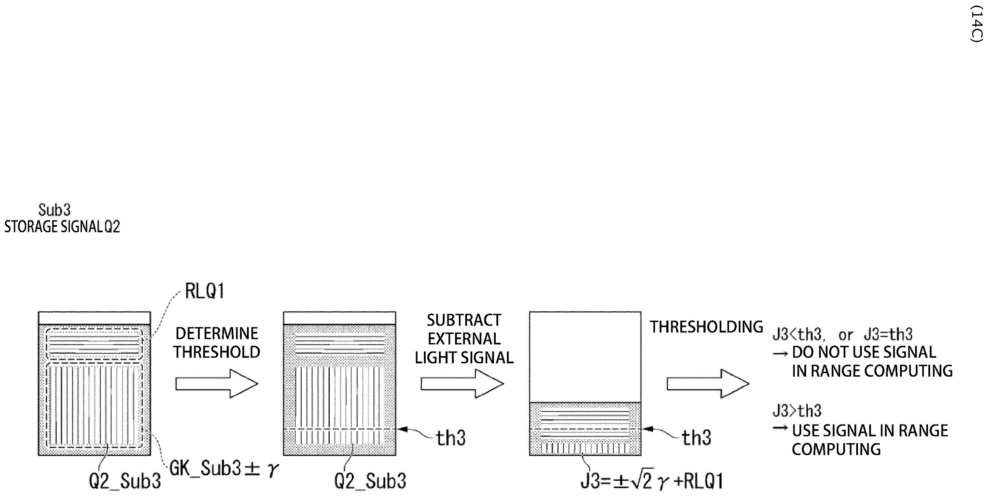

A method for identifying the subframe in which charge corresponding to the reflected light RL has been stored will be described with reference to Figs. 14A, 14B, and 14C. Figs. 14A to 14C are diagrams illustrating the process performed by the range imaging apparatus 1A of the embodiment. It is assumed in Figs. 14A to 14C that measurements are performed in an environment where external light is received as in Fig. 12B, and that charge corresponding to the reflected light RL is stored in the charge storage CS2 in the third subframe.

Fig. 14A schematically shows the storage signal Q2_Sub1 corresponding to the amount of charge stored in the charge storage CS2 in the first subframe Sub1. The storage signal Q2_Sub1 includes a signal corresponding to the amount of charge GK_Sub1 $\pm\,\alpha$. The amount of charge ($\pm\,\alpha$) is the variation (noise) with respect to the average of the amount of charge GK_Sub1. $\alpha^2$ is the variance of the amount of charge GK_Sub1.

First, the range image processing unit 4A calculates a threshold th1 based on the magnitude of the storage signal Q2_Sub1. The threshold th1 is an example of an "indicator". The threshold th1 is a value calculated according to the degree of variation in the external light signal in the first subframe Sub1. For example, the threshold th1 is a threshold indicating the upper limit of the allowable variation for the external light signal in the first subframe Sub1. More specifically, the threshold th1 is a value calculated based on the variance, standard deviation, or the like of the charge corresponding to the external light component stored in the first subframe Sub1.

Next, the range image processing unit 4A calculates an external light-subtracted signal J1 by subtracting the external light signal from the storage signal Q2_Sub1. The external light signal here is an external light signal in the first subframe Sub1 and has a variance of $\alpha^2$. Since the external light signal having a variance of $\alpha^2$ is subtracted from the storage signal Q2_Sub1 having a variance of $\alpha^2$, the external light-subtracted signal J1 has a variance of $2\alpha^2$. The external light-subtracted signal J1 contains a noise of $\pm\sqrt{2}\alpha$, which is the square root of $2\alpha^2$.

The range image processing unit 4A uses the external light-subtracted signal J1 and the threshold th1 to determine whether a signal corresponding to the reflected light RL is included in the storage signal Q2_Sub1. If the external light-subtracted signal J1 is equal to or smaller than the threshold th1, the range image processing unit 4A determines that a signal corresponding to the reflected light RL is not included in the storage signal Q2_Sub1. On the other hand, if the external light-subtracted signal J1 is greater than the threshold th1, the range image processing unit 4A determines that a signal corresponding to the reflected light RL is included in the storage signal Q2_Sub1.

The external light-subtracted signal J1 is a signal having a value of ($\pm\sqrt{2}\alpha$), which is noise corresponding to a combined variance of the variance of the storage signal Q2_Sub1 and the variance of the external light signal in the first subframe Sub1. In the example of this figure, the external light-subtracted signal J1 is smaller than the threshold th1. The range image processing unit 4A determines that a signal corresponding to the reflected light RL is not included in the storage signal Q2_Sub1.

The range image processing unit 4A also uses the threshold th1 for the other storage signals in the first subframe Sub1, that is, the storage signals Q1_Sub1, Q3_Sub1, and Q4_Sub1 to determine whether a signal corresponding to the reflected light RL is included in the storage signal Q_Sub1.

If the range image processing unit 4A determines that none of the storage signals Q1_Sub1 to Q4_Sub1 include a signal corresponding to the reflected light RL, it determines not to select the first subframe Sub1 as the subframe for calculating the distance as the combined result for one frame.

On the other hand, if the range image processing unit 4A determines that two of the storage signals Q1_Sub1 to Q4_Sub1 include a signal corresponding to the reflected light RL, it determines to select the first subframe Sub1 as the subframe for calculating the distance as the combined result for one frame. Note that any method using a known technique may be used to calculate the distance, and the description thereof will be omitted here.

Fig. 14B schematically shows the storage signal Q2_Sub2 corresponding to the amount of charge stored in the charge storage CS2 in the second subframe Sub2. The storage signal Q2_Sub2 includes a signal corresponding to the amount of charge GK_Sub2 $\pm\,\beta$. The amount of charge ($\pm\,\beta$) is the variation (noise) with respect to the average of the amount of charge GK_Sub2. $\beta^2$ is the variance of the amount of charge GK_Sub2.

First, the range image processing unit 4A calculates a threshold th2 based on the magnitude of the storage signal Q2_Sub2. The threshold th2 is an example of an "indicator". As with the threshold th1, the threshold th2 is a value calculated according to the degree of variation in the external light signal corresponding to the storage signal Q2_Sub2. For example, the threshold th2 is a threshold indicating the upper limit of allowable variation in the external light signal in the second subframe Sub2. More specifically, it is a value calculated based on the variance, standard deviation, or the like of the charge corresponding to the external light component stored in the second subframe Sub2. The thresholds th1 and th2 may have different values.

Next, the range image processing unit 4A calculates an external light-subtracted signal J2 by subtracting the external light signal from the storage signal Q2_Sub2. The external light signal here is an external light signal in the second subframe Sub2 and has a variance of $\beta^2$. Since the external light signal having a variance of $\beta^2$ is subtracted from the storage signal Q2_Sub2 having a variance of $\beta^2$, the external light-subtracted signal J2 has a variance of $2\beta^2$. The external light-subtracted signal J2 contains a noise of $\pm\sqrt{2}\beta$, which is the square root of $2\beta^2$.

The range image processing unit 4A uses the external light-subtracted signal J2 and the threshold th2 to determine whether a signal corresponding to the reflected light RL is included in the storage signal Q2_Sub2. If the external light-subtracted signal J2 is equal to or smaller than the threshold th2, the range image processing unit 4A determines that a signal corresponding to the reflected light RL is not included in the storage signal Q2_Sub2. On the other hand, if the external light-subtracted signal J2 is greater than the threshold th2, the range image processing unit 4A determines that a signal corresponding to the reflected light RL is included in the storage signal Q2_Sub2.

The external light-subtracted signal J2 is a signal having a value of $(\pm\sqrt{2}\beta)$, which is noise corresponding to a combined variance of the variance of the storage signal Q2_Sub2 and the variance of the external light signal in the second subframe Sub2. In the example of this figure, the external light-subtracted signal J2 is smaller than the threshold th2. The range image processing unit 4A determines that a signal corresponding to reflected light RL is not included in the storage signal Q2_Sub2.

The range image processing unit 4A also uses the threshold th2 for the other storage signals in the second subframe Sub2, that is, the storage signals Q1_Sub2, Q3_Sub2, and Q4_Sub2 to determine whether a signal corresponding to the reflected light RL is included in the storage signal Q_Sub2.

If the range image processing unit 4A determines that none of the storage signals Q1_Sub2 to Q4_Sub2 include a signal corresponding to the reflected light RL, it determines not to select the second subframe Sub2 as the subframe for calculating the distance as the combined result for one frame.

On the other hand, if the range image processing unit 4A determines that two of the storage signals Q1_Sub2 to Q4_Sub2 include a signal corresponding to the reflected light RL, it determines to select the second subframe Sub2 as the subframe for calculating the distance as the combined result for one frame.

Fig. 14C schematically shows the storage signal Q2_Sub3 corresponding to the amount of charge stored in the charge storage CS2 in the third subframe Sub3. The storage signal Q2_Sub3 includes a signal corresponding to an amount of charge GK_Sub3 $\pm \gamma$ in addition to the amount of charge RLQ1 corresponding to part of the reflected light RL. The amount of charge $(\pm \gamma)$ is the variation (noise) with respect to the average of the amount of charge GK_Sub3. $\gamma^2$ is the variance of the amount of charge GK_Sub3.

First, the range image processing unit 4A calculates a threshold th3 based on the magnitude of the storage signal Q2_Sub3. The threshold th3 is an example of an "indicator". As with the thresholds th1 and th2, the threshold th3 is a value calculated according to the degree of variation in the external light signal in the third subframe Sub3. For example, the threshold th3 is a threshold indicating the upper limit of allowable variation in the external light signal in the third subframe Sub3. More specifically, it is a value calculated based on the variance, standard deviation, or the like of the charge corresponding to the external light component stored in the third subframe Sub3. The thresholds th1, th2, and th3 may have different values.

Next, the range image processing unit 4A calculates an external light-subtracted signal J3 by subtracting the external light signal from the storage signal Q2_Sub3. The external light signal here is an external light signal in the third subframe Sub3 and has a variance of $\gamma^2$. Since the external light signal having a variance of $\gamma^2$ is subtracted from the storage signal Q2_Sub3 having a variance of $\gamma^2$, the external light-subtracted signal J3 has a variance of $2\gamma^2$. The external light-subtracted signal J3 contains a noise of $\pm\sqrt{2}\gamma$, which is the square root of $2\gamma^2$.

The range image processing unit 4A uses the external light-subtracted signal J3 and the threshold th3 to determine whether a signal corresponding to the reflected light RL is included in the storage signal Q2_Sub3. If the external light-subtracted signal J3 is equal to or smaller than the threshold th3, the range image processing unit 4A determines that a signal corresponding to the reflected light RL is not included in the storage signal Q2_Sub3. On the other hand, if the external light-subtracted signal J3 is greater than the threshold th3, the range image processing unit 4A determines that a signal corresponding to the reflected light RL is included in the storage signal Q2_Sub3.

The external light-subtracted signal J3 is a signal corresponding to an amount of charge that is a mixture of the noise $(\pm\sqrt{2}\gamma)$ corresponding to a combined variance of the variance of the storage signal Q2_Sub3 and the variance of the external light signal in the third subframe Sub3, and the amount of charge RLQ1 corresponding to part of the reflected light RL. In the example of this figure, the external light-subtracted signal J3 is greater than the threshold th3. The range image processing unit 4A determines that a signal corresponding to the reflected light RL is included in the storage signal Q2_Sub3.

If the range image processing unit 4A determines that two of the storage signals Q1_Sub3 to Q4_Sub3 include a signal corresponding to the reflected light RL, it determines to select the third subframe Sub3 as the subframe for calculating the distance as the combined result for one frame.

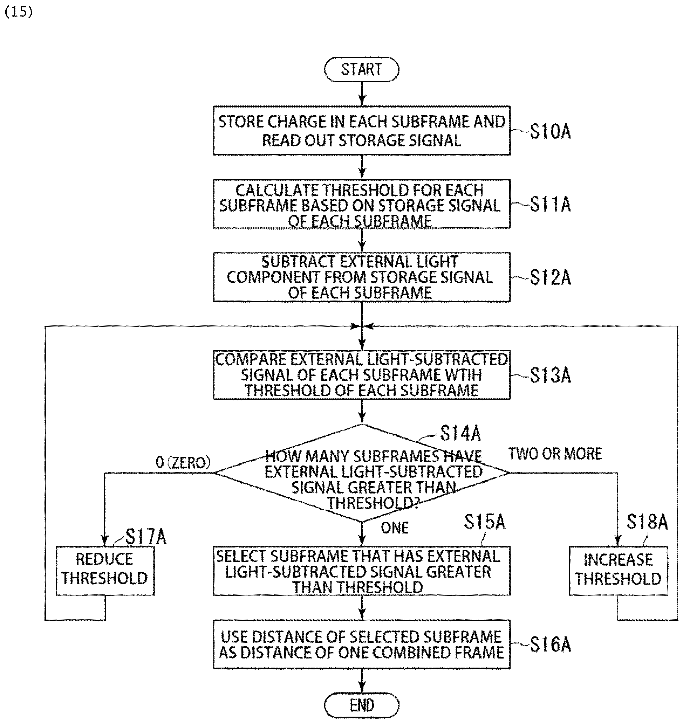

A process flow performed by the range imaging apparatus 1A will be described with reference to Fig. 15. Fig. 15 is a flowchart illustrating the process flow performed by the range imaging apparatus 1A according to the embodiment. In the following flow, general processing performed to calculate a distance, such as processing to correct the sensitivity of each charge storage CS and processing to correct the base (reference) deviation in the read-out signal value, is omitted.

Step S10A: The range imaging apparatus 1A drives each pixel 321A to store charges in the charge storages CS of the pixel 321A in each subframe at the storage timing corresponding to the subframe, and reads out the storage signal corresponding to the amount of stored charge.

Step S11A: The range imaging apparatus 1A calculates the threshold th for each subframe based on the storage signal of each subframe.

Step S12A: The range imaging apparatus 1A calculates the external light-subtracted signal by subtracting the external light component from the storage signal of each subframe.

Step S13A: The range imaging apparatus 1A compares the external light-subtracted signal of each subframe with the threshold th of each subframe.

Step S14A: The range imaging apparatus 1A determines the number of subframes having an external light-subtracted signal greater than the threshold th for each subframe. For example, the range imaging apparatus 1A determines whether there is a subframe having an external light-subtracted signal greater than the threshold th, and if there is, determines whether there is one, or two or more subframes having an external light-subtracted signal greater than the threshold th.

Step S15A: When there is one subframe having an external light-subtracted signal greater than the threshold th, the range imaging apparatus 1A selects the only subframe having an external light-subtracted signal greater than the threshold.

Step S16A: The range imaging apparatus 1A calculates the distance for a single combined frame based on the storage signal of the selected subframe. For example, the range imaging apparatus 1A calculates the distance by using the storage signal of the selected subframe, and uses the calculated distance as the distance (combined result) corresponding to the measurement result for one frame.

Step S17A: When there is no subframe having an external light-subtracted signal greater than the threshold th, the range imaging apparatus 1A reduces the threshold and returns to the process shown in step S13A.

Step S18A: When there are two or more subframes having an external light-subtracted signal greater than the threshold th, the range imaging apparatus 1A increases the threshold and returns to the process shown in step S13A.

Fig. 15 illustrates an example in which the threshold is changed when the subframe having an external light-subtracted signal greater than the threshold th cannot be unambiguously identified. However, the present invention is not limited to this. A subframe for calculating the distance may not be selected when the subframe having an external light-subtracted signal greater than the threshold th cannot be unambiguously identified.

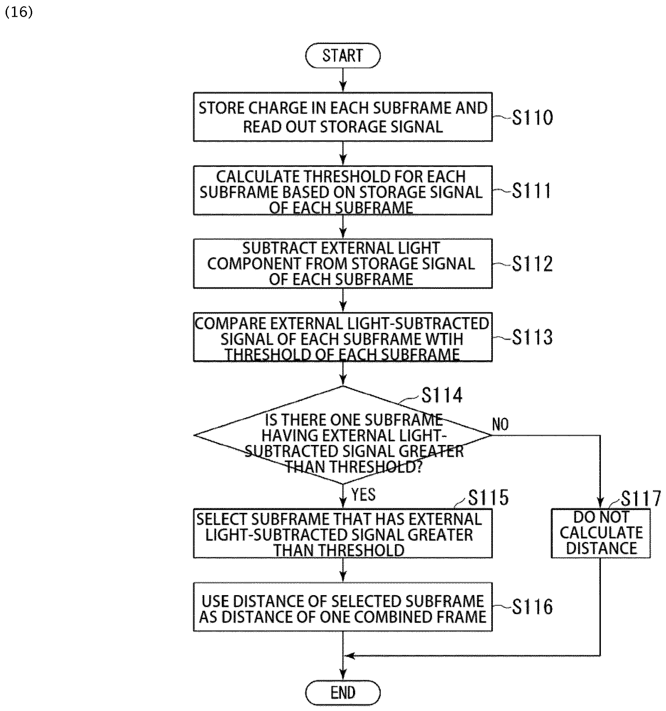

Another process flow performed by the range imaging apparatus 1A will be described with reference to Fig. 16. Fig. 16 is a flowchart illustrating the process flow performed by the range imaging apparatus 1A according to the embodiment. Similarly to Fig. 15, the general processing performed to calculate the distance is omitted in Fig.16. In addition, since the processes shown in steps S110 to S113 and S115 to S116 in Fig. 16 are the same as those shown in steps S10A to S13 and S15 to S16 in Fig. 15, description thereof will be omitted.

Step S114: The range imaging apparatus 1A determines whether there is only one subframe having an external light-subtracted signal greater than the threshold th, that is, whether such subframe can be unambiguously identified.

Step S117: If there is not only one subframe having an external light-subtracted signal greater than the threshold th, that is, if there is no subframe having an external light-subtracted signal greater than the threshold th or there are two or more such subframes, the range imaging apparatus 1A does perform distance measurement for that pixel 321A.

As described above, in the range imaging apparatus 1A of this embodiment, a plurality of subframes are provided for each frame. The range image processing unit 4A calculates the threshold th for each of the plurality of subframes based on the storage signal Q. The storage signal Q is a signal corresponding to the amount of charge stored in a charge storage CS. The threshold th is an indicator of the degree of variation in the external light signal corresponding to the external light component stored in a charge storage CS. The range image processing unit 4A selects a subframe for calculating the distance from the plurality of subframes based on the respective storage signals Q and thresholds th for the plurality of subframe.

This allows the range imaging apparatus 1A of the embodiment to determine whether reflected light is included in a storage signal Q by using the threshold th calculated for each subframe. The threshold th is a value calculated according to the degree of variation in the external light component stored in each subframe. Therefore, when the signal (external light-subtracted signal) obtained by subtracting the external light component from the storage signal Q shows a meaningful value, it is possible to determine whether the external light-subtracted signal is caused by variation in the external light component or caused by the reflected light RL based on the threshold th set for each subframe. This means that, even if there is a large variation in the external light component, the decision can be made using the threshold based on that variation, which makes it possible to correctly identify the subframe in which the charge corresponding to the reflected light RL was stored during sub-frame operation.

In the range imaging apparatus 1A of the embodiment, the range image processing unit 4A calculates the threshold th based on the variance of the external light component as an indicator. The range image processing unit 4A selects, from the plurality of subframes, a subframe having an external light-subtracted signal (signal obtained by subtracting the external light signal from the storage signal Q) greater than the threshold th as the subframe for calculating the distance. This allows the range imaging apparatus 1A of the embodiment to make a decision using the threshold th based on the variance of the external light component, and provide the same effects as those described above.

In the range imaging apparatus 1A of the embodiment, the range image processing unit 4A calculates the threshold th based on the noise of the external light component as an indicator. The noise here is an example of the "degree of variation", and is the square root of the variance, which corresponds to the standard deviation. The range image processing unit 4A selects, from the plurality of subframes, a subframe having an external light-subtracted signal greater than the threshold th as the subframe for calculating the distance. This allows the range imaging apparatus 1A of the embodiment to make a decision using the threshold th based on the noise of the external light component, and provide the same effects as those described above.

In the above embodiment, the range image processing unit 4A may reduce the threshold th when there is no subframe having an external light-subtracted signal greater than the threshold th among the plurality of subframes. This allows the range imaging apparatus 1A of the embodiment to reduce the threshold th when there is no subframe having an external light-subtracted signal greater than the threshold th, so that a subframes having an external light-subtracted signal greater than the threshold th can be identified. Any method may be used to reduce the threshold th. For example, one possible method is to gradually reduce the threshold th by multiplying it by 0.9, 0.8, 0.7, and so on until there is a subframe having an external light-subtracted signal greater than the threshold th.

In the above embodiment, the range image processing unit 4A may increase the threshold th when there are two or more subframes having an external light-subtracted signal greater than the threshold th among the plurality of subframes. This allows the range imaging apparatus 1A of the embodiment to increase the threshold th when there are two or more subframes having an external light-subtracted signal greater than the threshold th, so that a subframes having an external light-subtracted signal greater than the threshold th can be unambiguously identified. Any method may be used to increase the threshold th. For example, one possible method is to gradually increase the threshold th by multiplying it by 1.2, 1.4, 1.6, and so on until there is a subframe having an external light-subtracted signal greater than the threshold th.

In the above embodiment, the range image processing unit 4A may be configured not to select a subframe for calculating the distance when there is no subframe having an external light-subtracted signal greater than the threshold. The range image processing unit 4A may be configured not to select a subframe for calculating the distance when there are two or more subframes having an external light-subtracted signal greater than the threshold. This allows the range imaging apparatus 1A of the embodiment to avoid calculating the distance based on a spurious signal. This in turn makes it possible to prevent erroneously identifying a subframe as the subframe in which charge corresponding to the reflected light RL was stored, and calculating an erroneous distance based on the storage signal of the erroneously identified subframe.

Note that if the distance is calculated for a particular pixel 321A, a subframe having an external light-subtracted signal greater than the threshold cannot be unambiguously identified, the distance for that pixel 321A is indefinite, that is, not calculated. Alternatively, if the range image processing unit 4A cannot unambiguously identify a subframe having an external light-subtracted signal greater than the threshold, it may calculate the distance for that pixel 321A by interpolation using the distances of nearby pixels 321A.

All or part of the range imaging apparatus 1A and the range image processing unit 4A according to the above-described embodiment may be achieved by a computer. In this case, a program that achieves this function may be recorded on a computer-readable recording medium so that a computer system can read and run the program recorded on the recording medium. The "computer system" referred to herein includes an operating system (OS) and hardware such as peripheral devices. The "computer-readable recording medium" refers to a storage device such as a portable medium, e.g., a flexible disk, a magneto-optical disk, a ROM, a CD-ROM or the like, or a hard disk incorporated in the computer system. The "computer-readable recording medium" may include a medium that dynamically retains a program for a short period of time, such as a communication line that transmits a program through a network such as the internet or a telecommunication line such as a telephone line, or a medium that retains the program for a given period of time in that case, such as a volatile memory of a computer system that serves as a server or a client. The above programs may achieve part of the functions described above, or may achieve the functions in combination with programs already recorded in a computer system, or may achieve the functions by using a programmable logic device, such as an FPGA.

The embodiment of the present invention has been specifically described so far referring to the drawings. However, the specific configurations are limited to the embodiment but may include designs, device configurations, correction, filtering, and the like within the scope not departing from the spirit of the present invention.

(Third Embodiment)

A range imaging apparatus according to a third embodiment will be described below with reference to the drawings.

The range image processing unit 4B of this embodiment is provided with an additional control that will be described later in addition to the control of the range image processing unit 4 of the first embodiment or the range image processing unit 4A of the second embodiment.

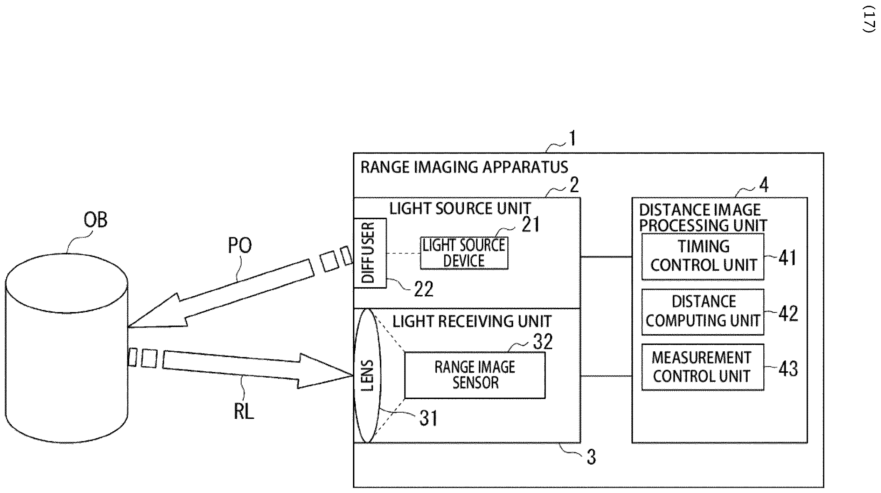

Fig. 17 is a block diagram illustrating a schematic configuration of the range imaging apparatus according to the embodiment. The range imaging apparatus 1B includes, for example, a light source unit 2B, a light receiving unit 3B, and a range image processing unit 4B. Fig. 17 also illustrates a subject OB the distance to which will be measured by the range imaging apparatus 1B.

In response to a control procedure performed by the range image processing unit 4B, the light source unit 2B emits a light pulse PO into a measurement space in which the subject OB exists the distance to which is to be measured by the range imaging apparatus 1B. The light source unit 2B may be, for example, a surface emitting semiconductor laser module such as a vertical cavity surface emitting laser (VCSEL). The light source unit 2B includes a light source device 21B and a diffuser 22B.

The light source device 21B is a light source that emits a laser beam in a near-infrared wavelength band (for example, a wavelength band in which the wavelength is 850 nm to 940 nm), which serves as the light pulse PO emitted to the subject OB. The light source device 21B may be, for example, a semiconductor laser beam emitting device. The light source device 21B emits a pulsed laser beam according to control by a timing control unit 41.

The diffuser 22B is an optical component that diffuses the laser beam in a near-infrared wavelength band emitted from the light source device 21B over an area in which the subject OB is irradiated with the diffused laser beam. The pulsed laser beam diffused by the diffuser 22B is output as the light pulse PO and emitted to the subject OB.

The light receiving unit 3B receives reflected light RL of the light pulse PO reflected from the subject OB the distance to which will be measured by the range imaging apparatus 1B and outputs a pixel signal corresponding to the received reflected light RL. The light receiving unit 3B includes a lens 31B and a range image sensor 32B.

The lens 31B is an optical lens that guides the reflected light RL incident on the lens 31B to the range image sensor 32B. The lens 31B outputs the reflected light RL that is incident on the lens 31B toward the range image sensor 32B and causes pixels provided in a light-receiving region of the range image sensor 32B to receive the reflected light RL (or makes the reflected light RL incident on the pixels).

The range image sensor 32B is an imaging element used in the range imaging apparatus 1B. The range image sensor 32B includes a plurality of pixels in a two-dimensional light-receiving region. Each pixel of the range image sensor 32B includes a single photoelectric conversion device, a plurality of charge storages corresponding to the single photoelectric conversion device, and a component that distributes electric charges to the charge storages. That is, the pixels are imaging elements of a distributing structure that distributes and stores the electric charge to the charge storages.

The range image sensor 32B distributes charge generated by the photoelectric conversion device to each of the charge storages, according to control by the timing control unit 41B. Additionally, the range image sensor 32B outputs a pixel signal corresponding to the amount of charge that has been distributed to each charge storage. The range image sensor 32B includes a plurality of pixels arranged in a two-dimensional matrix and outputs a pixel signal for one frame corresponding to each pixel.

The range image processing unit 4B controls the range imaging apparatus 1B to compute the distance to the subject OB. The range image processing unit 4B includes the timing control unit 41B, a range computing unit 42B, and a measurement control unit 43B.

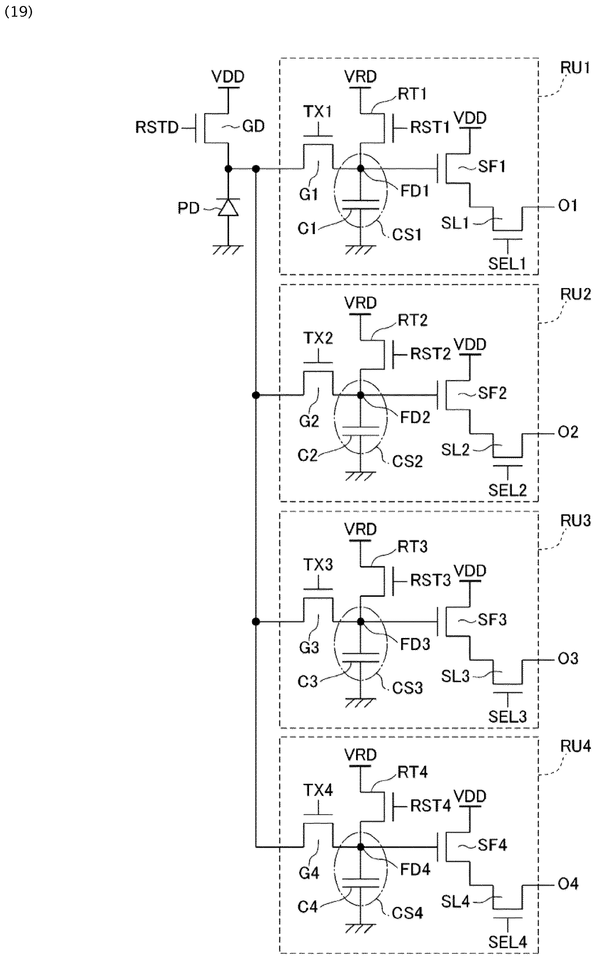

The timing control unit 41B controls the timings at which a variety of control signals required for the measurement are output in response to the control procedure performed by the measurement control unit 43B. The variety of signals as used herein refer to, for example, a signal for controlling the emission of the light pulse PO, a signal for distributing and storing the reflected light RL to the charge storages, and a signal for controlling the storage count per frame. The storage count is the number of times the process of distributing and storing charge to the charge storages CS (see Fig. 19) is repeated. The product of the storage count and the time (storage time) for which charge is stored in the charge storages during each process of distributing and storing charge is the storage time.

The range computing unit 42 outputs distance information obtained by calculating the distance to the subject OB, based on the pixel signal output from the range image sensor 32B. The range computing unit 42B calculates a delay time from the time at which the light pulse PO is emitted to the time at which the reflected light RL is received, based on the amount of charge stored in the plurality of charge storages. The range computing unit 42B calculates the distance to the subject OB in accordance with the calculated delay time.

The measurement control unit 43B controls the timing control unit 41B. For example, the measurement control unit 43B sets the storage count per frame and the storage time to control the timing control unit 41B so that the image capturing is performed according to the settings.

With this configuration, the range imaging apparatus 1B causes the light source unit 2B to emit the light pulse PO in the near-infrared wavelength band to the subject OB, causes the light receiving unit 3B to receive the reflected light RL reflected from the subject OB, and causes the range image processing unit 4B to measure the distance to the subject OB and output as the range information.

Fig. 17 shows the range imaging apparatus 1B in which the range image processing unit 4B is included; however, the range image processing unit 4B may be a component provided outside the range imaging apparatus 1B.

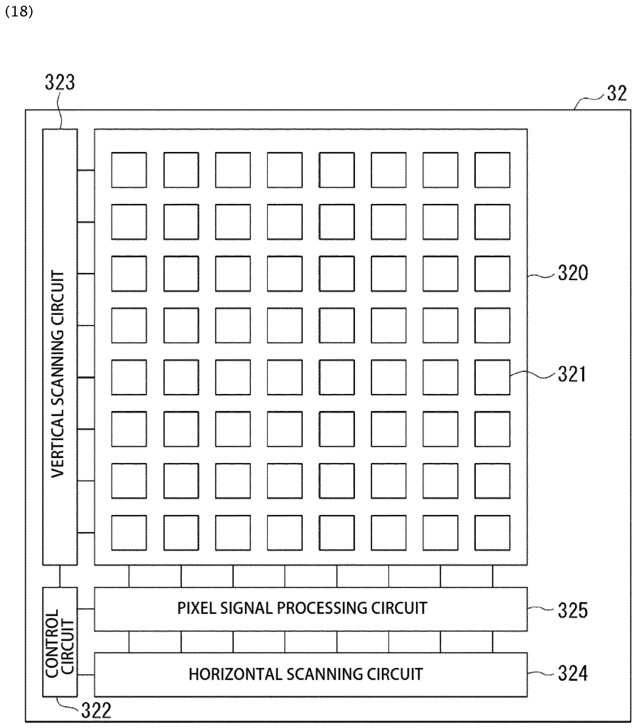

Next, a configuration of the range image sensor 32B used as an imaging element in the range imaging apparatus 1B will be described with reference to Fig. 18. Fig. 18 is a block diagram illustrating the schematic configuration of the imaging element (range image sensor 32B) used in the range imaging apparatus 1B of the embodiment.

As illustrated in Fig. 18, the range image sensor 32B includes, for example, a light-receiving region 320B, which includes multiple pixels 321B, a control circuit 322B, a vertical scanning circuit 323B, which has distribution operation, a horizontal scanning circuit 324B, and a pixel signal processing circuit 325B.

The light-receiving region 320B is a region in which the pixels 321B are arranged. Fig. 18 illustrates an example in which the pixels 321B are arranged in a two-dimensional matrix of 8 rows and 8 columns. The pixels 321B store charge corresponding to the amount of light received. The control circuit 322B comprehensively controls the range image sensor 32B. For example, the control circuit 322B controls the operation of the components of the range image sensor 32B according to instructions from the timing control unit 41B of the range image processing unit 4B. Note that the components of the range image sensor 32B may be directly controlled by the timing control unit 41B, in which case the control circuit 322B may be omitted.

The vertical scanning circuit 323B is a circuit that controls the pixels 321B arranged in the light-receiving region 320B row by row in response to the control procedure performed by the control circuit 322B. The vertical scanning circuit 323B causes the pixel signal processing circuit 325B to output a voltage signal corresponding to the amount of charge accumulated in each of the charge storages CS of each pixel 321B. In this case, the vertical scanning circuit 323B distributes and stores the charge converted by the photoelectric conversion device to each of the charge storages of each pixel 321B. That is, the vertical scanning circuit 323B is an example of a "pixel driver circuit".

The pixel signal processing circuit 325B is a circuit that performs predetermined signal processing (for example, noise suppression and A/D conversion) on voltage signals output from the pixels 321B of each column to a corresponding vertical signal line in response to the control procedure performed by the control circuit 322B.

The horizontal scanning circuit 324B is a circuit that sequentially outputs, to a horizontal signal line, the signal output from the pixel signal processing circuit 325B in response to the control procedure performed by the control circuit 322B. Accordingly, the pixel signal corresponding to the amount of charge accumulated per frame is sequentially output to the range image processing unit 4B via the horizontal signal line.

The following description is based on a precondition that the pixel signal processing circuit 325B has performed A/D conversion, so that the pixel signal is a digital signal.

The configuration of the pixels 321B arranged in the light-receiving region 320B of the range image sensor 32B will now be described with reference to Fig. 19. Fig. 19 is a circuit diagram illustrating an exemplary configuration of the pixels 321B arranged in the light-receiving region 320B of the range image sensor 32B according to the embodiment. Fig. 19 illustrates an exemplary configuration of one of the pixels 321B arranged in the light-receiving region 320B. The pixel 321B is an exemplary configuration including four pixel signal readout units.

The pixel 321B includes a single photoelectric conversion device PD, drain gate transistors GD, and four pixel signal readout units RU each of which outputs a voltage signal from the corresponding output terminal O. The pixel signal readout units RU each include a readout gate transistor G, a floating diffusion FD, a charge storage capacitor C, a reset gate transistor RT, a source follower gate transistor SF, and a selection gate transistor SL. In each pixel signal readout unit RU, the floating diffusion FD and the charge storage capacitor C constitute a charge storage CS.

In Fig. 19, a numerical value "1", "2", "3", or "4" is appended after the reference sign "RU" of the four pixel signal readout units RU to distinguish the pixel signal readout units RU from one another. Similarly, the numerical values are also appended after the reference signs of the components of the four pixel signal readout units RU to express the components by distinguishing the pixel signal readout units RU with which they are associated.

In the pixel 321B shown in Fig. 19, the pixel signal readout unit RU1 that outputs a voltage signal from an output terminal O1 includes a readout gate transistor G1, a floating diffusion FD1, a charge storage capacitor C1, a reset gate transistor RT1, a source follower gate transistor SF1, and a selection gate transistor SL1. In the pixel signal readout unit RU1, the floating diffusion FD1 and the charge storage capacitor C1 constitute a charge storage CS1. The pixel signal readout units RU2 to RU4 also have the same configuration.

The photoelectric conversion device PD is an embedded photodiode that performs photoelectric conversion of the incident light to generate electric charge and accumulates the generated electric charge. The photoelectric conversion device PD may have any configuration. The photoelectric conversion device PD may be, for example, a PN photodiode including a P-type semiconductor and an N-type semiconductor joined together or a PIN photodiode including an I-type semiconductor sandwiched between a P-type semiconductor and an N-type semiconductor. The photoelectric conversion device PD is not limited to a photodiode and may be, for example, a photogate-type photoelectric conversion device.

In each pixel 321B, the charge generated by the photoelectric conversion of the incident light performed by the photoelectric conversion device PD is distributed to the four charge storages CS. Voltage signals each corresponding to the amount of charge that has been distributed are output to the pixel signal processing circuit 325B.

The configuration of the pixels arranged in the range image sensor 32B is not limited to the configuration including four pixel signal readout units RU as illustrated in Fig. 19 and may be any configuration including multiple pixel signal readout units RU. That is, the number of the pixel signal readout units RU (charge storages CS) included in each pixel located in the range image sensor 32B may be two, three, or five or more.

Further, the pixel 321B configured as illustrated in Fig. 19 shows an exemplary configuration in which each charge storage CS includes the floating diffusion FD and the charge storage capacitor C. However, each charge storage CS may have any configuration as long as at least the floating diffusion FD is included, and each pixel 321B does not need to include the charge storage capacitor C.

Although the pixel 321B having the configuration shown in Fig. 19 shows an exemplary configuration including drain gate transistors GD, the drain gate transistors GD may not be provided if there is no need to discard the charge stored (remaining) in the photoelectric conversion device PD.

In this embodiment, a plurality of subframes are provided for each frame. The plurality of subframes include a first subframe and a second subframe. The range image processing unit 4B controls the storage timings so that the storage timing at which charge is stored in the charge storages CS of the pixel 321B in the first subframe is earlier than the storage timing in the second subframe. This makes it possible to calculate the distance to a relatively close subject OB in the first subframe and the distance to a relatively distant subject OB in the second subframe. Therefore, such a subframe configuration enables increasing the measurable range.

In the embodiment, the storage count in each subframe is different. It is known that the intensity of light is inversely proportional to the square of distance. For example, when the reflected light RL reflected from a relatively close subject OB is received in the first subframe, the intensity of the reflected light is high. On the other hand, when the reflected light RL reflected from a relatively distant subject OB is received in the second subframe, the intensity of the reflected light is low. In the case the first and second subframes have the same integration count, if the integration count is set so that an appropriate amount of charge is stored in the charge storages CS of the pixel 321B in the first subframe, the amount of charge stored in the charge storages CS of the pixel 321B in the second subframe will be small, which leads to an error. On the other hand, if the integration count is set so that an appropriate amount of charge is stored in the charge storages CS of the pixel 321B in the second subframe, the amount of charge stored in the charge storages CS of the pixel 321B in the first subframe will be large, which leads to saturation and makes it difficult to calculate the distance. To address this, the present embodiment controls the storage count to be different in each subframe. Specifically, the range image processing unit 4B controls the integration count so that it is smaller in the first subframe than in the second subframe.

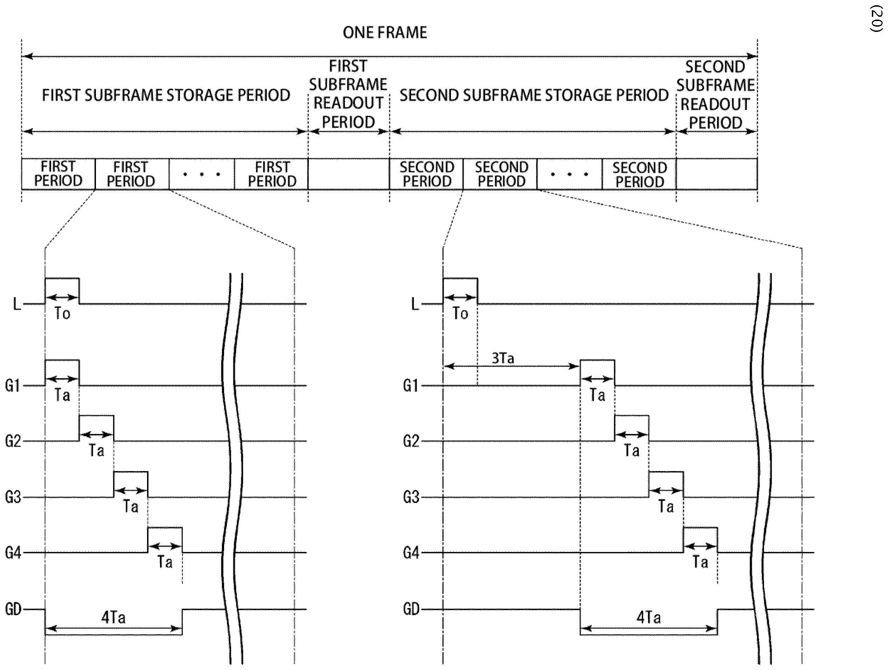

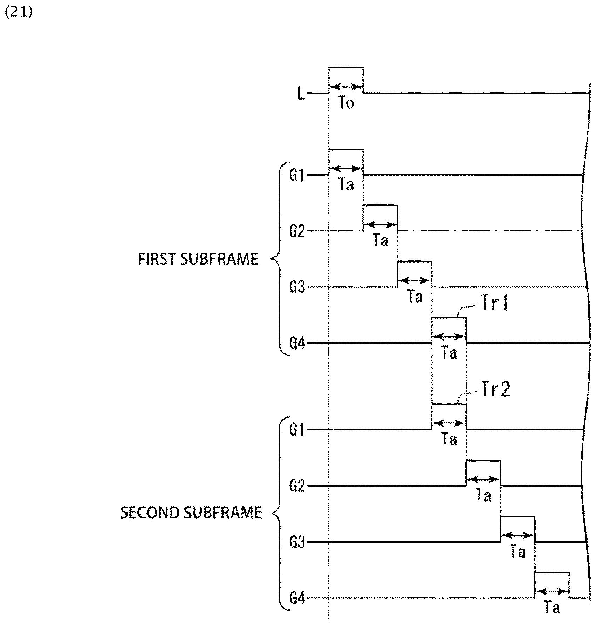

Next, the timings at which the pixel 321B is driven will be described using Figs. 20 and 21. Figs. 20 and 21 are timing charts illustrating timings at which each pixel 321B of the embodiment is driven. Fig. 20 shows an example in which the first and second subframes are provided in one frame. That is, one frame includes the first and second subframes, and readout periods.

In Figs. 20 and 21, the timing at which the light pulse PO is emitted is indicated by "L", the timing of a drive signal TX1 is indicated by "G1", the timing of a drive signal TX2 is indicated by "G2", the timing of a drive signal TX3 is indicated by "G3", the timing of a drive signal TX4 is indicated by "G4", and the timing of a drive signal RSTD is indicated by "GD". The drive signal TX1 is a signal that drives the readout gate transistor G1. The same applies to the drive signals TX2 to TX4.

As shown in Fig. 20, a light pulse PO is emitted with an irradiation time To. First, in the "first subframe", in synchronization with the emission of the light pulse PO, the vertical scanning circuit 323B repeats a "first period" in which charges are stored in the charge storages CS1, CS2, CS3, and CS4 in each pixel 321B in this order, for a predetermined storage count (first storage count). Next, in the "first subframe readout period", the vertical scanning circuit 323B reads out a voltage signal corresponding to the amount of charge accumulated in each pixel 321B as the signal value. Then, in the "second subframe", in synchronization with the emission of the light pulse PO, the vertical scanning circuit 323B repeats a "second period" in which charges are stored in the charge storages CS1, CS2, CS3, and CS4 in each pixel 321B in this order, for a predetermined storage count (second storage count). In the "second subframe readout period", the vertical scanning circuit 323B reads out a voltage signal corresponding to the amount of charge accumulated in each pixel 321B as the signal value.

The timing at which the vertical scanning circuit 323B stores charge in the pixel 321B will be described.

First, at the same timing as when the light pulse PO is emitted, the vertical scanning circuit 323B brings the drain gate transistor GD of the pixel 321B adapted for the first subframe into an off state and brings the readout gate transistor G1 into an on state. After keeping the readout gate transistor G1 in the on state for a storage time Ta, the vertical scanning circuit 323B brings the readout gate transistor G1 into the off state. Thus, while the readout gate transistor G1 is controlled to be in the on state, the electric charge obtained by the photoelectric conversion by the photoelectric conversion device PD is accumulated in the charge storage CS1 through the readout gate transistor G1. Note that the storage time Ta is a period for storing charge in the charge storage CS, and does not necessarily need to be the same period as the gate transistor ON period (period during which the gate transistor G is in the on period). For example, control may be performed so that the gate transistor ON period is provided after a short gap period (a gate OFF period, that is, a period during which the gate transistor G is in the off state), and the total period of the gap period and the gate transistor ON period may serve as the storage time Ta.

Next, at the timing at which the readout gate transistor G1 is brought into the off state, the vertical scanning circuit 323B brings the readout gate transistor G2 into the on state for the storage time Ta. Thus, while the readout gate transistor G2 is controlled to be in the on state, the electric charge obtained by the photoelectric conversion by the photoelectric conversion device PD is accumulated in the charge storage CS2 through the readout gate transistor G2.

Next, at the timing at which the storage of charge into the charge storage CS2 is finished, the vertical scanning circuit 323B brings the readout gate transistor G3 into the on state for the storage time Ta, and then brings the readout gate transistor G3 into the off state. Thus, while the readout gate transistor G3 is controlled to be in the on state, the electric charge obtained by the photoelectric conversion by the photoelectric conversion device PD is accumulated in the charge storage CS3 through the readout gate transistor G3.

Next, at the timing at which the storage of charge into the charge storage CS3 is finished, the vertical scanning circuit 323B brings the readout gate transistor G4 into the on state for the storage time Ta, and then brings the readout gate transistor G4 into the off state. Thus, while the readout gate transistor G4 is controlled to be in the on state, the electric charge obtained by the photoelectric conversion by the photoelectric conversion device PD is accumulated in the charge storage CS4 through the readout gate transistor G4.

Next, at the timing at which the storage of the electric charge to the charge storage CS4 is finished, the vertical scanning circuit 323B brings the drain gate transistor GD into the on state to drain the charge. This allows the charge generated through photoelectric conversion by the photoelectric conversion device PD to be discarded via the drain gate transistor GD.

The vertical scanning circuit 323B repeats the above-described operation for the predetermined storage count (first storage count) set for the first subframe.

After the accumulation of charges in the pixels 321B by the first sub-frame operation is completed, the vertical scanning circuit 323B outputs voltage signals each corresponding to the amount of charge provided to a charge storage CS. Specifically, the vertical scanning circuit 323B brings the selection gate transistor SL1 into the on state for a predetermined time to output from the output terminal O1 a voltage signal corresponding to the amount of charge accumulated in the charge storage CS1 through the pixel signal readout unit RU1. Similarly, the vertical scanning circuit 323B sequentially brings the selection gate transistors SL2 and SL3 into the on state to output voltage signals corresponding to the amounts of charge accumulated in the charge storages CS2 and CS3 through output terminals O2 and O3. The voltage signals corresponding to the amounts of charge accumulated in the charge storages CS are output as signal values to the range computing unit 42B via the pixel signal processing circuit 325B and the horizontal scanning circuit 324B.

Next, with a delay of a predetermined delay time (storage time Ta x 3) after the timing at which the light pulse PO is emitted, the vertical scanning circuit 323B brings the drain gate transistor GD of the pixel 321B adapted for the second subframe into an off state and brings the readout gate transistor G1 into an on state. Since the actions taken after turning on the readout gate transistor G1, that is, the timings at which the vertical scanning circuit 323B turns on or off the readout gate transistors G1 to G4 and the drain gate transistor GD are the same as in the first subframe, description thereof is omitted. The vertical scanning circuit 323B repeats the above-described operation for the predetermined storage count (second storage count) set for the second subframe.

After the accumulation of charges in the pixels 321B by the second sub-frame operation is completed, the vertical scanning circuit 323B outputs voltage signals each corresponding to the amount of charge provided to a charge storage CS. Specifically, the vertical scanning circuit 323B brings the selection gate transistor SL1 into the on state for a predetermined time to output from the output terminal O1 a voltage signal corresponding to the amount of charge accumulated in the charge storage CS1 through the pixel signal readout unit RU1. Similarly, the vertical scanning circuit 323B sequentially brings the selection gate transistors SL2 and SL3 into the on state to output voltage signals corresponding to the amounts of charge accumulated in the charge storages CS2 and CS3 through output terminals O2 and O3. The voltage signals corresponding to the amounts of charge accumulated in the charge storages CS are output as signal values to the range computing unit 42B via the pixel signal processing circuit 325B and the horizontal scanning circuit 324B.

As shown in Fig. 20, in this embodiment, a plurality of subframes are provided for each frame.

In the example of Fig. 20, the first and second subframes are provided in a single frame. The first subframe occurs earlier than the second subframe, and charges are accumulated in the charge storages CS of the pixel 321B in the first subframe. The second subframe occurs later than the first subframe, and charges are accumulated in the charge storages CS of the pixel 321B in the second subframe. The range image processing unit 4B delays the storage timing of the pixel 321B in the second subframe by a predetermined delay time (storage time Ta x 3) relative to the storage timing of the pixel 321B in the first subframe, using the emission timing of the light pulse PO as a reference.

Fig. 21 shows the timings at which the readout gate transistors G1 to G4 are turned on or off in each of the first and second subframes with respect to the timing at which the light pulse PO is emitted.

As shown in Fig. 21, in this embodiment, the opening/closing timing (Tr1) of the gate transistor G4 in the first subframe and the opening/closing timing (Tr2) of the gate transistor G1 in the second subframe are controlled to be the same with respect to the timing at which the light pulse PO is emitted. The opening/closing timing (Tr1) of the gate transistor G4 in the first subframe is the latest storage timing in the first subframe, and is an example of "last storage timing". The opening/closing timing (Tr2) of the gate transistor G1 in the second subframe is the earliest storage timing in the second subframe, and is an example of "first storage timing".

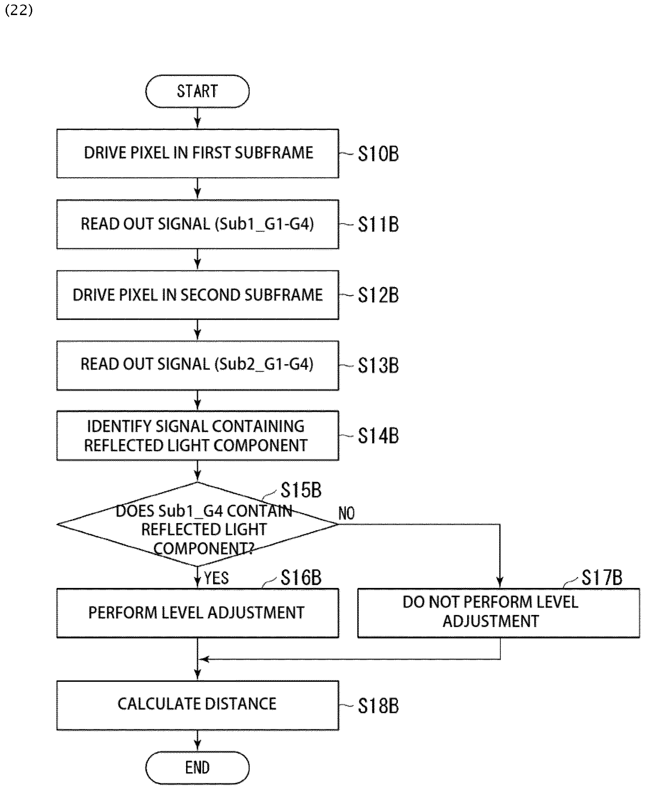

A process flow performed by the range imaging apparatus 1B will be described with reference to Fig. 22. Fig. 22 is a flowchart illustrating the process flow performed by the range imaging apparatus 1B according to the embodiment.

Step S10B: The range imaging apparatus 1B drives the pixel 321B in the first subframe. As a result, charges are stored in the charge storages CS of the pixel 321B at storage timings according to the first subframe.

Step S11B: The range imaging apparatus 1B reads out signals (Sub1_G1 to G4) during the first subframe readout period.

The signal Sub1_G1 is a signal value corresponding to the amount of charge stored in the charge storage CS1 of the pixel 321B in the first subframe. The signal Sub1_G2 is a signal value corresponding to the amount of charge stored in the charge storage CS2 of the pixel 321B in the first subframe. The signal Sub1_G3 is a signal value corresponding to the amount of charge stored in the charge storage CS3 of the pixel 321B in the first subframe. The signal Sub1_G4 is a signal value corresponding to the amount of charge stored in the charge storage CS4 of the pixel 321B in the first subframe.

Step S12B: The range imaging apparatus 1B drives the pixel 321B in the second subframe. As a result, charges are stored in the charge storages CS of the pixel 321B at storage timings according to the second subframe.

Step S13B: The range imaging apparatus 1B reads out signals (Sub2_G1 to G4) during the second subframe readout period.

The signal Sub2_G1 is a signal value corresponding to the amount of charge stored in the charge storage CS1 of the pixel 321B in the second subframe. The signal Sub2_G2 is a signal value corresponding to the amount of charge stored in the charge storage CS2 of the pixel 321B in the second subframe.

The signal Sub2_G3 is a signal value corresponding to the amount of charge stored in the charge storage CS3 of the pixel 321B in the second subframe. The signal Sub2_G4 is a signal value corresponding to the amount of charge stored in the charge storage CS4 of the pixel 321B in the second subframe.

Step S14B: The range imaging apparatus 1B identifies a signal including the reflected light component from among the signals (Sub1_G1 to G4 and Sub2_G1 to G4).

The range imaging apparatus 1B can use, for example, the following method to identify the signal including the reflected light component.

The range imaging apparatus 1B calculates, for each of the first and second subframes, a signal value (external light signal value) corresponding to the amount of charge of the external light component.

For example, the range imaging apparatus 1B selects the smallest value among the signal values of the signals (Sub1_G1 to G4) as the external light signal value (external light signal value 1) corresponding to the first subframe. The range imaging apparatus 1B identifies a signal having a value greater than the external light signal value 1 from among the signals (Sub1_G1 to G4) as a signal including the reflected light component.

Further, the range imaging apparatus 1B selects the smallest value among the signal values of the signals (Sub2_G1 to G4) as the external light signal value (external light signal value 2) corresponding to the second subframe. The range imaging apparatus 1B identifies a signal having a value greater than the external light signal value 2 from among the signals (Sub2_G1 to G4) as a signal including the reflected light component.

In this case, the range imaging apparatus 1B may identify, from among the signal values of the signals (Sub1_G1 to G4), a signal having a value that is greater than the external light signal value 1 by a threshold or more as a signal including the reflected light component. Since the external light component may contain noise, even if the signal has a value larger than the external light signal value, if the difference between the signal and the external light signal value is not so large, it may not contain a reflected light component. By setting a threshold, it becomes possible to separate a signal containing a reflected light component from a signal containing noise.

Also for the second subframe, the range imaging apparatus 1B may identify, from among the signal values of the signals (Sub2_G1 to G4), a signal having a value that is greater than the external light signal value 2 by a threshold or more as a signal including the reflected light component.

Alternatively, for the first subframe, the range imaging apparatus 1B may perform control so that only an amount of charge corresponding to the external light component is stored in a specific charge storage CS, and use the signal value corresponding to the amount of charge stored in the specific charge storage CS as the external light signal value 1. For example, before emitting the light pulse PO, the range imaging apparatus 1B turns on a gate transistor corresponding to a specific charge storage CS, for example, the gate transistor G1 corresponding to the charge storage CS1 for a predetermined time (storage time Ta) in order to store only the amount of charge corresponding to the external light component in the specific charge storage CS. In this case, the range imaging apparatus 1B uses the signal value corresponding to the amount of charge stored in the charge storage CS1 of the pixel 321B in the first subframe as the external light signal value 1.

Step S15B: The range imaging apparatus 1B determines whether the signal Sub1_G4 includes a reflected light component. If the signal Sub1_G4 is identified as a signal including a reflected light component in step S12B, the range imaging apparatus 1B determines that the signal Sub1_G4 includes a reflected light component. On the other hand, if the signal Sub1_G4 is not identified as a signal including a reflected light component in step S12B, the range imaging apparatus 1B determines that the signal Sub1_G4 does not include a reflected light component. Note that in this case, the range imaging apparatus 1B may determine whether the signal Sub2_G1 includes a reflected light component.

Step S16B: If the signal Sub1_G4 includes a reflected light component, the range imaging apparatus 1B performs level adjustment. The level adjustment is to equalize the signal level corresponding to the amount of charge stored in a charge storage CS in the first subframe with the signal level corresponding to the amount of charge stored in the charge storage CS in the second subframe.

The range imaging apparatus 1B performs the level adjustment using the following equation (1).

$$Sub1\_G1\# = \alpha \times Sub1\_G1$$

$$Sub1\_G2\# = \alpha \times Sub1\_G2$$

$$Sub1\_G3\# = \alpha \times Sub1\_G3$$

$$Sub1\_G4\# = \alpha \times Sub1\_G4$$

$$\alpha = Sub2\_G1/Sub1\_G4$$

$$...(1)$$

In equation (1), the signal Sub1_G1 is a signal value corresponding to the amount of charge stored in the charge storage CS1 of the pixel 321B in the first subframe.

The signal Sub1_G2 is a signal value corresponding to the amount of charge stored in the charge storage CS2 of the pixel 321B in the first subframe.

The signal Sub1_G3 is a signal value corresponding to the amount of charge stored in the charge storage CS3 of the pixel 321B in the first subframe.

The signal Sub1_G4 is a signal value corresponding to the amount of charge stored in the charge storage CS4 of the pixel 321B in the first subframe.

The signal Sub2_G1 is a signal value corresponding to the amount of charge stored in the charge storage CS1 of the pixel 321B in the second subframe.

The signal Sub1_G1# is a corrected value of the signal Sub1_G1.

The signal Sub1_G2# is a corrected value of the signal Sub1_G2.

The signal Sub1_G3# is a corrected value of the signal Sub1_G3.

The signal Sub1_G4# is a corrected value of the signal Sub1_G4.

$\alpha$ is a constant that is determined according to the ratio of the signal Sub2_G1 to the signal Sub1_G4. Note that the signals of the second subframe Sub2 and the signals of the first subframe Sub1 are interchangeable in equation (1). That is, the range image pickup device 1B may perform the level adjustment by bringing the signal level in the second subframe Sub2 to the signal level in the first subframe Sub1.

Step S17B: If the signal Sub1_G4 does not include a reflected light component, the range imaging apparatus 1B does not perform level adjustment.

Step S18B: The range imaging apparatus 1B calculates the distance. If the level adjustment is performed in step S14B, the range imaging apparatus 1B calculates the distance using the level-adjusted signal value.

In the case the level adjustment is performed, the range imaging apparatus 1B calculates the distance using, for example, equation (2A). Equation (2A) shows an example equation for calculating the distance when the signals Sub1_G3 and Sub1_G4 contain reflected light components.

$$d = c0 \times (1/2 \times Td)$$

$$Td = To \times \{1 - (A - C)/(Abs(A - C) + Abs(B - D))\} + d\_offset \dots (2A)$$

In equation (2A), the distance d is the result of the calculation and is the distance to the subject OB.

The velocity c0 is the speed of light.

The time Td is the time (delay time) it took for the reflected light RL to be received after the light pulse is emitted.

The irradiation time To is the time for which the light pulse is emitted.

The signal value A is the signal value of signal Sub1 _G3#.

The signal value B is the signal value of signal Sub1 _G4#.

The signal value C is the signal value of signal Sub2_G2#.

The signal value D is the signal value of signal Sub2_G3#.

The distance d_offset is a distance offset.

The distance offset is the amount of distance offset generated because the timing of the gate used in the distance calculation, that is, the timing at which the gate transistor that is turned on first among the four gate transistors used in the distance calculation is turned on is later than the timing at which the light pulse PO is emitted.

For example, in this embodiment, the opening/closing timing of the gate transistor G1 in the first subframe is controlled to be the same as the emission timing of the light pulse PO. In this case, when charge corresponding to the reflected light RL is distributed and received by the gate transistors G1 to G4 in the first subframe, the distance d_offset is set to zero.

On the other hand, in the other cases, that is, when the gate transistor that is turned on first among the four gate transistors used in the distance calculation is turned on after the emission timing of the light pulse PO, the distance d_offset is set to a distance based on the timing at which the reflected light is received.

Note that equation (2A) is applied when, among the four signals used in distance calculation, two of three consecutive gate transistors including the gate transistor that is turned on first receive the reflected light RL. For example, in a case where the signals Sub1 _G3, Sub1_G4, Sub2_G2, and Sub2_G3 are used in distance calculation, if charge corresponding to the reflected light RL is distributed and stored into the signals Sub1 _G3 and Sub1 _G4, or signals Sub1 _G4 and Sub2_G2, equation (2A) is applied.

On the other hand, the following equation (2B) is applied when, among the four signals used in distance calculation, two of three consecutive gate transistors including the gate transistor that is turned on last receive the reflected light RL. For example, in a case where the signals Sub1_G3, Sub1_G4, Sub2_G2, and Sub2_G3 are used in distance calculation, if charge corresponding to the reflected light RL is distributed to the signals Sub1_G4 and Sub2_G2, or signals Sub2_G2 and Sub2_G3, equation (2B) is applied.

$$d = c0 \times (1/2 \times Td)$$

$$Td = To \times \{2 - (B - D)/(Abs(A - C) + Abs(B - D))\} + d\_offset \dots (2B)$$

In equation (2B), the distance d, velocity c0, time Td, irradiation time To, and signal values A to D are the same as those in equation (2A).

Alternatively, the range imaging apparatus 1B calculates the distance using, for example, equation (3). Equation (3) shows an example equation for calculating the distance when the signals Sub1_G4 and Sub2_G2 contain reflected light components.

$$d = c0 \times (1/2 \times Td)$$

$$Td = To \times \{1 - (A - C)/(Abs(A - C) + Abs(B - D))\} + d\_offset \dots (3)$$

In equation (3), the distance d is the result of the calculation and is the distance to the subject OB.

The velocity c0 is the speed of light.

The time Td is the time (delay time) it took for the reflected light RL to be received after the light pulse is emitted.

The irradiation time To is the time for which the light pulse is emitted.

The signal value A is the signal value of signal Sub1_G4#.

The signal value B is the signal value of signal Sub2_G2#.

The signal value C is the signal value of signal Sub2_G3#.

The signal value D is the signal value of signal Sub2_G4#.

The distance d_offset is a distance offset.

If the level adjustment is not performed, in step S16B, the range imaging apparatus 1B calculates the distance using the signal value that has not been level-adjusted.

If the level adjustment is not performed, the range imaging apparatus 1B calculates the distance using, for example, equation (4). Equation (4) shows an example equation for calculating the distance when the signals Sub1_G1 and Sub1_G2 contain reflected light components.

$$d = c0 \times (1/2 \times Td)$$

$$Td = To \times \{1 - (A - C)/(Abs(A - C) + Abs(B - D))\} \ ... \ (4)$$

In equation (4), the distance d is the result of the calculation and is the distance to the subject OB.

The velocity c0 is the speed of light.

The time Td is the time (delay time) it took for the reflected light RL to be received after the light pulse is emitted.

The irradiation time To is the time for which the light pulse is emitted.

The signal value A is the signal value of signal Sub1_G1#.

The signal value B is the signal value of signal Sub1_G2#.

The signal value C is the signal value of signal Sub1_G3#.

The signal value D is the signal value of signal Sub1_G4#.

As described above, in the range imaging apparatus 1B of this embodiment, a plurality of subframes including the first and second subframes are provided for each frame. The range image processing unit 4B stores charges in the charge storages of the pixel in each of the subframes in sequence, the first subframe and then the second subframe. The range image processing unit 4B controls the storage timing so that the symbols Tr1 and Tr2 in Fig. 21 are the same timing with respect to the irradiation time To in Fig. 21. In other words, the range image processing unit 4B controls the storage timing so that the last storage timing, which is the latest storage timing in the first subframe, and the first storage timing, which is the earliest storage timing in the second subframe, are the same timing relative to the timing at which the light pulse PO is emitted.

This allows the range imaging apparatus 1B of this embodiment to store charges in a charge storage CS in the first subframe and a charge storage CS in the second subframe at the same timing with respect to the emission timing of the light pulse PO. This makes it possible to perform level adjustment based on signal values corresponding to the amounts of charge stored in charge storages CS into which charges were stored at the same timing. Therefore, the distance can be calculated even if the integration count in each subframe is changed.

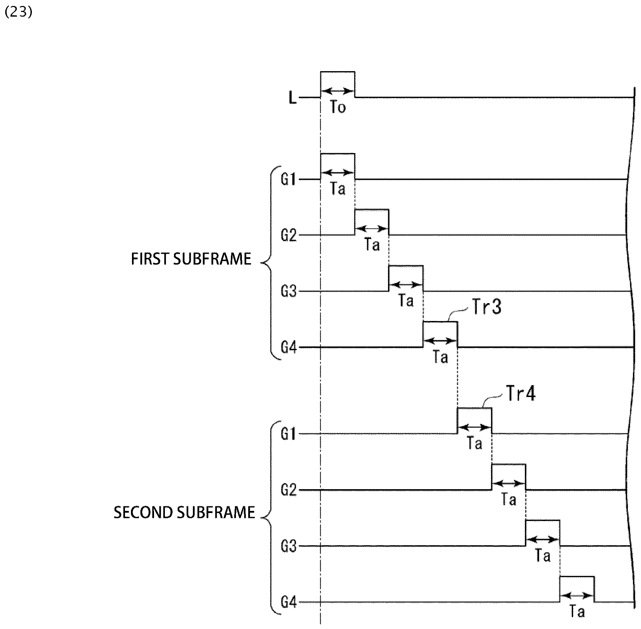

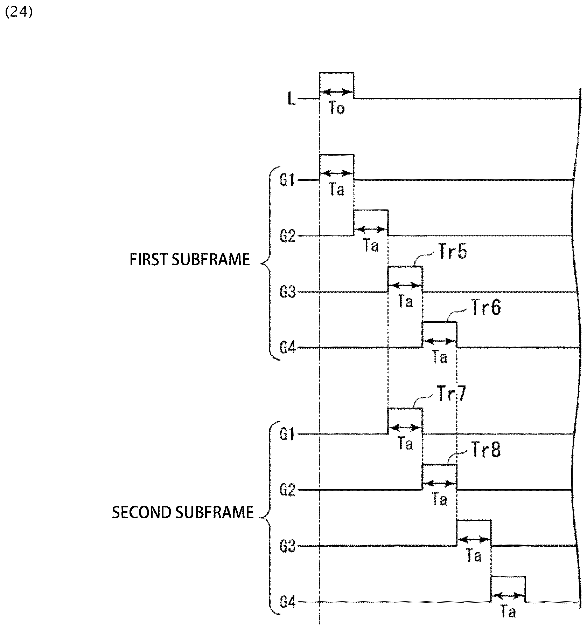

The effects of the present embodiment will be described with reference to Figs. 23 and 24. Figs. 23 and 24 are graphs illustrating the advantageous effects of the embodiment.

Fig. 23 shows, as a comparative example, a timing chart in which the pixel is driven at timings different from those in this embodiment. As with Fig. 21, Fig. 23 shows the timings at which the readout gate transistors G1 to G4 are turned on or off in each of the first and second subframes with respect to the timing at which the light pulse PO is emitted.

In the comparative example shown in Fig. 23, the opening/closing timing (Tr4) of the gate transistor G1 in the second subframe arrives following the opening/closing timing (Tr3) of the gate transistor G4 in the first subframe. That is, the opening/closing timing (Tr3) of the gate transistor G4 in the first subframe and the opening/closing timing (Tr4) of the gate transistor G1 in the second subframe are not the same with respect to the timing at which the light pulse PO is emitted.

Such a comparative example cannot store charges in a charge storage CS in the first subframe and a charge storage CS in the second subframe at the same timing with respect to the emission timing of the light pulse PO. This makes it difficult to perform level adjustment when the first and second subframes have different storage counts. Therefore, it is difficult to calculate the distance if the integration count in each subframe is changed.

Fig. 24 shows a comparative example in which the pixel is driven at timings different from those in Fig. 23. As with Fig. 21, Fig. 24 shows the timings at which the readout gate transistors G1 to G4 are turned on or off in each of the first and second subframes with respect to the timing at which the light pulse PO is emitted.

In the comparative example shown in Fig. 24, the opening/closing timing (Tr5) of the gate transistor G3 and the opening/closing timing (Tr6) of the gate transistor G4 in the first subframe, and the opening/closing timing (Tr7) of the gate transistor G1 and the opening/closing timing (Tr8) of the gate transistor G2 in the second subframe are respectively the same with respect to the timing at which the light pulse PO is emitted. That is, the storage timings of two gate transistors G in the first subframe overlap the storage timings of two gate transistors G in the second subframe.

Such a comparative example can store charges at the same timing in the first and second subframes with respect to the emission timing of the light pulse PO. This makes it possible to calculate the distance without performing level adjustment as in the embodiment even if the integration count in each subframe is different. However, it is necessary that the storage timings of two gate transistors G in the first subframe overlap the storage timings of two gate transistors G in the second subframe. This reduces the measurable range.

In contrast to these comparative examples, control is performed so that only one gate transistor G in each of the first and second subframes have the same storage timing. That is, the gate transistor G4 in the first subframe and the gate transistor G1 in the second subframe are controlled to have the same storage timing. By doing so, the number of gate transistors G having overlapping storage timings is minimized. This makes it possible to calculate the distance without reducing the measurable range and even if the integration count differs in each subframe.

In addition, in the range imaging apparatus 1B of this embodiment, the range image processing unit 4B performs level adjustment, and calculates the distance using the level-adjusted signal value. The level adjustment is a process of multiplying signal values corresponding to the amounts of charge stored in the charge storages CS in the first or second subframe by a constant so that first and second signal values become the same. The first signal value is a signal value corresponding to the amount of charge stored in the charge storage CS4 (last charge storage), which is the charge storage CS into which charge was stored at the last storage timing in the first subframe. The second signal value is a signal value corresponding to the amount of charge stored in the charge storage CS1 (first charge storage), which is the charge storage CS into which charge was stored at the first storage timing in the second subframe. This allows the range imaging apparatus 1B of the embodiment to calculate the distance using level-adjusted signal values. Therefore, even if the reflected light RL is received across the first and second subframes, the correct distance can be calculated.

In the range imaging apparatus 1B of the embodiment, the range image processing unit 4B determines whether a charge corresponding to the reflected light RL (reflected light of the light pulse) is stored in the first signal value. The range image processing unit 4B performs level adjustment if a charge corresponding to the reflected light is stored in the last charge storage. This allows the range imaging apparatus 1B of the embodiment to perform level adjustment if a reflected light component is stored in the charge storage CS4 (last charge storage) in the first subframe. This makes it possible to not perform level adjustment if a reflected light component is not stored in the charge storage CS4 (last charge storage) in the first subframe. Since level adjustment is not performed if no reflected light component is stored, in other words, if only the external light component is stored, it is possible to prevent performing level adjustment using signal values that are prone to fluctuation for reasons such as noise contamination. As a result, the distance can be accurately calculated.

Note that although the description is limited to the combination of subframes 1 and 2 in this embodiment, the present invention is not limited to this and can be applied to the combination of subframes n and (n+1), where n is an integer. For example, if subframes 3 and 4 follow subframes 1 and 2, it is possible to use at least one combination of subframes 1 and 2, subframes 2 and 3, and subframes 3 and 4, and drive the pixel in the same manner as in this embodiment.

All or part of the range imaging apparatus 1B and the range image processing unit 4B according to the above-described embodiment may be achieved by a computer. In this case, a program that achieves this function may be recorded on a computer-readable recording medium so that a computer system can read and run the program recorded on the recording medium. The "computer system" referred to herein includes an operating system (OS) and hardware such as peripheral devices. The "computer-readable recording medium" refers to a storage device such as a portable medium, e.g., a flexible disk, a magneto-optical disk, a ROM, a CD-ROM or the like, or a hard disk incorporated in the computer system. The "computer-readable recording medium" may include a medium that dynamically retains a program for a short period of time, such as a communication line that transmits a program through a network such as the internet or a telecommunication line such as a telephone line, or a medium that retains the program for a given period of time in that case, such as a volatile memory of a computer system that serves as a server or a client. The above programs may achieve part of the functions described above, or may achieve the functions in combination with programs already recorded in a computer system, or may achieve the functions by using a programmable logic device, such as an FPGA.

The embodiment of the present invention has been specifically described so far referring to the drawings. However, the specific configurations should not be limited to the embodiment but may include designs within the scope not departing from the spirit of the present invention.

[Industrial Applicability]

According to the present disclosure, it is possible to identify a subframe in which a charge corresponding to the reflected light RL was stored during sub-frame operation.

[Reference Signs List]

1, 1A, 1B ... Range imaging apparatus
2, 2A, 2B ... Light source unit
3, 3A, 3B ... Light receiving unit
32, 32A, 32B ... Range image sensor
321, 321A, 321B ... Pixel
323, 323A, 323B ... Vertical scanning circuit
4, 4A, 4B ... Range image processing unit
41, 41A, 41B ... Timing control unit
42, 42A, 42B ... Range computing unit
43, 43A, 43B ... Measurement control unit
CS ... Charge storage
PO ... Light pulse

**Claims**

1. A range imaging apparatus comprising:

   a light source unit that emits a light pulse to a measurement space;
   a light receiving unit including

      a pixel having
      a photoelectric conversion device that generates charge corresponding to incident light and
      a plurality of charge storages that store the charge, and
      a pixel driver circuit that distributes and stores the charge into the charge storages at a certain storage timing synchronized with an emission timing at which the light pulse is emitted; and

   a range image processing unit that calculates a distance to a subject in the measurement space based on amounts of charge stored in the charge storages,
   **characterized in that**
   a plurality of subframes are provided per frame, and
   the range image processing unit
   stores the charge by controlling the storage timing so that the storage timing relative to the emission timing is relatively different in each of the plurality of subframes, and
   selects a subframe for calculating the distance from the plurality of subframes based on the amounts of charge stored per unit integration count in each of the plurality of subframes.

2. The range imaging apparatus according to claim 1, **characterized in that**

   the range image processing unit
   calculates a first indicator corresponding to a magnitude of a reflected light component by using storage signals corresponding to the amounts of charge stored in each of the plurality of subframes, and
   calculates a second indicator by dividing the first indicator by the integration count for each of the plurality of subframes, and
   selects a subframe from the plurality of subframes whose second indicator is the largest as a subframe for calculating the distance.

3. The range imaging apparatus according to claim 2, **characterized in that** the range image processing unit calculates the first indicator by using a signal obtained by subtracting an external light signal corresponding to an external light component from the storage signals.

4. The range imaging apparatus according to claim 2 or 3, **characterized in that** the range image processing unit excludes a subframe whose first indicator is smaller than a threshold from candidates for the subframe for calculating the distance.

5. A range imaging method carried out by a range imaging apparatus comprising:

   a light source unit that emits a light pulse to a measurement space;

a light receiving unit including a pixel having a photoelectric conversion device that generates charge corresponding to incident light and a plurality of charge storages that store the charge, and a pixel driver circuit that distributes and stores the charge into the charge storages at a certain storage timing synchronized with an emission timing at which the light pulse is emitted; and

a range image processing unit that calculates a distance to a subject in the measurement space based on amounts of charge stored in the charge storages,

**characterized in that**

a plurality of subframes are provided per frame, and

the range image processing unit

stores the charge by controlling the storage timing so that the storage timing relative to the emission timing is relatively different in each of the plurality of subframes, and

selects a subframe for calculating the distance from the plurality of subframes based on the amounts of charge stored per unit integration count in each of the plurality of subframes.

6. The range imaging apparatus according to claim 1, **characterized in that** the plurality of subframes include first and second subframes, and

the range image processing unit stores the charge in the charge storages of the pixel in each of the subframes in sequence, the first subframe and then the second subframe, and controls the storage timing so that a last storage timing, which is a latest timing at which the charge is stored in the charge storage of the pixel in the first subframe, and a first storage timing, which is an earliest timing at which the charge is stored in the charge storage of the pixel in the second subframe, are the same timing relative to the timing at which the light pulse is emitted.

7. The range imaging apparatus according to claim 6, **characterized in that** the range image processing unit performs level adjustment by multiplying signal values corresponding to the amounts of charge stored in the charge storages in the first or second subframe by a constant so that a first signal value corresponding to an amount of charge stored in a last charge storage, which is the charge storage in which the charge is stored at the last storage timing, and a second signal value corresponding to an amount of charge stored in an first charge storage, which is the charge storage in which the charge is stored at the first storage timing, are the same, and calculates the distance using the level-adjusted signal values.

8. The range imaging apparatus according to claim 7, **characterized in that** the range image processing unit determines whether the charge corresponding to reflected light of the light pulse is stored in the last charge storage, and performs the level adjustment if the charge corresponding to the reflected light is stored in the last charge storage.

9. The range imaging method according to claim 5, **characterized in that** the plurality of subframes include first and second subframes, and

the range image processing unit stores the charge in the charge storages of the pixel in each of the subframes in sequence, the first subframe and then the second subframe, and controls the storage timing so that a last storage timing, which is a latest timing at which the charge is stored in the charge storage of the pixel in the first subframe, and a first storage timing, which is an earliest timing at which the charge is stored in the charge storage of the pixel in the second subframe, are the same timing relative to the timing at which the light pulse is emitted.

10. A range imaging apparatus comprising:

a light source unit that emits a light pulse to a measurement space;

a light receiving unit including a pixel having a photoelectric conversion device that generates charge corresponding to incident light and a plurality of charge storages that store the charge, and a pixel driver circuit that distributes and stores the charge into the charge storages at a certain storage timing synchronized with an emission timing at which the light pulse is emitted; and

a range image processing unit that calculates a distance to a subject in the measurement space based on amounts of charge stored in the charge storages,

**characterized in that**

a plurality of subframes are provided per frame, and

the range image processing unit

calculates an indicator of a degree of variation of an external light signal corresponding to an external light component stored in the charge storages in each of the plurality of subframes based on storage signals corresponding to the amounts of charge stored in the charge storages in each of the plurality of subframes, and

selects a subframe for calculating the distance from the plurality of subframes by using the storage signals and the indicator for each of the plurality of subframes.

11. The range imaging apparatus according to claim 10, **characterized in that** the range image processing unit

calculates, as the indicator, a threshold based on variance of the external light component, and
selects a subframe from the plurality of subframes that has an external light-subtracted signal greater than the
threshold as the subframe for calculating the distance, the external light-subtracted signal being a signal obtained
by subtracting the external light signal from the storage signal.

12. The range imaging apparatus according to claim 10, **characterized in that** the range image processing unit

calculates, as the indicator, a threshold based on noise that is a square root of variance of the external light
component, and
selects a subframe from the plurality of subframes that has an external light-subtracted signal greater than the
threshold as the subframe for calculating the distance, the external light-subtracted signal being a signal obtained
by subtracting the external light signal from the storage signal.

13. The range imaging apparatus according to claim 11 or 12, **characterized in that** the range image processing unit
reduces the threshold if there is no subframe whose external light-subtracted signal is greater than the threshold
among the plurality of subframes.

14. The range imaging apparatus according to claim 11 or 12, **characterized in that** the range image processing unit
increases the threshold if there are two or more subframes whose external light-subtracted signal is greater than the
threshold among the plurality of subframes.

15. The range imaging apparatus according to claim 11 or 12, **characterized in that** the range image processing unit does
not select a subframe for calculating the distance if there is no subframe whose external light-subtracted signal is
greater than the threshold, or if there are two or more subframes whose external light-subtracted signal is greater than
the threshold among the plurality of subframes.

16. A range imaging method carried out by a range imaging apparatus including:

a light source unit that emits a light pulse to a measurement space; a light receiving unit including a pixel having a
photoelectric conversion device that generates charge corresponding to incident light and a plurality of charge
storages that store the charge, and a pixel driver circuit that distributes and stores the charge into the charge
storages at a certain storage timing synchronized with an emission timing at which the light pulse is emitted; and a
range image processing unit that calculates a distance to a subject in the measurement space based on amounts
of charge stored in the charge storages,
**characterized in that**
a plurality of subframes are provided per frame, and
the range image processing unit
calculates an indicator of a degree of variation of an external light signal corresponding to an external light
component stored in the charge storages in each of the plurality of subframes based on storage signals
corresponding to the amounts of charge stored in the charge storages in each of the plurality of subframes, and
selects a subframe for calculating the distance from the plurality of subframes by using the storage signals and the
indicator for each of the plurality of subframes.

17. The range imaging apparatus according to claim 10, **characterized in that** the plurality of subframes include first and
second subframes, and
the range image processing unit stores the charge in the charge storages of the pixel in each of the subframes in
sequence, the first subframe and then the second subframe, and controls the storage timing so that a last storage
timing, which is a latest timing at which the charge is stored in the charge storage of the pixel in the first subframe, and a
first storage timing, which is an earliest timing at which the charge is stored in the charge storage of the pixel in the
second subframe, are the same timing relative to the timing at which the light pulse is emitted.

18. The range imaging apparatus according to claim 17, **characterized in that** the range image processing unit performs
level adjustment by multiplying signal values corresponding to the amounts of charge stored in the charge storages in
the first or second subframe by a constant so that a first signal value corresponding to an amount of charge stored in a last charge storage, which is the charge storage in which the charge is stored at the last storage timing, and a second signal value corresponding to an amount of charge stored in an first charge storage, which is the charge storage in which the charge is stored at the first storage timing, are the same, and calculates the distance using the level-adjusted signal values.

**19.** The range imaging apparatus according to claim 18, **characterized in that** the range image processing unit determines whether the charge corresponding to reflected light of the light pulse is stored in the last charge storage, and performs the level adjustment if the charge corresponding to the reflected light is stored in the last charge storage.

**20.** The range imaging method according to claim 16, **characterized in that** the plurality of subframes include first and second subframes, and
the range image processing unit stores the charge in the charge storages of the pixel in each of the subframes in sequence, the first subframe and then the second subframe, and controls the storage timing so that a last storage timing, which is a latest timing at which the charge is stored in the charge storage of the pixel in the first subframe, and a first storage timing, which is an earliest timing at which the charge is stored in the charge storage of the pixel in the second subframe, are the same timing relative to the timing at which the light pulse is emitted.

(1)

(2)

323

32

VERTICAL SCANNING CIRCUIT

320

321

CONTROL CIRCUIT

PIXEL SIGNAL PROCESSING CIRCUIT

325

HORIZONTAL SCANNING CIRCUIT

324

322

(3)

(5)

```
        ┌─────────┐
        │  START  │
        └─────────┘
             │
             ▼
┌─────────────────────────────────────────┐
│ STORE CHARGE IN EACH SUBFRAME AND READ OUT│── S10
│            STORAGE SIGNAL                 │
└─────────────────────────────────────────┘
             │
             ▼
┌─────────────────────────────────────────┐
│  CALCULATE DISTANCE FOR EACH SUBFRAME BASED│
│  ON STORAGE SIGNAL FOR EACH SUBFRAME      │── S11
│  (EXTERNAL LIGHT-SUBTRACTED SIGNAL IS     │
│  CALCULATED DURING DISTANCE CALCULATION)  │
└─────────────────────────────────────────┘
             │
             ▼
┌─────────────────────────────────────────┐
│  DIVIDE EXTERNAL LIGHT-SUBTRACTED SIGNAL OF EACH│
│  SUBFRAME BY INTEGRATION COUNT OF EACH SUBFRAME │── S12
│  (OBTAIN AMOUNT OF SIGNAL PER INTEGRATION)│
└─────────────────────────────────────────┘
             │
             ▼
┌─────────────────────────────────────────┐
│  COMPARE SIGNALS PER INTEGRATION OF SUBFRAMES TO│── S13
│  SELECT SUBFRAME WITH LARGEST SIGNAL      │
└─────────────────────────────────────────┘
             │
             ▼
┌─────────────────────────────────────────┐
│  USE DISTANCE OF SELECTED SUBFRAME AS DISTANCE OF│── S14
│            ONE COMBINED FRAME             │
└─────────────────────────────────────────┘
             │
             ▼
        ┌─────────┐
        │   END   │
        └─────────┘
```

(6)

```
        ┌─────────┐
        │  START  │
        └─────────┘
             │
             ▼
┌─────────────────────────────────────────┐
│ STORE CHARGE IN EACH SUBFRAME AND READ OUT│── S20
│            STORAGE SIGNAL                 │
└─────────────────────────────────────────┘
             │
             ▼
┌─────────────────────────────────────────┐
│  SUBTRACT EXTERNAL LIGHT COMPONENT FROM   │── S21
│     STORAGE SIGNAL OF EACH SUBFRAME       │
└─────────────────────────────────────────┘
             │
             ▼
┌─────────────────────────────────────────┐
│  DIVIDE EXTERNAL LIGHT-SUBTRACTED SIGNAL OF EACH│── S22
│  SUBFRAME BY INTEGRATION COUNT OF EACH SUBFRAME │
│  (OBTAIN AMOUNT OF SIGNAL PER INTEGRATION)│
└─────────────────────────────────────────┘
             │
             ▼
┌─────────────────────────────────────────┐
│  COMPARE SIGNAL AMOUNTS PER INTEGRATION OF│── S23
│ SUBFRAMES TO SELECT SUBFRAME WITH LARGEST SIGNAL│
└─────────────────────────────────────────┘
             │
             ▼
┌─────────────────────────────────────────┐
│  CALCULATE DISTANCE OF ONE COMBINED FRAME BASED│── S24
│   ON STORAGE SIGNAL OF SELECTED SUBFRAME  │
└─────────────────────────────────────────┘
             │
             ▼
        ┌─────────┐
        │   END   │
        └─────────┘
```

(7)

```
                    ┌─────────────┐
                    │    START    │
                    └──────┬──────┘
                           ▼
      ┌────────────────────────────────────────────────┐
      │  STORE CHARGE IN EACH SUBFRAME AND READ OUT     │──  S30
      │  STORAGE SIGNAL                                 │
      └────────────────────────┬───────────────────────┘
                               ▼
      ┌────────────────────────────────────────────────┐
      │  SUBTRACT EXTERNAL LIGHT COMPONENT FROM         │──  S31
      │  STORAGE SIGNAL OF EACH SUBFRAME                │
      └────────────────────────┬───────────────────────┘
                               ▼
      ┌────────────────────────────────────────────────┐
      │  SET AMOUNT OF SIGNAL PER INTEGRATION OF SUBFRAME│── S32
      │  HAVING EXTERNAL LIGHT-SUBTRACTED SIGNAL SMALLER │
      │  THAN THRESHOLD IR_THR                           │
      └────────────────────────┬───────────────────────┘
                               ▼
      ┌────────────────────────────────────────────────┐
      │  DIVIDE EXTERNAL LIGHT-SUBTRACTED SIGNAL OF EACH │── S33
      │  SUBFRAME BY INTEGRATION COUNT OF EACH SUBFRAME  │
      │  (OBTAIN AMOUNT OF SIGNAL PER INTEGRATION)       │
      └────────────────────────┬───────────────────────┘
                               ▼
      ┌────────────────────────────────────────────────┐
      │  COMPARE SIGNAL AMOUNTS PER INTEGRATION OF       │── S34
      │  SUBFRAMES TO SELECT SUBFRAME WITH LARGEST SIGNAL│
      └────────────────────────┬───────────────────────┘
                               ▼
      ┌────────────────────────────────────────────────┐
      │  CALCULATE DISTANCE OF ONE COMBINED FRAME BASED ON│── S35
      │  STORAGE SIGNAL OF SELECTED SUBFRAME             │
      └────────────────────────┬───────────────────────┘
                               ▼
                    ┌─────────────┐
                    │     END     │
                    └─────────────┘
```

(8)

(9)

(10)

EP 4 509 871 A1

ONE FRAME

| sub1 | sub2 | sub(M−1) | subM |
|---|---|---|---|

| UT | ··· | UT | RD | UT | ··· | UT | RD | UT | ··· | UT | RD | UT | ··· | UT | RD |

integ_sub1    integ_sub2    integ_sub(M−1)    integ_subM

EP 4 509 871 A1

EP 4 509 871 A1

GK_Sub1 ≠ GK_Sub2
GK_Sub1 ≠ GK_Sub3
GK_Sub2 ≠ GK_Sub3

RLQ

REFLECTED LIGHT

G1  Tap1  GK_Sub1

G2  Tap2  GK_Sub1

Sub1

G3  Tap3  GK_Sub1

G4  Tap4  GK_Sub1

G1  Tap5  GK_Sub2

G2  Tap6  GK_Sub2

Sub2

G3  Tap7  GK_Sub2

G4  Tap8  GK_Sub2

Tap9  GK_Sub3

G1

G2  Tap10  GK_Sub3

RLQ1

Sub3

Tap11  GK_Sub3

G3

RLQ2

Tap12

G4

GK_Sub3

(12C)

(13A)

(13B)

EP 4 509 871 A1

(14A)

Sub1
STORAGE SIGNAL Q2

DETERMINE THRESHOLD

Q2_Sub1

GK_Sub1 ± α

SUBTRACT EXTERNAL LIGHT SIGNAL

th1

Q2_Sub1

THRESHOLDING

th1

$J1 = \pm\sqrt{2}\,\alpha$

J1<th1, or J1=th1 → DO NOT USE SIGNAL IN RANGE COMPUTING

J1>th1 → USE SIGNAL IN RANGE COMPUTING

52

EP 4 509 871 A1

Sub2
STORAGE SIGNAL Q2

DETERMINE
THRESHOLD

SUBTRACT
EXTERNAL
LIGHT SIGNAL

THRESHOLDING

$J2 < th2$, or $J2 = th2$
→ DO NOT USE SIGNAL
IN RANGE COMPUTING

$J2 > th2$
→ USE SIGNAL IN RANGE
COMPUTING

$GK\_Sub2 \pm \beta$

Q2_Sub2

th2

Q2_Sub2

th2

$J2 = \pm \sqrt{2}\,\beta$

EP 4 509 871 A1

Sub3
STORAGE SIGNAL Q2

DETERMINE THRESHOLD → SUBTRACT EXTERNAL LIGHT SIGNAL → THRESHOLDING

$J3 < th3$, or $J3 = th3$
→ DO NOT USE SIGNAL IN RANGE COMPUTING

$J3 > th3$
→ USE SIGNAL IN RANGE COMPUTING

$GK\_Sub3 \pm \gamma$

Q2_Sub3

th3

Q2_Sub3

th3

$J3 = \pm\sqrt{2}\,\gamma + RLQ1$

RLQ1

(15)

START

STORE CHARGE IN EACH SUBFRAME AND
READ OUT STORAGE SIGNAL — S10A

CALCULATE THRESHOLD FOR EACH
SUBFRAME BASED ON STORAGE SIGNAL
OF EACH SUBFRAME — S11A

SUBTRACT EXTERNAL LIGHT
COMPONENT FROM STORAGE SIGNAL
OF EACH SUBFRAME — S12A

COMPARE EXTERNAL LIGHT-SUBTRACTED
SIGNAL OF EACH SUBFRAME WTIH
THRESHOLD OF EACH SUBFRAME — S13A

S14A
HOW MANY SUBFRAMES HAVE
EXTERNAL LIGHT-SUBTRACTED
SIGNAL GREATER THAN
THRESHOLD?

0 (ZERO)          TWO OR MORE

ONE          S15A          S18A

S17A

REDUCE
THRESHOLD

SELECT SUBFRAME THAT HAS EXTERNAL
LIGHT-SUBTRACTED SIGNAL GREATER
THAN THRESHOLD

INCREASE
THRESHOLD

USE DISTANCE OF SELECTED SUBFRAME
AS DISTANCE OF ONE COMBINED FRAME — S16A

END

EP 4 509 871 A1

(16)

START

STORE CHARGE IN EACH SUBFRAME AND READ OUT STORAGE SIGNAL — S110

CALCULATE THRESHOLD FOR EACH SUBFRAME BASED ON STORAGE SIGNAL OF EACH SUBFRAME — S111

SUBTRACT EXTERNAL LIGHT COMPONENT FROM STORAGE SIGNAL OF EACH SUBFRAME — S112

COMPARE EXTERNAL LIGHT-SUBTRACTED SIGNAL OF EACH SUBFRAME WTIH THRESHOLD OF EACH SUBFRAME — S113

S114
IS THERE ONE SUBFRAME HAVING EXTERNAL LIGHT-SUBTRACTED SIGNAL GREATER THAN THRESHOLD?

NO

YES

SELECT SUBFRAME THAT HAS EXTERNAL LIGHT-SUBTRACTED SIGNAL GREATER THAN THRESHOLD — S115

DO NOT CALCULATE DISTANCE — S117

USE DISTANCE OF SELECTED SUBFRAME AS DISTANCE OF ONE COMBINED FRAME — S116

END

(17)

(18)

323

32

VERTICAL SCANNING CIRCUIT

320

321

CONTROL CIRCUIT

322

PIXEL SIGNAL PROCESSING CIRCUIT — 325

HORIZONTAL SCANNING CIRCUIT — 324

(19)

ONE FRAME

| FIRST SUBFRAME STORAGE PERIOD | FIRST SUBFRAME READOUT PERIOD | SECOND SUBFRAME STORAGE PERIOD | SECOND SUBFRAME READOUT PERIOD |

| FIRST PERIOD | FIRST PERIOD | · · · | FIRST PERIOD | | SECOND PERIOD | SECOND PERIOD | · · · | SECOND PERIOD | |

L
To

G1
Ta

G2
Ta

G3
Ta

G4
Ta

GD
4Ta

L
To

3Ta

G1
Ta

G2
Ta

G3
Ta

G4
Ta

GD
4Ta

(21)

(22)

```
                    ┌─────────┐
                    │  START  │
                    └────┬────┘
                         ▼
        ┌────────────────────────────────┐
        │  DRIVE PIXEL IN FIRST SUBFRAME  │── S10B
        └────────────────┬───────────────┘
                         ▼
        ┌────────────────────────────────┐
        │  READ OUT SIGNAL (Sub1_G1-G4)   │── S11B
        └────────────────┬───────────────┘
                         ▼
        ┌────────────────────────────────┐
        │ DRIVE PIXEL IN SECOND SUBFRAME  │── S12B
        └────────────────┬───────────────┘
                         ▼
        ┌────────────────────────────────┐
        │  READ OUT SIGNAL (Sub2_G1-G4)   │── S13B
        └────────────────┬───────────────┘
                         ▼
        ┌────────────────────────────────┐
        │   IDENTIFY SIGNAL CONTAINING    │── S14B
        │   REFLECTED LIGHT COMPONENT     │
        └────────────────┬───────────────┘
                         ▼                              S15B
                  DOES Sub1_G4 CONTAIN
                  REFLECTED LIGHT           ──── NO
                  COMPONENT?
                  │ YES        S16B                            S17B
                  ▼                              ▼
        ┌──────────────────────────┐   ┌──────────────────────────┐
        │ PERFORM LEVEL ADJUSTMENT  │   │   DO NOT PERFORM LEVEL    │
        └────────────┬─────────────┘   │       ADJUSTMENT          │
                     │                  └────────────┬─────────────┘
                     ◄───────────────────────────────┘
                     ▼
        ┌──────────────────────────┐
        │    CALCULATE DISTANCE     │── S18B
        └────────────┬─────────────┘
                     ▼
                ┌─────────┐
                │   END   │
                └─────────┘
```

(23)

FIRST SUBFRAME { G1, G2, G3, G4

SECOND SUBFRAME { G1, G2, G3, G4

L — To

Ta

Tr3

Tr4

(24)

L ⟷ To

FIRST SUBFRAME

G1 ⟷ Ta

G2 ⟷ Ta

G3 ⟷ Ta — Tr5

G4 ⟷ Ta — Tr6

SECOND SUBFRAME

G1 ⟷ Ta — Tr7

G2 ⟷ Ta — Tr8

G3 ⟷ Ta

G4 ⟷ Ta

# INTERNATIONAL SEARCH REPORT

| | International application No. |
|---|---|
| | **PCT/JP2023/015033** |

**A. CLASSIFICATION OF SUBJECT MATTER**

*G01S 7/4863*(2020.01)i; *G01C 3/06*(2006.01)i; *G01S 7/483*(2006.01)i; *G01S 17/894*(2020.01)i
FI: G01S7/4863; G01C3/06 120Q; G01C3/06 140; G01S7/483; G01S17/894

According to International Patent Classification (IPC) or to both national classification and IPC

**B. FIELDS SEARCHED**

Minimum documentation searched (classification system followed by classification symbols)

G01S 7/48 - G01S 7/51; G01S 17/00 - G01S 17/95; G01C 3/06

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2010-032425 A (UNIV SHIZUOKA NAT UNIV CORP) 12 February 2010 (2010-02-12) paragraphs [0026]-[0051], fig. 1-11 | 1-6, 9-17, 20 |
| A | | 7-8, 18-19 |
| Y | WO 2020/196087 A1 (PANASONIC INTELLECTUAL PROPERTY MANAGEMENT CO., LTD.) 01 October 2020 (2020-10-01) paragraphs [0013]-[0029], [0039]-[0043], [0069]-[0080], fig. 1-3, 5, 12-14 | 10-17, 20 |
| A | | 1-9, 18-19 |
| Y | JP 2021-148745 A (RICOH CO LTD) 27 September 2021 (2021-09-27) paragraphs [0026]-[0121], fig. 1-11 | 1-6, 9 |
| A | | 7-8, 10-20 |
| A | JP 2014-163717 A (STANLEY ELECTRIC CO LTD) 08 September 2014 (2014-09-08) entire text, all drawings | 1-20 |
| A | JP 2017-190978 A (MURATA MANUFACTURING CO) 19 October 2017 (2017-10-19) entire text, all drawings | 1-20 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **06 June 2023** | **20 June 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

International application No.

**PCT/JP2023/015033**

### C. DOCUMENTS CONSIDERED TO BE RELEVANT

| Category* | Citation of document, with indication, where appropriate, of the relevant passages | Relevant to claim No. |
|---|---|---|
| A | US 2013/0201167 A1 (SAMSUNG ELECTRONICS CO., LTD.) 08 August 2013 (2013-08-08) entire text, all drawings | 1-20 |
| A | US 2013/0208258 A1 (ROBERT BOSCH GMBH) 15 August 2013 (2013-08-15) entire text, all drawings | 1-20 |

Form PCT/ISA/210 (second sheet) (January 2015)

<table>
<tr><td>**INTERNATIONAL SEARCH REPORT**</td><td>International application No.<br>**PCT/JP2023/015033**</td></tr>
</table>

**Box No. III      Observations where unity of invention is lacking (Continuation of item 3 of first sheet)**

This International Searching Authority found multiple inventions in this international application, as follows:

(Invention 1) Claims 1-9
    Claims 1-9 have the special technical feature of "selecting a sub-frame for calculating the distance from the plurality of sub-frames on the basis of charge accumulated per number of times of unit integration of the plurality of sub-frames," and are thus classified as invention 1.

(Invention 2) Claims 10-20
    Claims 10-20 share, with claims 1-9 classified as invention 1, the common technical feature of comprising: a pixel that
- radiates a light pulse to a measurement space, and
- includes a photoelectric conversion element generating charge corresponding to incident light and a plurality of charge accumulation units accumulating the charge; and a pixel drive circuit that causes each of the charge accumulation units to allocate and accumulate the charge at a predetermined accumulation timing synchronized with a radiation timing of radiating the light pulse, wherein
- a distance to a subject present in the measurement space is calculated on the basis of an amount of the charge accumulated in each of the charge accumulation units, and
- one frame incudes a plurality of sub-frames. However, said technical feature does not make a contribution over the prior art in light of the disclosure of document 1 (JP 2010-032425 A), and thus cannot be said to be a special technical feature.
    There are no other same or corresponding special technical features between these inventions.
    Claims 10-20 are not dependent on claim 1. Claims 10-20 are not substantially identical to or similarly closely related to any of the claims classified as invention 1.
    Therefore, claims 10-20 cannot be classified as invention 1.
    Claims 10-20 have the special technical feature in which - an index indicating a variation degree of an external light signal corresponding to an external light component accumulated in the charge accumulation unit is calculated for each frame on the basis of the accumulated signal corresponding to an amount of the charge accumulated in the charge accumulation unit for each of the plurality of sub-frames, and - a sub-frame for calculating the distance is selected from the plurality of sub-frames by using the accumulated signal for each of the plurality of sub-frames and the index, and are thus classified as invention 2.

1. ☐    As all required additional search fees were timely paid by the applicant, this international search report covers all searchable claims.

2. ☑    As all searchable claims could be searched without effort justifying additional fees, this Authority did not invite payment of additional fees.

3. ☐    As only some of the required additional search fees were timely paid by the applicant, this international search report covers only those claims for which fees were paid, specifically claims Nos.:

4. ☐    No required additional search fees were timely paid by the applicant. Consequently, this international search report is restricted to the invention first mentioned in the claims; it is covered by claims Nos.:

**Remark on Protest**      ☐    The additional search fees were accompanied by the applicant's protest and, where applicable, the payment of a protest fee.

☐    The additional search fees were accompanied by the applicant's protest but the applicable protest fee was not paid within the time limit specified in the invitation.

☐    No protest accompanied the payment of additional search fees.

Form PCT/ISA/210 (continuation of first sheet) (January 2015)

International application No.

**PCT/JP2023/015033**

| Patent document cited in search report | | | Publication date (day/month/year) | Patent family member(s) | | | Publication date (day/month/year) |
|---|---|---|---|---|---|---|---|
| JP | 2010-032425 | A | 12 February 2010 | US | 2011/0157354 | A1 | |
| | | | | paragraphs [0050]-[0075], fig. 1-11 | | | |
| | | | | WO | 2010/013779 | A1 | |
| | | | | EP | 2322953 | A1 | |
| | | | | KR | 10-2011-0044862 | A | |
| WO | 2020/196087 | A1 | 01 October 2020 | US | 2022/0011436 | A1 | |
| | | | | paragraphs [0045]-[0071], [0084]-[0109], [0135]-[0146], fig. 1-3, 5, 12-14 | | | |
| | | | | CN | 113631944 | A | |
| JP | 2021-148745 | A | 27 September 2021 | (Family: none) | | | |
| JP | 2014-163717 | A | 08 September 2014 | (Family: none) | | | |
| JP | 2017-190978 | A | 19 October 2017 | (Family: none) | | | |
| US | 2013/0201167 | A1 | 08 August 2013 | KR | 10-2013-0091553 | A | |
| US | 2013/0208258 | A1 | 15 August 2013 | WO | 2011/128131 | A1 | |
| | | | | DE | 102010003843 | A1 | |
| | | | | CN | 102844676 | A | |
| | | | | KR | 10-2013-0058670 | A | |

Form PCT/ISA/210 (patent family annex) (January 2015)

**REFERENCES CITED IN THE DESCRIPTION**

**Patent documents cited in the description**

- JP 2022066268 A
- JP 2022094578 A
- JP 2022116644 A
- JP 4235729 B
- WO 2019078366 A